(19) Europäisches Patentamt / European Patent Office / Office européen des brevets

(11) **EP 4 435 684 A1**

(12) **EUROPEAN PATENT APPLICATION**
published in accordance with Art. 153(4) EPC

(43) Date of publication:
**25.09.2024 Bulletin 2024/39**

(21) Application number: **22895186.9**

(22) Date of filing: **26.08.2022**

(51) International Patent Classification (IPC):
**G06Q 10/04** (2023.01)     **G06Q 10/08** (2024.01)

(52) Cooperative Patent Classification (CPC):
**G06Q 10/04; G06Q 10/08**

(86) International application number:
**PCT/JP2022/032283**

(87) International publication number:
**WO 2023/089898 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.11.2021 JP 2021186190**

(71) Applicant: **Nomura Research Institute, Ltd.**
**Chiyoda-ku**
**Tokyo 100-0004 (JP)**

(72) Inventors:
• **DOI, Ken**
 **Tokyo 100-0004 (JP)**
• **OHNO, Shinichiro**
 **Tokyo 100-0004 (JP)**
• **SUNAHASE, Takeru**
 **Tokyo 100-0004 (JP)**
• **WATANABE, Izumi**
 **Tokyo 100-0004 (JP)**

(74) Representative: **Hoffmann Eitle**
**Patent- und Rechtsanwälte PartmbB**
**Arabellastraße 30**
**81925 München (DE)**

(54) **DELIVERY PLAN ASSISTANCE DEVICE, DELIVERY PLAN ASSISTANCE METHOD, AND COMPUTER PROGRAM**

(57)     A delivery plan support system 16 includes a reception unit 22, a check unit 24, and an instruction unit 28. The reception unit 22 receives data indicating a plurality of constraints on a delivery plan in a case where a plurality of vehicles are divided to deliver packages from a delivery base to a plurality of nodes. The check unit 24 determines whether or not the plurality of constraints are consistent with respect to at least one of time and resource assignment. The instruction unit 28 inputs a delivery plan instruction based on the plurality of constraints to a delivery plan generator 30 in a case where it is determined that the plurality of constraints are consistent.

FIG. 2

INFORMATION PROCESSING SYSTEM 10

**Description**

[TECHNICAL FIELD]

The present disclosure relates to a data processing technology, and more particularly, to a delivery plan support system, a delivery plan support method, and a computer program.

[BACKGROUND ART]

Examples of a combination optimization problem for finding an appropriate solution while considering a huge combination of various elements in the real world include a traveling salesman problem. The traveling salesman problem is a problem that, in a case where a salesman who has departed from a certain city visits a plurality of other cities one by one and returns to the city from which he departed, an order of the cities to be visited is determined so that a distance traveled is minimized. Patent Literature 1 below proposes a system that presents a route from a departure point to an arrival point based on traffic conditions between points that changes depending on a time zone.

[RELATED-ART LITERATURE]

[Patent Literature]

Patent Literature 1: JP 2020-56730

[SUMMARY OF INVENTION]

[TECHNICAL PROBLEM]

In a delivery plan in a case where a plurality of moving bodies are divided to deliver packages from a delivery base to a plurality of nodes, it is necessary to find a solution so as to satisfy various constraints including travel time between nodes, business requirements, and the like. However, it is not easy to find a feasible solution (in other words, a solution satisfying a plurality of constraints) due to existence of various constraints. For example, even if it takes a lot of time to derive a solution for a delivery plan, the derived solution may violate any constraints, in other words, the derived solution may not be a feasible solution.
The present disclosure has been made based on the above-described problem recognition of the present inventor, and one object thereof is to provide a technique for detecting, in a case where there is no solution satisfying a plurality of constraints on a delivery plan, the fact before generation of the delivery plan.

[SOLUTION TO PROBLEM]

In order to solve the above problem, a delivery plan support system according to one aspect of the present disclosure includes: a reception unit structured to receive data indicating a plurality of constraints on a delivery plan in a case where a plurality of moving bodies are divided to deliver packages from a delivery base to a plurality of nodes; a determination unit structured to determine whether or not the plurality of constraints are consistent with respect to at least one of time and resource assignment; and an instruction unit structured to input a delivery plan instruction based on the plurality of constraints to a delivery plan generator in a case where the determination unit determines that the plurality of constraints are consistent.
Another aspect of the present disclosure is a delivery plan support method. In this method, a computer executes a step of receiving data indicating a plurality of constraints on a delivery plan in a case where a plurality of moving bodies are divided to deliver packages from a delivery base to a plurality of nodes, a step of determining whether or not the plurality of constraints are consistent with respect to at least one of time and resource assignment, and a step of inputting a delivery plan instruction based on the plurality of constraints to a delivery plan generator in a case where it is determined in the determining step that the plurality of constraints are consistent.
Note that, any combination of the above components and modifications of expressions of the present disclosure in devices, computer programs, recording media storing computer programs, and the like are also effective as aspects of the present disclosure.

[ADVANTAGEOUS EFFECTS OF INVENTION]

According to the present disclosure, in a case where there is no solution that satisfies a plurality of constraints on the delivery plan, it is possible to detect the fact before generation of the delivery plan.

[BRIEF DESCRIPTION OF DRAWINGS]

[Fig. 1] Fig. 1 is a diagram illustrating an example of a plurality of constraints on a delivery plan.
[Fig. 2] Fig. 2 is a diagram illustrating a configuration of an information processing system according to an example.
[Fig. 3] Fig. 3 is a diagram illustrating check items by a check unit.
[Fig. 4] Fig. 4 is a diagram for describing an inconsistency to be detected by a check of ID10.
[Fig. 5] Fig. 5 is a diagram illustrating an implementation example of a check algorithm of ID10.
[Fig. 6] Fig. 6 is a diagram for describing an inconsistency to be detected by a check of ID11.
[Fig. 7] Fig. 7 is a diagram for describing a check algorithm of ID11.
[Fig. 8] Fig. 8 is a diagram illustrating an implementation example of the check algorithm of ID11.
[Fig. 9] Fig. 9 is a diagram for describing an inconsistency to be detected by a check of ID12.
[Fig. 10] Fig. 10 is a diagram for describing a check algorithm of ID12.
[Fig. 11] Fig. 11 is a diagram illustrating an implementation example of the check algorithm of ID12.
[Fig. 12] Fig. 12 is a diagram for describing an inconsistency to be detected by a check of ID14.
[Fig. 13] Fig. 13 is a diagram for describing a check algorithm of ID14.
[Fig. 14] Fig. 14 is a diagram illustrating an implementation example of the check algorithm of ID14.
[Fig. 15] Fig. 15 is a diagram for describing an inconsistency to be detected by a check of ID15.
[Fig. 16] Fig. 16 is a diagram for describing a check algorithm of ID15.
[Fig. 17] Fig. 17 is a diagram for describing the check algorithm of ID15.
[Fig. 18] Fig. 18 is a diagram for describing the check algorithm of ID15.
[Fig. 19] Fig. 19 is a diagram illustrating an implementation example of the check algorithm of ID15.
[Fig. 20] Fig. 20 is a diagram for describing an inconsistency to be detected by a check of ID26.
[Fig. 21] Fig. 21 is a diagram for describing a check algorithm of ID26.
[Fig. 22] Fig. 22 is a diagram for describing the check algorithm of ID26.
[Fig. 23] Fig. 23 is a diagram illustrating an implementation example of the check algorithm of ID26.
[Fig. 24] Fig. 24 is a diagram for describing an inconsistency to be detected by a check of ID27.
[Fig. 25] Fig. 25 is a diagram for describing a check algorithm of ID27.
[Fig. 26] Fig. 26 is a diagram illustrating an implementation example of the check algorithm of ID27.
[Fig. 27] Fig. 27 is a diagram for describing an inconsistency to be detected by a check of ID28.
[Fig. 28] Fig. 28 is a diagram illustrating an implementation example of a check algorithm of ID28.
[Fig. 29] Fig. 29 is a diagram for describing an inconsistency to be detected by a check of ID29.
[Fig. 30] Fig. 30 is a diagram illustrating an implementation example of a check algorithm of ID29.
[Fig. 31] Fig. 31 is a diagram for describing an inconsistency to be detected by a check of ID30.
[Fig. 32] Fig. 32 is a diagram for describing a check algorithm of ID30.
[Fig. 33] Fig. 33 is a diagram for describing the check algorithm of ID30.
[Fig. 34] Fig. 34 is a diagram illustrating an implementation example of the check algorithm of ID30.
[Fig. 35] Fig. 35 is a diagram illustrating an implementation example of the check algorithm of ID30.
[Fig. 36] Fig. 36 is a diagram illustrating an implementation example of the check algorithm of ID30.
[Fig. 37] Fig. 37 is a diagram for describing an inconsistency to be detected by a check of ID31.
[Fig. 38] Fig. 38 is a diagram for describing a check algorithm of ID31.
[Fig. 39] Fig. 39 is a diagram for describing the check algorithm of ID31.
[Fig. 40] Fig. 40 is a diagram illustrating an implementation example of the check algorithm of ID31.
[Fig. 41] Fig. 41 is a diagram for describing an inconsistency to be detected by a check of ID32.
[Fig. 42] Fig. 42 is a diagram illustrating an implementation example of a check algorithm of ID32.
[Fig. 43] Fig. 43 is a diagram illustrating an implementation example of the check algorithm of ID32.
[Fig. 44] Fig. 44 is a diagram illustrating an implementation example of the check algorithm of ID32.
[Fig. 45] Fig. 45 is a diagram for describing the check algorithm of ID32.
[Fig. 46] Fig. 46 is a diagram illustrating an implementation example of the check algorithm of ID32.
[Fig. 47] Fig. 47 is a diagram illustrating an implementation example of the check algorithm of ID32.
[Fig. 48] Fig. 48 is a diagram illustrating an example of path derivation using a nearest neighbor algorithm.
[Fig. 49] Fig. 49 is a diagram illustrating an example of vehicle assignment to a last visited node.
[Fig. 50] Fig. 50 is a diagram illustrating an example of vehicle assignment to the last visited node.
[Fig. 51] Fig. 51 is a diagram illustrating an example of vehicle assignment to a first visited node.
[Fig. 52] Fig. 52 is a diagram illustrating an example of vehicle assignment to the first visited node.

[Fig. 53] Fig. 53 is a diagram illustrating an implementation example of a converter.
[Fig. 54] Fig. 54 is a diagram illustrating an implementation example of the converter.

[DESCRIPTION OF EMBODIMENTS]

A main body of a device or a method in the present disclosure includes a computer. The computer executes a computer program to implement functions of the main body of the device or method in the present disclosure. The computer includes a processor that operates according to a computer program as its main hardware configuration. The type of the processor is not limited as long as the processor can realize a function by executing the computer program. The processor includes one or more electronic circuits including a semiconductor integrated circuit (an IC, an LSI, etc.). The computer program is recorded in a non-transitory recording medium such as a computer-readable ROM, an optical disk, or a hard disk drive. The computer program may be stored in advance in a recording medium, or may be supplied to the recording medium via a wide area communication network including the Internet or the like.

An outline of an example will be described. In a delivery plan in a case where a plurality of moving bodies are divided to deliver packages from a delivery base (hereinafter, also referred to as a "depot") to a plurality of nodes, it is necessary to find a solution so as to satisfy various constraints (also called constraint conditions) including travel time between nodes, business requirements, and the like. The moving body in the example is a vehicle (a truck, etc.) that delivers packages, and the node is a store as a delivery destination for the packages. The delivery plan can be said to be a plan that defines which vehicle visits which stores in which order, and can also be said to be a plan that defines a delivery route (also referred to as a travel route) from departure of each vehicle from the depot to return to the depot via one or more stores.

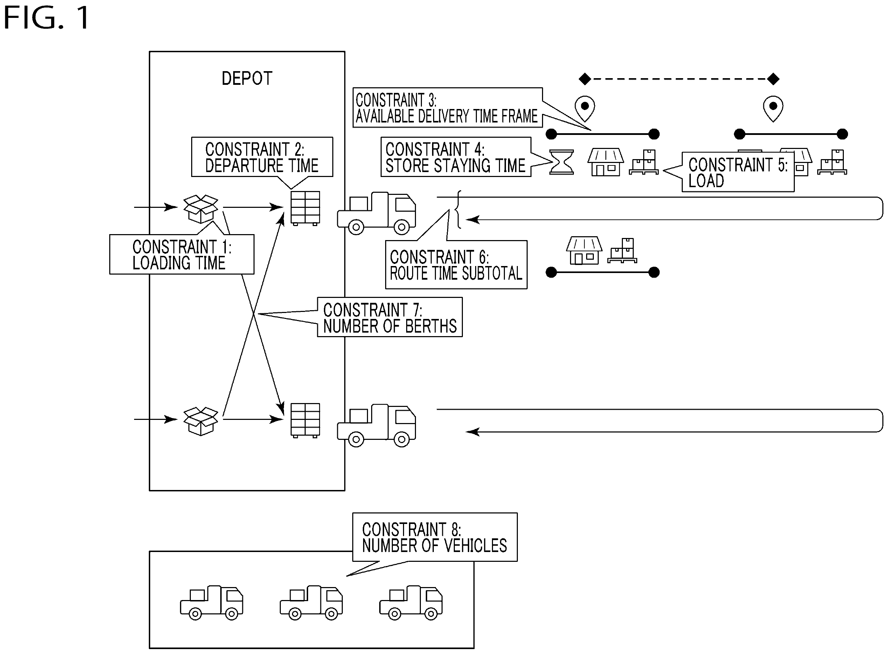

Fig. 1 illustrates an example of a plurality of constraints on a delivery plan. Constraint 1 "loading time" is a period of time required for loading work onto a vehicle at the depot. Constraint 2 "departure time" is a time point at which the vehicle can depart from the depot. Constraint 3 "available delivery time frame" is a time frame in which the vehicle can visit each store. Constraint 4 "store staying time" is a period of time during which the vehicle can stay in the store. Constraint 5 "load volume" is a load volume that can be loaded for each vehicle and a load volume that needs to be delivered to each store.

Constraint 6 "route time subtotal" is a maximum value of a possible delivery time per route (in other words, a period of time from departure from the depot to return to the depot after visiting stores). Constraint 7 "number of berths" is the number of garages (hereinafter, also referred to as a "berth") that can be simultaneously used in the loading work at the depot. Constraint 8 "number of vehicles" is the number of vehicles that are divided to visit a plurality of stores. Further, although not illustrated in Fig. 1, the constraint of the example includes a distance matrix indicating a distance between the depot and each store and a distance between stores (specifically, a time distance, which can also be called a travel time).

It is not easy to find a solution for a delivery plan that simultaneously satisfies various constraints as shown in Fig. 1 (hereinafter, also referred to as a "feasible solution"), and it takes time to search for the solution. For example, (Problem 1) even if $10^{100}$ solutions for the delivery plan are derived over a lot of time, any solution may be a solution that violates any constraint (hereinafter, also referred to as an "infeasible solution"). Further, (Problem 2) in a delivery plan problem in which there are $10^{800}$ solutions as a whole, even if $10^{600}$ solutions among them are feasible solutions, the remaining ($10^{800}$ - $10^{600}$) solutions may be searched.

In the example, a technique is proposed to help ensure that a feasible solution for a delivery plan is found. In the delivery plan support system of the example, in order to solve the problem 1 described above, before processing of generating a delivery plan of a plurality of vehicles (also called delivery route determination processing and delivery route optimization processing), in a case where no feasible solution exists, processing of detecting the fact is operated. Specifically, in a case where a plurality of constraints contradict each other (in other words, they are inconsistent), processing of detecting the fact is operated. Further, in order to solve the above problem 2, constraint data is converted so that a delivery route can be efficiently solved in consideration of the nature of an algorithm applied to determination of the delivery route.

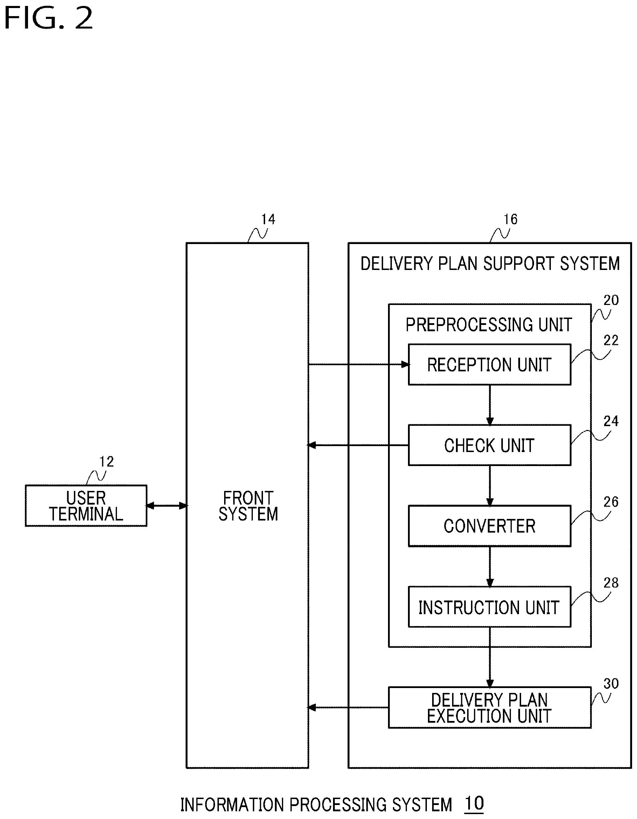

Details of the example will be described. Fig. 2 illustrates a configuration of an information processing system 10 according to the example. The information processing system 10 includes a user terminal 12, a front system 14, and a delivery plan support system 16. These are connected via a communication network including an LAN, a WAN, the Internet, and the like.

The user terminal 12 is an information processing terminal operated by a person in charge (hereinafter, also referred to as a "user") of a business operator (hereinafter, also referred to as a "delivery company") involved in delivery of packages to nodes. The user creates a plurality of constraints on a delivery plan as shown in Fig. 1.

The front system 14 transmits data indicating the plurality of constraints transmitted from the user terminal 12 to the delivery plan support system 16. The front system 14 may set constraint data based on the data transmitted from the user terminal 12. Further, the front system 14 transmits data based on the delivery plan transmitted from the delivery plan support system 16 to the user terminal 12. The data based on the delivery plan may include, for example, a course table indicating nodes to be visited by each of the plurality of vehicles.

The delivery plan support system 16 is a system that supports formulation of a delivery plan. The delivery plan support system 16 includes a preprocessing unit 20 and a delivery plan generator 30. The delivery plan support system 16 may be realized by one computer or may be realized by cooperation of a plurality of computers. In the example, the preprocessing unit 20 and the delivery plan generator 30 are realized by different computers, and a computer on which the function of the preprocessing unit 20 is implemented and a computer on which the function of the delivery plan generator 30 is implemented are connected via the communication network. For example, the function of the delivery plan generator 30 may be provided as a cloud service (for example, SaaS) .

The delivery plan generator 30 generates a delivery plan, in other words, determines (solves) an optimal delivery route of a plurality of vehicles. The delivery plan generator 30 can apply various algorithms in generating the delivery plan. Further, the delivery plan generator 30 may be realized using a quantum computer capable of solving the combination optimization problem at high speed. In the example, the delivery plan generator 30 generates the delivery plan using a nearest neighbor algorithm, which is a known clustering method. Further, the delivery plan generator 30 sequentially determines the delivery routes of the plurality of vehicles according to a predetermined order.

The preprocessing unit 20 executes preprocessing for delivery plan generation. The preprocessing unit 20 includes a reception unit 22, a check unit 24, a converter 26, and an instruction unit 28. The functions of the plurality of functional blocks (which may include the delivery plan generator 30) may be implemented in a computer program. The computer program may be stored in a storage of a computer constituting the delivery plan support system 16. The processor (CPU or the like) of the computer constituting the delivery plan support system 16 may exert the functions of the plurality of functional blocks by reading and executing the computer program in a main memory.

The reception unit 22 receives data indicating a plurality of constraints on the delivery plan transmitted from the front system 14. The check unit 24 is also referred to as a determination unit, and determines whether or not the plurality of constraints on the delivery plan are consistent with respect to at least one of time and resource assignment (in other words, whether or not the constraints contradict each other).

The converter 26 receives a first visited node constraint, a last visited node constraint, and a node vehicle constraint. The first visited node constraint is a constraint that specifies a first visited node that is a node to be visited first on the route from the depot. The last visited node constraint is a constraint that specifies a last visited node that is a node to be visited last on the route from the depot. The node vehicle constraint is a constraint that specifies a vehicle to visit to the first visited node or the last visited node. The converter 26 converts the node vehicle constraint so that the last visited node is preferentially assigned to a vehicle that is relatively later in a route determination order. Further, the converter 26 converts the node vehicle constraint so that the first visited node is preferentially assigned to a vehicle that is relatively earlier in the route determination order.

In a case where it is determined by the check unit 24 that the plurality of constraints on the delivery plan are consistent (in other words, there is no contradiction), the instruction unit 28 inputs a delivery plan instruction for instructing to generate a delivery plan based on the plurality of constraints to the delivery plan generator 30. In the example, the instruction unit 28 transmits data of the delivery plan instruction including the plurality of constraints to the delivery plan generator 30 via the communication network. The plurality of constraints included in the delivery plan instruction includes node vehicle constraints after conversion by the converter 26.

Next, check processing by the check unit 24 of the delivery plan support system 16 will be described in detail.

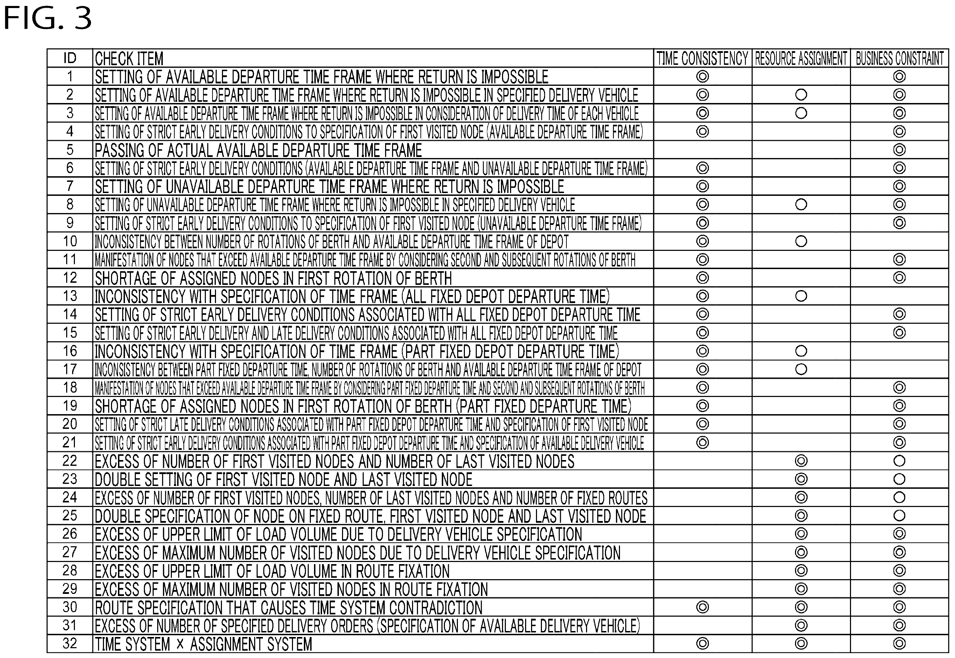

Fig. 3 illustrates check items by the check unit 24. The check items by the check unit 24 include 32 check items shown in Fig. 3. Fig. 3 illustrates whether each check item corresponds to a time consistency check, a resource assignment check, and a business constraint check. In Fig. 3, a double circle is marked in a case where it strongly corresponds, a single circle is marked in a case where it weakly corresponds, and no mark is marked in a case where it does not correspond. The time consistency check is a check to see whether or not a plurality of constraints are consistent with respect to time, such as an available departure time frame of a depot or a node. The resource assignment check is a check to see whether or not a plurality of constraints are consistent with respect to resource assignment, such as the number of berths, the number of vehicles, and the load volume. The business constraint check is a check to see whether or not a plurality of constraints are consistent with respect to business constraints of the delivery company.

In the check of ID1, even if a vehicle departs from a node at the earliest time within the available departure time frame set for the node, an error is detected in a case where the vehicle cannot be returned to the depot within the maximum delivery time (for example, five hours) set for the vehicle. In a case where an error is detected in this check, the check unit 24 determines that a plurality of constraints are inconsistent (in other words, contradict each other). Note that, in the example, the available departure time frame of the node is also a time frame in which the vehicle can arrive at the node, and can also be referred to as an available arrival time frame.

In the check of ID2, even if an available delivery vehicle specified at a node departs from the node earliest within the available departure time frame set for the node, an error is detected in a case where the vehicle cannot be returned to the depot within the maximum delivery time set for the vehicle.

In the check of ID3, an error is detected in a case where the number of nodes exceeds the number of vehicles for nodes where vehicles depart at the earliest time within the available departure time frame and can be returned to the depot within the maximum delivery time at the last moment.

In the check of ID4, an error is detected in a case where a vehicle cannot arrive within the available departure time frame of the first visited node (arrives earlier than the available departure time frame) even if the vehicle departs from the depot at the latest time.

In the check of ID5, an error is detected in a case where there is no time frame in which departure is possible in consideration of the available departure time frame and an unavailable departure time frame set for the node (time frames in which arrival at the node and departure from the node are impossible).

In the check of ID6, in consideration of the available departure time frame and the unavailable departure time frame set for the node, an error is detected in a case where it is too late for the available departure time frame of the node even if a vehicle departs from the depot at the earliest time.

In the check of ID7, when a vehicle departs from a node at the earliest time within the available departure time frame set for the node, the vehicle can return to the depot within the maximum delivery time, on the other hand, in a case where the vehicle cannot return to the depot within the maximum delivery time due to the unavailable departure time frame set for the node, an error is detected

In the check of ID8, when an available delivery vehicle specified at a node departs from the node at the earliest time within the available departure time frame set for the node, the vehicle can return to the depot within the maximum delivery time, on the other hand, in a case where the vehicle cannot return to the depot within the maximum delivery time due to the unavailable departure time frame set for the node, an error is detected.

In the check of ID9, when the unavailable departure time frame is excluded from the available departure time frame of the first visited node, an error is detected in a case where a vehicle cannot arrive at the available departure time frame of the first visited node (arrives earlier than the available departure time frame) even if the vehicle departs from the depot at the latest time.

In the check of ID10, an error is detected in a case where there is a vehicle that cannot depart from the depot within the available departure time frame of the depot in consideration of the number of berths at the depots, a berth occupancy time and the available departure time frame of the depot.

In the check of ID11, in a case where the number of nodes that cannot be arrived in time unless a vehicle departs from a berth of the depot in a first rotation exceeds the number of berths, an error is detected (because there is a node that cannot be arrived within the available departure time frame).

In the check of ID12, in a case where the number of nodes that can be arrived within the available departure time frame when a vehicle departs from the depot late exceeds the number of berths, an error is detected (because there is a node that is arrived at an earlier time than the available departure time frame).

In the check of ID13, in a case where a departure time of all the vehicles from the depot is specified, an error is detected in a case where the specified departure time of the vehicle deviates from the available departure time frame of the depot.

In the check of ID14, in a case where the departure time of all the vehicles from the depot is specified, an error is detected in a case where there is a node that cannot be arrived within the available departure time frame at the specified departure time of the vehicle.

In the check of ID15, in a case where the departure time of all the vehicles from the depot is specified, an error is detected in a case where some vehicles cannot arrive at the available departure time frame of the first visited node at the specified departure time of the vehicle.

The check of ID16 corresponds to the check of ID13. In the check of ID16, in a case where the departure time of some vehicles from the depot is specified, an error is detected in a case where the specified departure time of the vehicle deviates from the available departure time frame of the depot.

The check of ID17 corresponds to the check of ID10. In the check of ID17, in a case where the departure time of some vehicles from the depot is specified, an error is detected in a case where there is a vehicle that cannot depart from the depot within the available departure time frame of the depot in consideration of the number of berths at the depot, the berth occupancy time, and the available departure time frame of the depot.

The check of ID18 corresponds to the check of ID11. In the check of ID18, in a case where the departure time of some vehicles from the depot is specified, an error is detected in a case where the number of nodes that cannot be arrived in time unless a vehicle departs from the berth of the depot in the first rotation exceeds the number of berths.

The check of ID19 corresponds to the check of ID12. In the check of ID19, in a case where the departure time of some vehicles from the depot is specified, an error is detected in a case where the number of nodes that can be arrived within the available departure time frame when a vehicle departs from the depot late exceeds the number of berths.

In the check of ID20, in a case where both specification of the departure time of some vehicles from the depot and specification of the first visited node are performed, an error is detected in a case where there is a node that cannot be arrived within the available departure time frame.

In the check of ID21, in a case where both the specification of the departure time of some vehicles from the depot and the specification of the available delivery vehicle to the node are performed, an error is detected in a case where there is a node that cannot be arrived within the available departure time frame.

In the check of ID22, an error is detected in a case where the sum of the number of specified first visited nodes and the number of specified last visited nodes exceeds the number of vehicles. The check unit 24 prohibits assignment of both a specified first visited node and a specified last visited node to one vehicle. This is because when both the first visited node and the last visited node are assigned to one vehicle, the delivery route of the vehicle tends to be distorted, and efficient generation of the delivery route is hindered.

In the check of ID23, an error is detected in a case where one node is specified for both the first visited node and the last visited node.

In the check of ID24, an error is detected in a case where the sum of the number of first visited nodes, the number of last visited nodes, and the number of fixed routes exceeds the number of vehicles. This is because the first visited node, the last visited node, and the fixed route are assigned to different vehicles. The fixed route is a route in which a combination of at least some nodes is fixed, and includes an all fixed route and a forward-matching fixed route. The all fixed route is a route on which a combination of all nodes is fixed, and is, for example, a route on which "depot → node A → node B → node C → depot" is specified. The forward-matching fixed route is a route on which a combination of nodes at a preceding stage of the route is fixed, and is, for example, a route on which "depot → node A → node B" is specified, and the node B and later is unspecified.

In the check of ID25, an error is detected in a case where one node is specified redundantly for at least two of the first visited node, the last visited node, and the fixed route.

In the check of ID26, in a case where each node is assigned to a vehicle, an error is detected in a case where there is a vehicle in which the load volume to be loaded exceeds a load volume limit.

In the check of ID27, in a case where each node is assigned to a vehicle, an error is detected in a case where there is a vehicle in which the number of nodes to be visited exceeds the maximum number of nodes visited by the vehicle.

In the check of ID28, in a case where a fixed route is assigned to a vehicle based on of the specification of the available delivery vehicle for each node, an error is detected in a case where there is no vehicle that can be assigned to the fixed route due to the load volume limit.

In the check of ID29, in a case where a fixed route is assigned to a vehicle based on the specification of the available delivery vehicle for each node, an error is detected in a case where there is no vehicle that can be assigned to the fixed route due to a limit of the maximum number of visited nodes.

In the check of ID30, in a case where a fixed route is assigned to a vehicle, an error is detected in a case where there is no vehicle satisfying the available departure time frame of each node on the fixed route.

In the check of ID31, an error is detected in a case where the sum of the number of first visited nodes and the number of last visited nodes exceeds the number of vehicles to which those nodes can be assigned.

In the check of ID32, it is checked whether or not there is a contradiction in a case where the individual checks described above are taken into consideration together.

Hereinafter, some check items will be described in more detail.

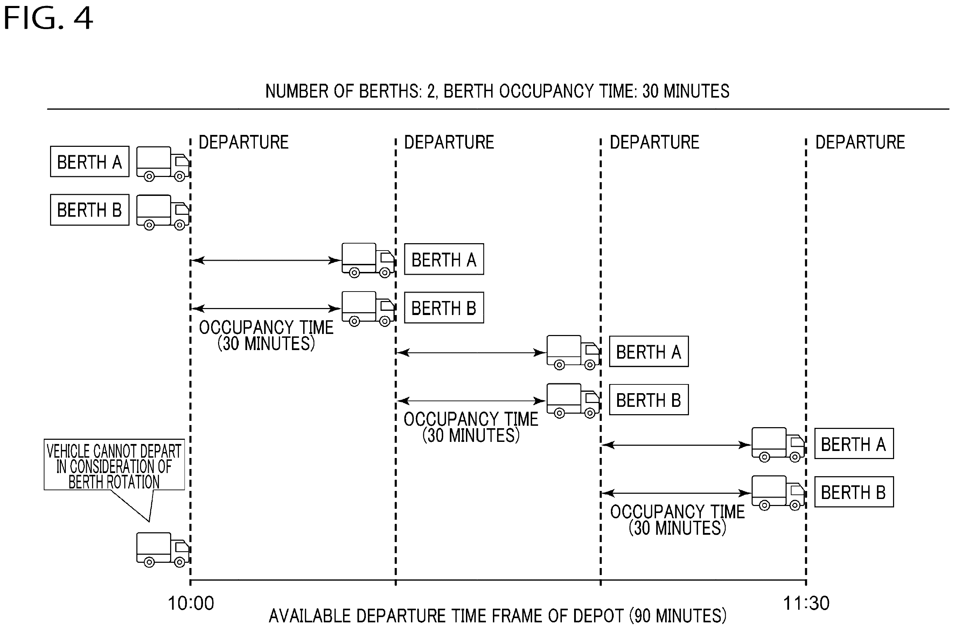

The check of ID10 "an inconsistency between the number of rotations of the berth and the available departure time frame of the depot" will be described in detail. Fig. 4 is a diagram for describing an inconsistency to be detected by the check of ID10. The check unit 24 determines that the plurality of constraints are inconsistent, in a case where the check unit 24 detected that there is a vehicle that cannot depart from the depot within the available departure time frame of the depot based on a constraint of the number of berths at the depot. The check unit 24 detects the inconsistency in a case where there is a vehicle that cannot depart within the available departure time frame of the depot in consideration of the number of berths at the depot, the berth occupancy time, and the available departure time frame of the depot.

Specifically, the check unit 24 solves a bin packing problem in which the available departure time frame of the depot is regarded as a capacity using a first-fit algorithm. The bin packing problem is a problem of preparing a bin that only contains a specific capacity and determining how many bins are required at minimum to pack all blocks into the bins. The first-fit algorithm, also called "First-Fit-Decreasing", is an algorithm for packing a block into a bin with the smallest subscript among the bins in which the blocks are packed. The check unit 24 checks that the obtained number (number of bins) does not exceed the number of berths.

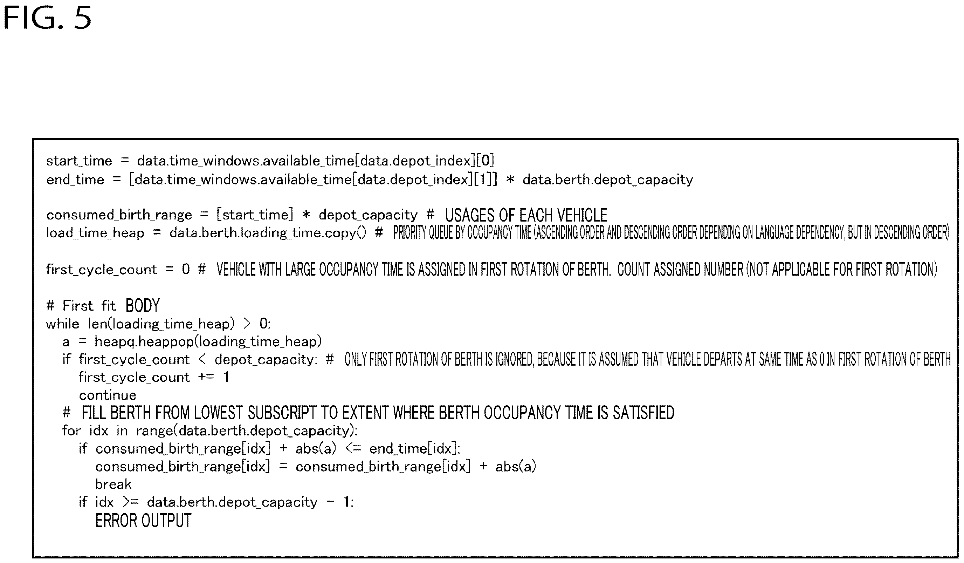

Fig. 5 illustrates an implementation example of the check algorithm of ID10. In the example, source code of Python is illustrated as an implementation example of each check algorithm. Input data indicating the relevant constraints are as follows.

· data.depot_index: index of depot (int)
· data.time_windows.available_time: available departure time frame for each node (dict)
· data.berth.berth_control: "auto"
· data.berth.depot_capacity: number of berths (int)

· data.berth.loading_time: berth occupancy time per vehicle (dict)

In a case where the required number of berths exceeds the number of berths as a constraint, the check unit 24 detects an error and detects an inconsistency between the constraints.

The check of ID11 "manifestation of nodes that exceed the available departure time frame by considering a second and subsequent rotations of the berth" will be described in detail. The check unit 24 determines that the plurality of constraints are inconsistent, in a case where the check unit 24 detected that there is a node at which the vehicle does not arrive within a predefined available arrival time frame based on the constraint of the number of berths at the depot. As described above, the "available arrival time frame" in the example is synonymous with the "available departure time frame".

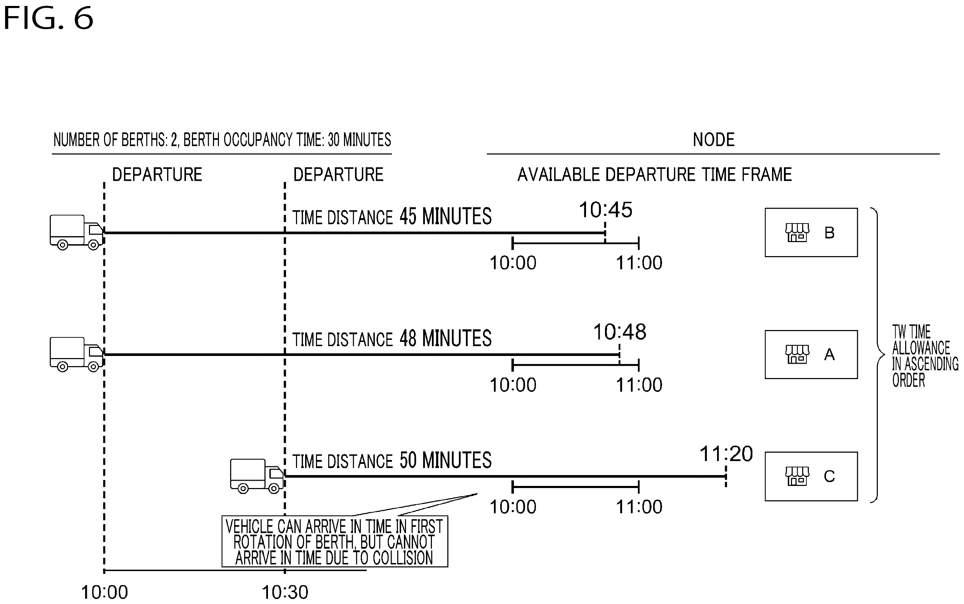

Fig. 6 is a diagram for describing an inconsistency to be detected by the check of ID11. The figure illustrates an example in which there is a node that cannot be arrived at the available departure time frame in a case where there are more nodes that cannot be arrived in time unless a vehicle departs at the first rotation of the berth than the number of berths. The figure illustrates a simple example. In fact, since the available departure time frame is different at each node, values obtained by subtracting the time distance from an upper limit of the available departure time frame are arranged and checked in ascending order. Further, since there is a possibility of reaching the node C via the node B or the node A, the check is performed up to the second rotation.

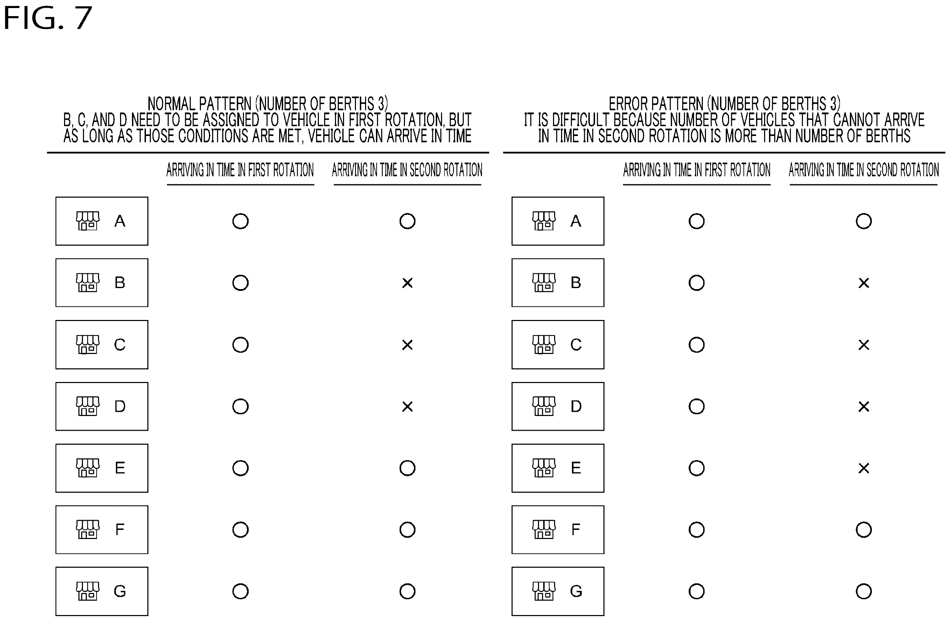

Fig. 7 is a diagram for describing a check algorithm of ID11. The check unit 24 detects an error when the number of nodes that cannot be arrived in time by an n-th rotation exceeds (number of berths $\times$ n). However, since there is a possibility that it can be arrived in time via the node up to an n-1th rotation, the check is performed up to the second rotation.

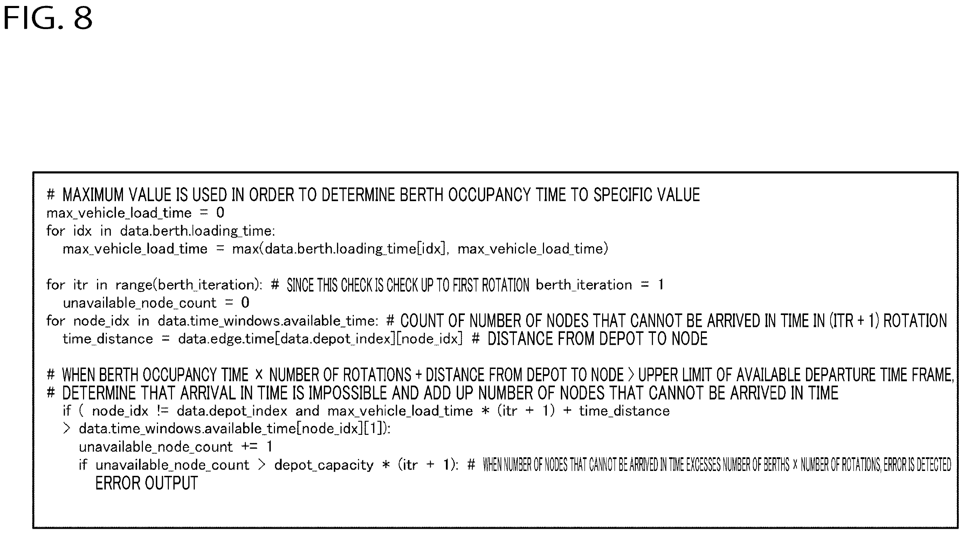

Fig. 8 illustrates an implementation example of the check algorithm of ID11. Input data indicating the relevant constraints are as follows.

· data.depot_index: index of depot (int)
· data. edge. time: distance matrix between depot and node, between node and node (two-dimensional list)
· data.time_windows.available_time: available departure time frame for each node (dict)
· data.berth.berth_control: "auto"
· data.berth.depot_capacity: number of berths
· data.berth.loading_time: berth occupancy time per vehicle (dict)

The check of ID12 "shortage of assigned nodes in the first rotation of the berth" will be described in detail. The check unit 24 determines that the plurality of constraints are inconsistent, in a case where the check unit 24 detected that there is a node at which the vehicle does not arrive within the predefined available arrival time frame based on a constraint of the departure time from the depot of the plurality of vehicles fixed in advance.

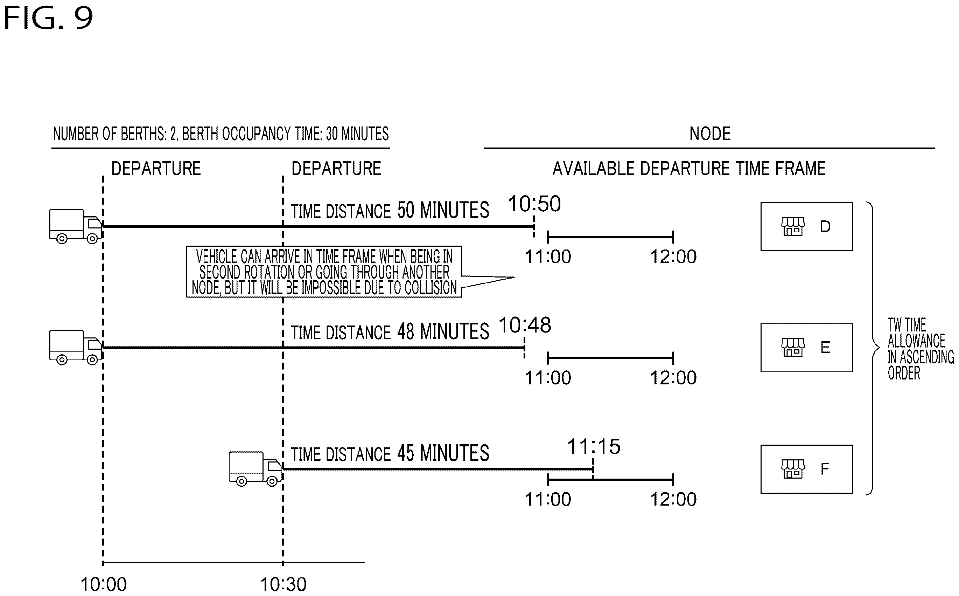

Fig. 9 is a diagram for describing an inconsistency to be detected by the check of ID12. When there is only a node that is arrived in time when a vehicle departs from the berth of the depot late, in a case where the number of nodes is larger than the number of berths, there is a node at which the vehicle arrives at a time point earlier than the available departure time frame. The figure illustrates a simple example. In fact, since the available departure time frame is different at each node, values obtained by subtracting the time distance from a lower limit of the available departure time frame of each node are arranged and checked in descending order. Strictly speaking, the earliest departure time from the depot is determined for each node, and an error is detected in a case where the assigned node of the first rotation of the berth is insufficient. Since the berth is the most conspicuous resource related to the delivery of packages, in the example, it is assumed that the first rotation of the berth is used up.

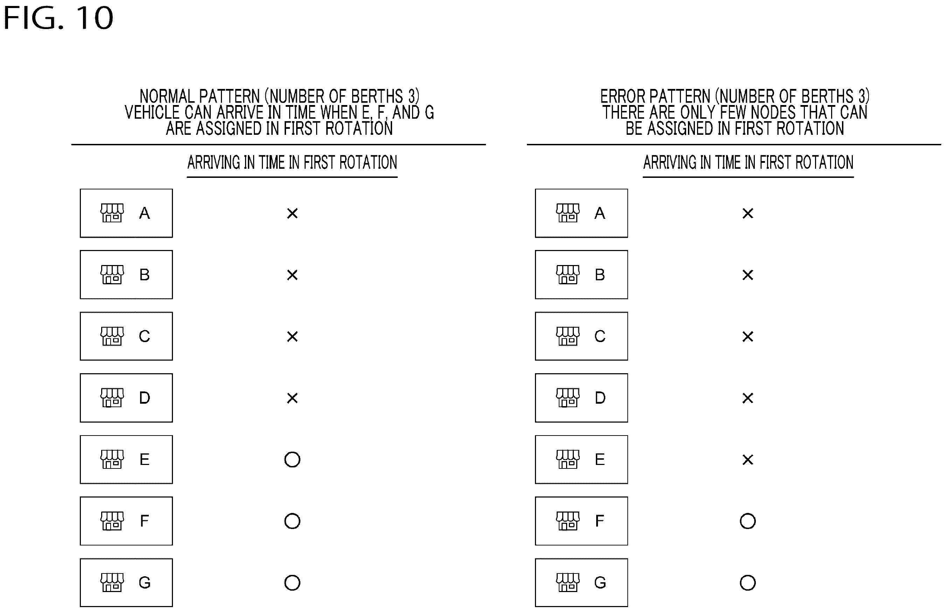

Fig. 10 is a diagram for describing a check algorithm of ID12. An error is detected in a case where the number of nodes that can be arrived within the available departure time frame is smaller than the number of berths since the vehicle departs at the first rotation of the berth. This is because the first rotation of the berth cannot be used up, and there is a node at which the vehicle arrives at a time point earlier than the available departure time frame when the first rotation of the berth is to be used up.

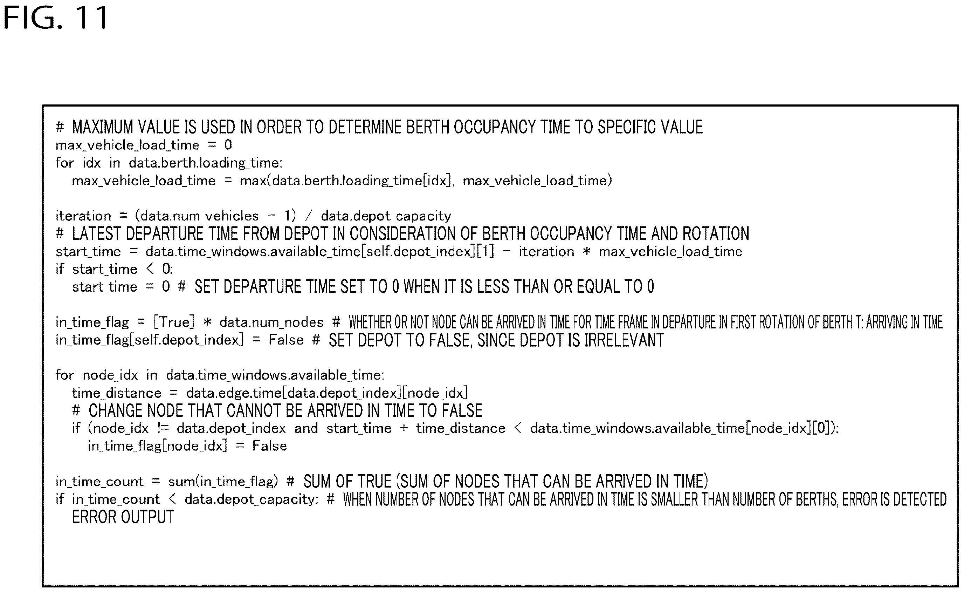

Fig. 11 illustrates an implementation example of the check algorithm of ID12. Input data indicating the relevant constraints are as follows.

· data.num_vehicles: number of vehicles (int)
· data.depot_index: index of depot (int)
· data. edge. time: distance matrix between depot and node, between node and node (two-dimensional list)
· data.num_nodes: number of nodes (int)
· data.time_windows.available _time: available departure time frame for each node (dict)
· data.berth.berth_control: "auto"
· data.berth.depot_capacity: number of berths

· data.berth.loading_time: berth occupancy time per vehicle (dict)

The check of ID14 "setting of strict early delivery conditions associated with an all fixed depot departure time" will be described in detail. The check unit 24 determines that the plurality of constraints are inconsistent, in a case where the check unit 24 detected that there is a node at which the vehicle does not arrive within the predefined available arrival time frame based on a constraints of the departure time from the depot of the plurality of vehicles fixed in advance.

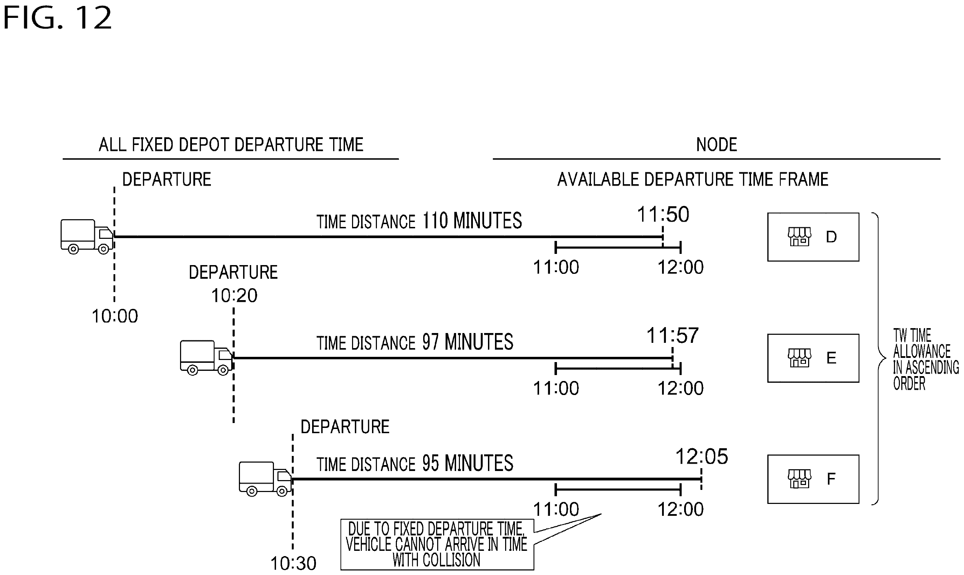

Fig. 12 is a diagram for describing an inconsistency to be detected by the check of ID14. Under a situation where the depot departure time of all vehicles is fixed, in a case where there are many nodes that can be barely arrived in time when a vehicle departs from the depot early, there may be a node at which the vehicle cannot arrive within the available departure time frame. The figure illustrates a simple example. In fact, since the available departure time frame is different at each node, values obtained by subtracting the time distance from the upper limit of the available departure time frame of each node are arranged and checked in ascending order.

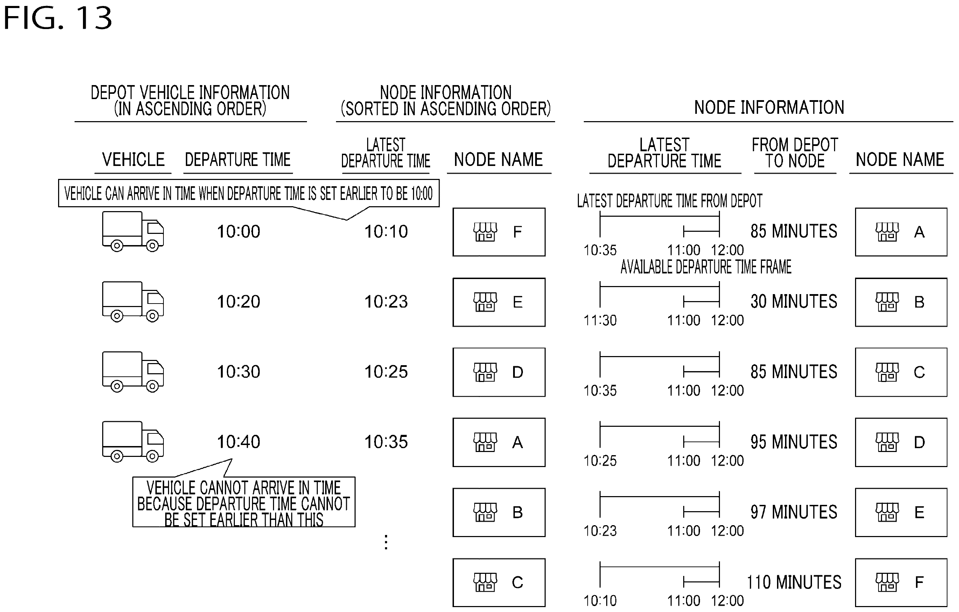

Fig. 13 is a diagram for describing a check algorithm of ID14. The latest departure time from the depot that is in time for the available departure time frame of the node (hereinafter, referred to as the "latest departure time") is calculated and sorted in ascending order. By comparing the latest departure time for each node with the departure time of the vehicle (all fixed), it is confirmed whether there is a node at which the vehicle does not arrive within the available departure time frame. In the example of Fig. 13, the node A is a node at which the vehicle does not arrive within the available departure time frame.

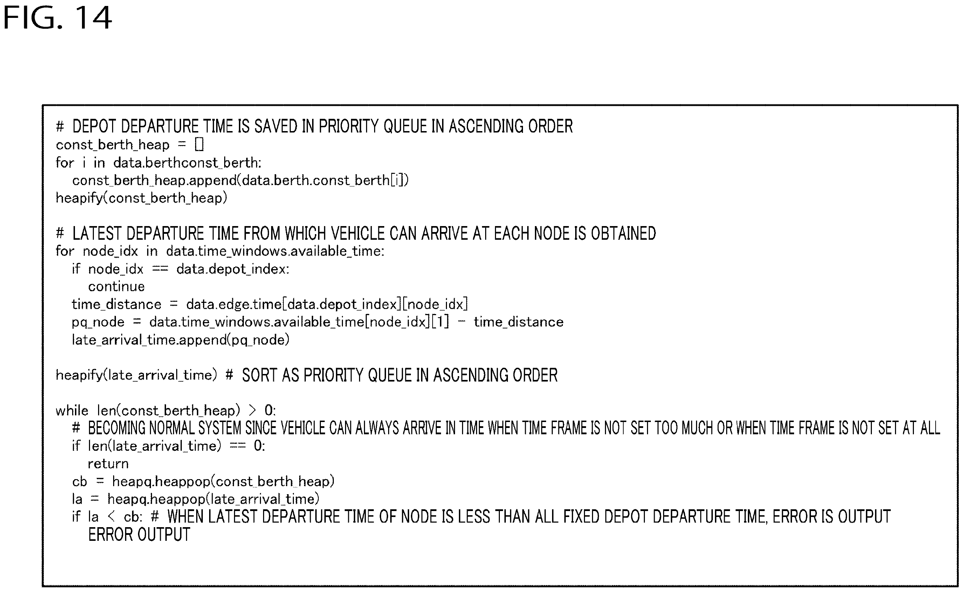

Fig. 14 illustrates an implementation example of the check algorithm of ID14. Input data indicating the relevant constraints are as follows.

· data.depot_index: index of depot (int)
· data.edge.time: distance matrix between depot and node, between node and node (two-dimensional list)
· data.time_windows.available _time: available departure time frame for each node (dict)
· data.berth.berth_control: "auto"
· data.berth.const_berth: depot departure time for each vehicle (all fixed) (list)

The check of ID15 "setting of strict early delivery and late delivery conditions associated with the all fixed depot departure time" will be described in detail. The check unit 24 compares, for the first visited node, the time at which a vehicle should depart from the depot in order to arrive at the available arrival time frame with the departure time of the plurality of vehicles from the depot in descending order, and determines whether or not the vehicle can be assigned. The first visited node is a node that is specified by a constraint to be visited first on a travel route of the vehicle from the depot. On the other hand, for a node different from the first visited node, the check unit 24 compares the time at which the vehicle should depart from the depot in order to arrive at the available arrival time frame with the departure time of the plurality of vehicles from the depot in ascending order, and determines whether or not the vehicle can be assigned. In a case where there is a node to which the vehicles cannot be assigned, the check unit 24 determines that the plurality of constraints are inconsistent.

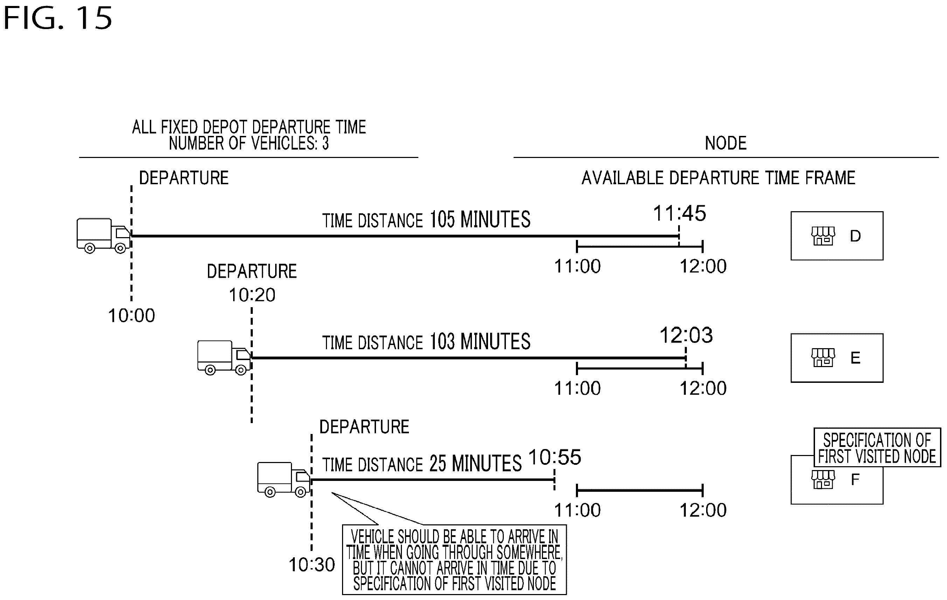

Fig. 15 is a diagram for describing an inconsistency to be detected by the check of ID15. Under a situation where the depot departure time of all vehicles is fixed, there may be a node at which the vehicle can arrive in the available departure time frame unless the node is set as the first visited node, but the vehicle cannot arrive in the available departure time frame because the node is set as the first visited node. The figure illustrates a simple example. In fact, since the available departure time frame is different at each node, values obtained by subtracting the time distance from the lower limit of the available departure time frame of each node are arranged and checked in descending order. Hereinafter, the earliest departure time from the depot at which the vehicle can arrive within the available departure time frame of the node is referred to as the "earliest departure time".

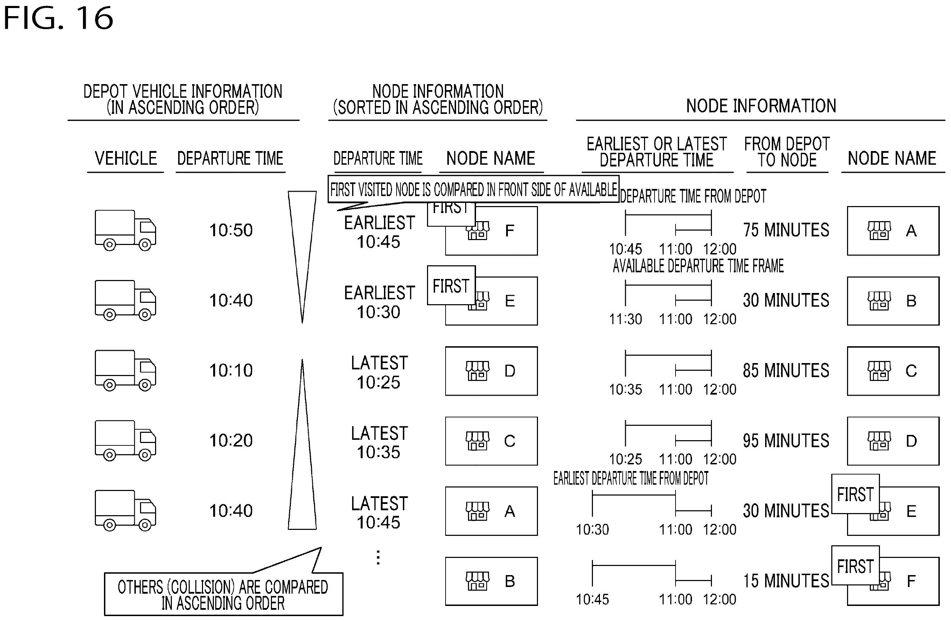

Fig. 16 is a diagram for describing a check algorithm of ID15. As described above, the check of the first visited node and the check of other nodes are divided. For the first visited node, whether or not a vehicle can be assigned is checked in descending order of time, and for the other nodes, whether or not a vehicle can be assigned is checked in ascending order of time. In Fig. 16, since it is possible to assign a vehicle with a departure time after the earliest departure time for the first visited node and it is possible to assign a vehicle with a departure time before the latest departure time for another node, it is determined that a plurality of constraints are consistent (no error is detected).

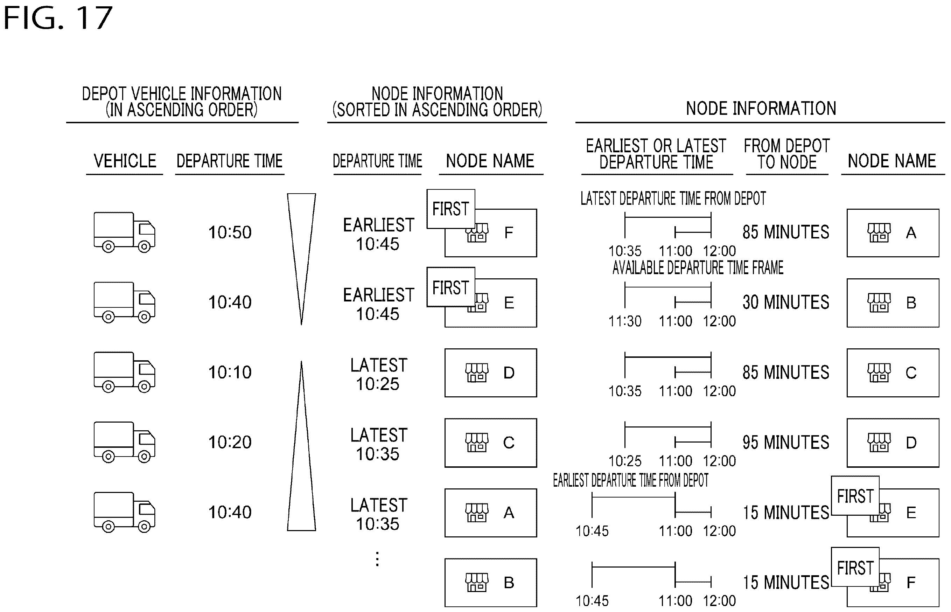

Fig. 17 is also a diagram for describing the check algorithm of ID15. The distance between a node E, which is the first visited node, and the depot is 15 minutes. In the example of Fig. 17, an error is detected, since there is no vehicle that departs from the depot at a time point after the earliest departure time for the node E among the vehicles that can be assigned to the node E.

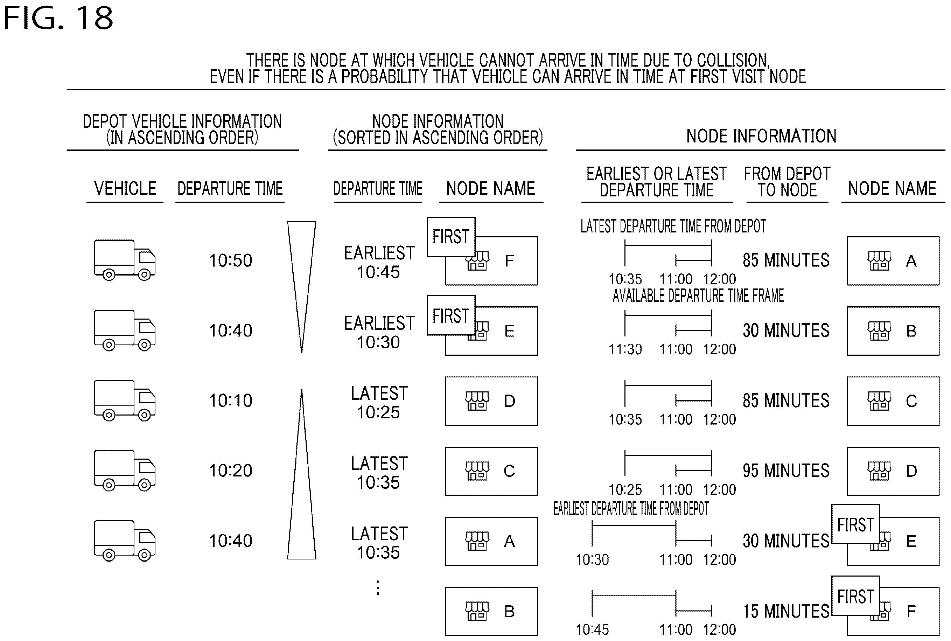

Fig. 18 is also a diagram for describing the check algorithm of ID15. In the example of Fig. 18, a vehicle can be normally assigned to the first visited node. However, an error is detected, since there is no vehicle that departs from the depot at a time point before the latest departure time for the node A, among the vehicles that can be assigned to the node A.

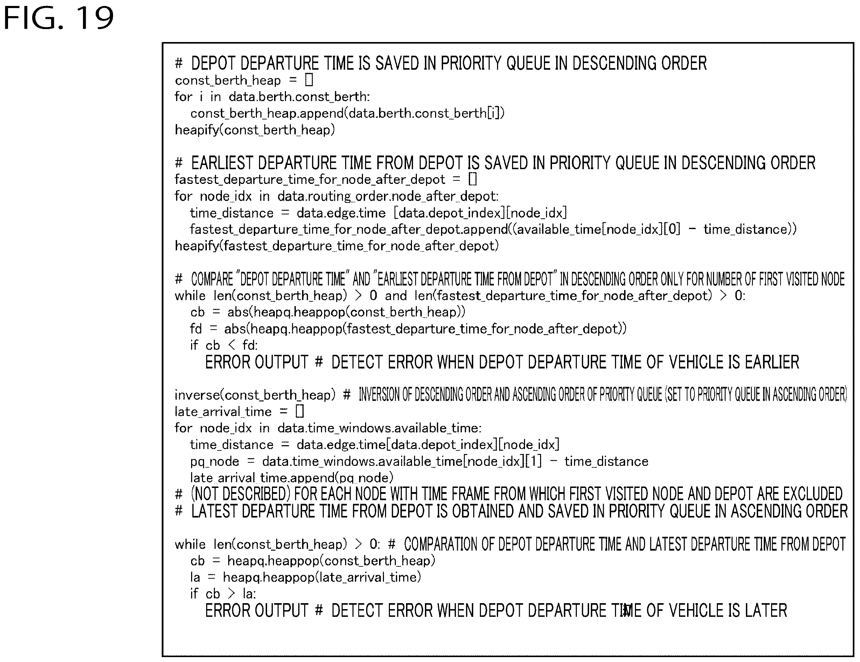

Fig. 19 illustrates an implementation example of the check algorithm of ID15. Input data indicating the relevant constraints are as follows.

· data.depot_index: index of depot (int)
· data.edge.time: distance matrix between depot and node, between node and node (two-dimensional list)
· data.berth.berth_control: "auto"
· data.berth.const_berth: depot departure time for each vehicle (all fixed) (list)
· data.time_windows.available_time: available departure time frame for each node (dict)
. data.routing_order.node_after_depot: specification of first visited node (list)

The check of ID26 "excess of the upper limit of the load volume due to delivery vehicle specification" will be described in detail. The check unit 24 determines that the plurality of constraints are inconsistent, in a case where the load volume of packages corresponding to one or more nodes to be assigned to a certain vehicle exceeds the upper limit of the load volume of the vehicle based on a constraint defining a vehicle to visit a specific node (also referred to as "delivery vehicle specification").

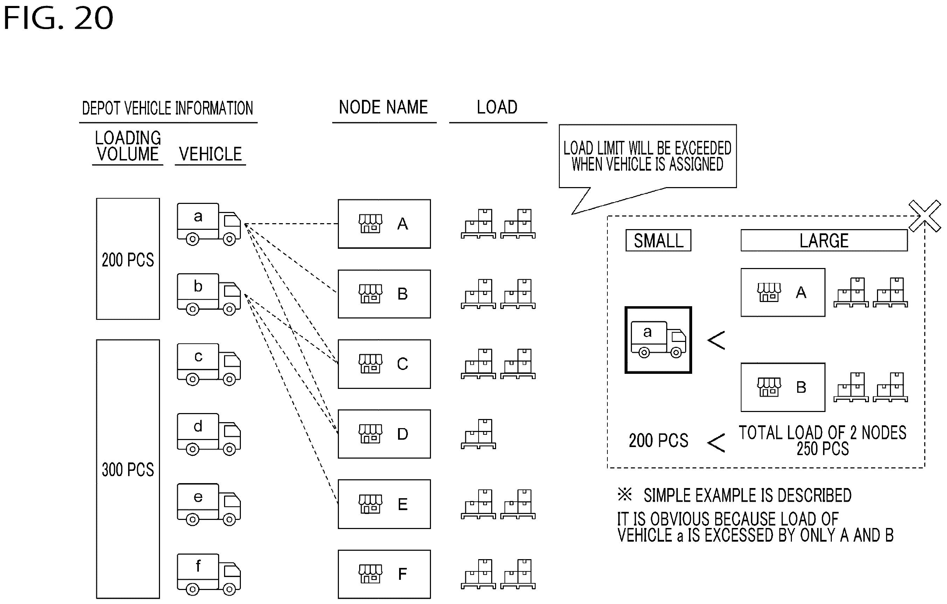

Fig. 20 is a diagram for describing an inconsistency to be detected by the check of ID26. In the figure, a vehicle a is specified as a vehicle that can visit the node A and the node B. However, the sum of the load volume (hereinafter, also referred to as "demand") to be delivered to the node A and the node B is 250, and when the node A and the node B are assigned to the vehicle a, the load volume limit of the vehicle a (here, 200) is exceeded. In this way, when a vehicle is assigned to a node in consideration of the delivery vehicle specification, the constraint of the load volume limit of the vehicle may be violated. The check unit 24 solves assignment of a vehicle to a node as a general assignment problem (also referred to as a generalized assignment problem), and checks whether or not a solution exists.

The general assignment problem will be described. Consider that there are n tasks (e.g., nodes) and they are assigned to m resources (e.g., vehicles). Tasks and resources are compatible, and a cost of when a task j is assigned to a resource i is $c_{ij}$. The upper limit $b_i$ of an available amount (also referred to as capacity, for example, a load volume limit) is defined for the resource i, and a resource $a_{ij}$ is used when assigning the task j to the resource i. When one resource is always assigned to one task, the general assignment problem is a problem of minimizing a total cost under the condition that the sum of resource usage of the task assigned to the resource does not exceed the capacity of the resource.

Using a 0-1 variable $x_{ij}$, which is 1 when the task j is assigned to the resource i and 0 otherwise, the general assignment problem can be formulated as follows.

$$\begin{aligned} minimize \quad & \sum_{i,j} c_{ij}x_{ij} & \cdots \text{(Formula 1)} \\ s.t. \quad & \sum_{j} a_{ij}x_{ij} \leq b_i \quad \forall i & \cdots \text{(Formula 2)} \\ & \sum_{i} x_{ij} = 1 \quad \forall j & \cdots \text{(Formula 3)} \\ & x_{ij} \in \{0,1\} \quad \forall i,j & \cdots \text{(Formula 4)} \end{aligned}$$

Formula 1 is an objective function, and Formula 2 to Formula 4 are constraint conditions.

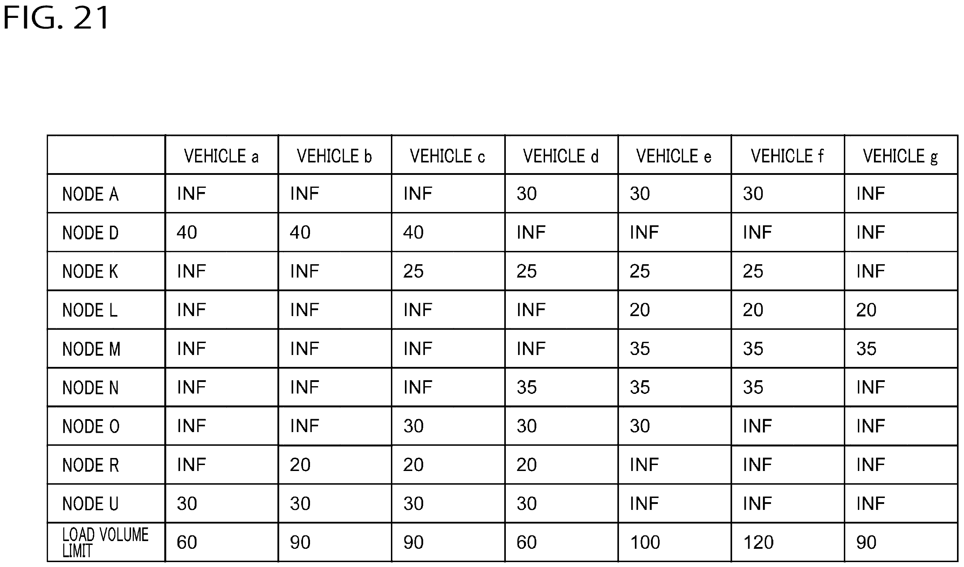

Fig. 21 is a diagram for describing a check algorithm of ID26. In a case where a vehicle is assigned to a node, a relationship between the node and the vehicle can be defined as shown in a table of Fig. 21. For example, when any one of the vehicles d, e, f is assigned to the node A (here, demand 30), the corresponding part (cell) $a_{ij}$ is set to 30, and the rest is set to INF (infinity). The node A is assigned to any one of the vehicles d, e, f in a feasible solution since the INF is not less than or equal to the load volume limit.

A mathematical formula can be defined by making each cell of node × vehicle correspond to $x_{ij}$ having a value of 0 or 1. For example, a row of the node A is defined as Formula 5.

$$x_{aA} + x_{bA} + x_{cA} \ldots x_{gA} = 1 \qquad \ldots \text{(Formula 5)}$$

Further, a column of the vehicle c is defined as Formula 6.

$$INFx_{cA} + 40x_{cD} + 25x_{cK} \ldots 30x_{cU} \leq 90 \qquad \ldots \text{(Formula 6)}$$

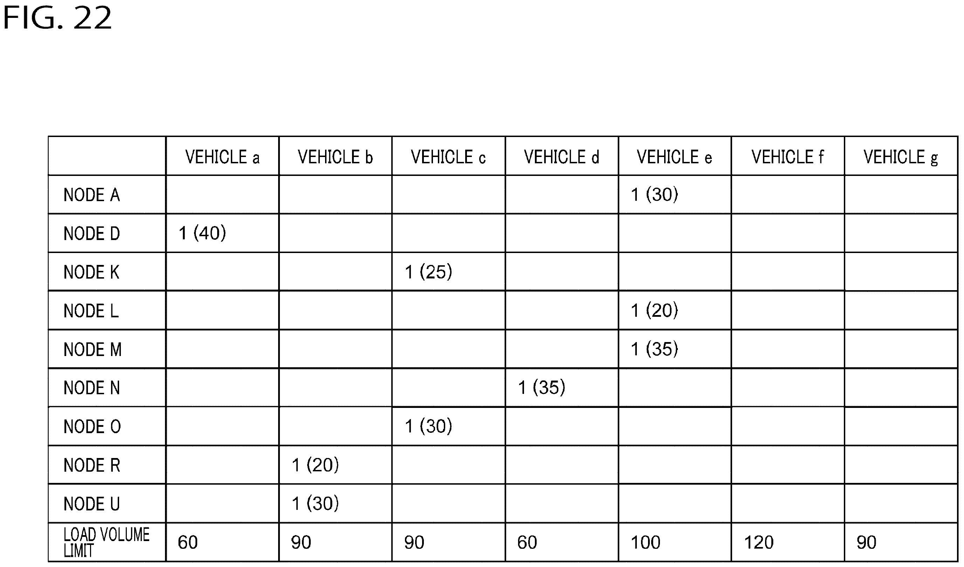

Fig. 22 is also a diagram for describing the check algorithm of ID26. The figure illustrates a state in which the vehicle a to the vehicle e are sufficiently assigned. A cell with a value of "1" indicates an assigned state, and a cell with no value indicates an unassigned state. As shown in the figure, in the feasible solution, there is only one cell with the value of "1" in a row direction, and the sum of the load volume in a column direction is less than or equal to the load volume limit. Note that, in a case where a solver that returns an error when assignment cannot be performed is used for solving processing, the error is detected. Further, in a case where formulation is performed by Quadratic Unconstrained Binary Optimization (QUBO) in a quantum computer or the like, when assignment cannot be performed, the value of the cell of the INF becomes "1", and thus, an error is detected in a case where the objective function (Formula 1) is greater than or equal to the INF.

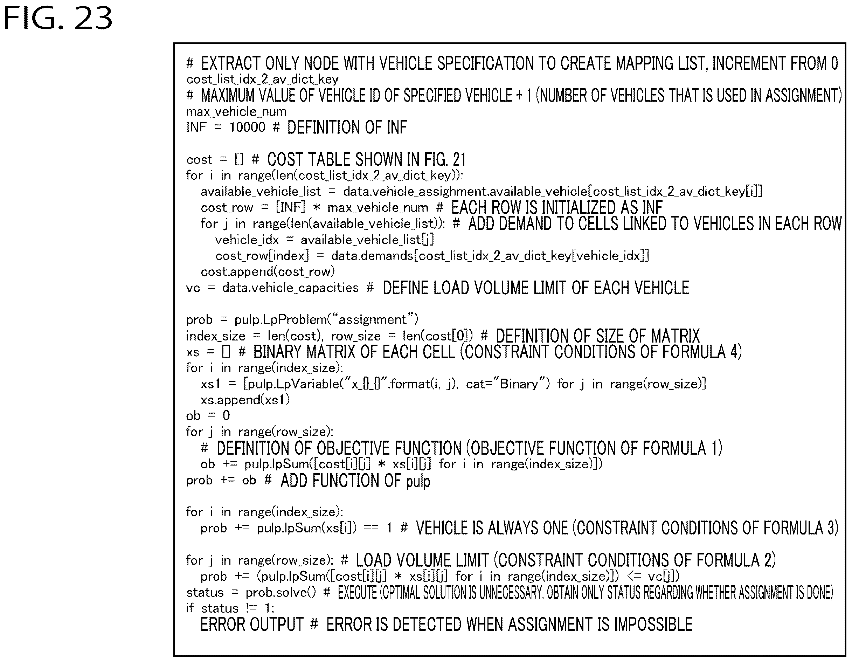

Fig. 23 illustrates an implementation example of the check algorithm of ID26. Input data indicating the relevant constraints are as follows.

· data.num_nodes: number of nodes (int)
· data.vertex.demands: demand for each node (list)
· data.vehicle_capacities: load volume limit for each vehicle (list)
• data.vehicle_assignment.available_vehicle: vehicle specification for each node (dict)

In an actual implementation, there is a binary problem of maximum node × vehicle. In the example, Python's mathematical optimization solver Pulp is used. In a case where a status of execution results of Pulp indicates abnormality, that is, in a case where a feasible solution cannot be found, the check unit 24 detects an error and determines that the plurality of constraints are inconsistent.

The check of ID27 "excess of the maximum number of visited nodes due to the delivery vehicle specification" will be described in detail. The check of ID26 described above determines whether or not the vehicle can be assigned from a viewpoint of the load volume, whereas the check of ID27 determines whether or not the vehicle can be assigned from a viewpoint of the number of visited nodes. The check unit 24 determines that the plurality of constraints are inconsistent, in a case where the number of nodes to be assigned to a certain vehicle exceeds the maximum number of nodes visited by the vehicle based on a constraint (the delivery vehicle specification) defining a vehicle to visit a specific node.

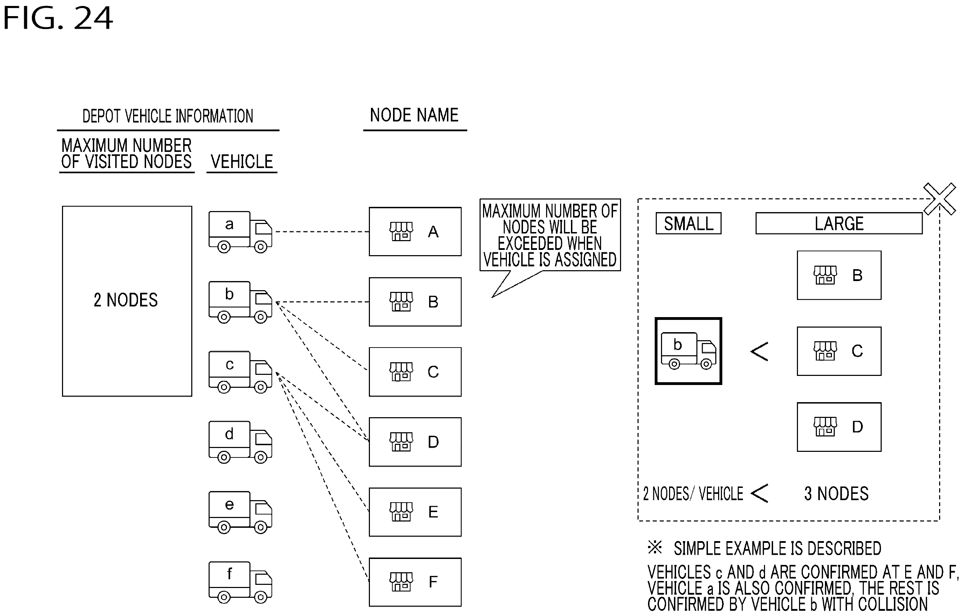

Fig. 24 is a diagram for describing an inconsistency to be detected by the check of ID27. In the figure, a vehicle b is specified as a vehicle that can visit the node B, the node C, and a node D. However, when the node B, the node C, and the node D are assigned to the vehicle b, the maximum number of nodes visited by the vehicle b (here, two nodes) is exceeded. In this way, when a vehicle is assigned to a node in consideration of the delivery vehicle specification, the constraint of the maximum number of nodes visited by the vehicle may be violated.

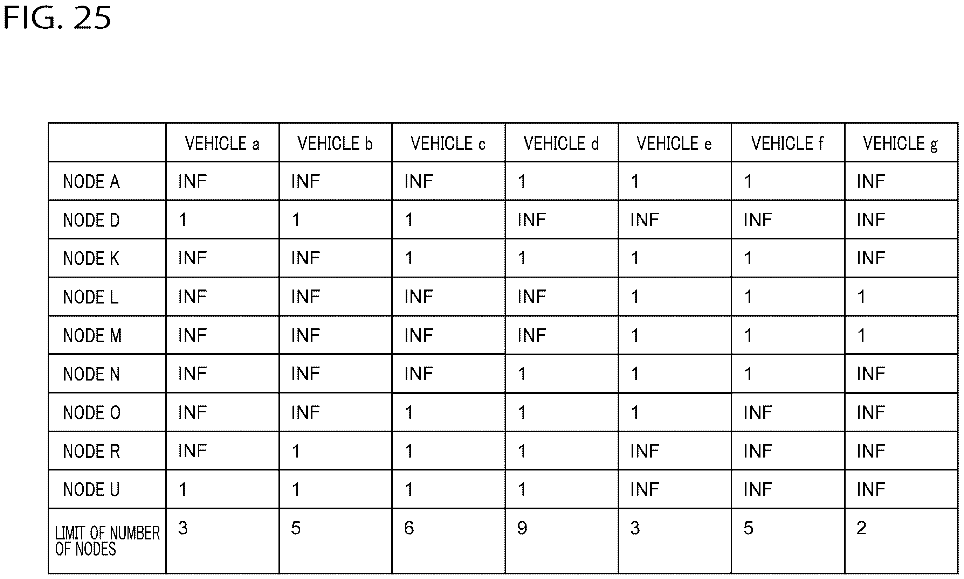

Similarly to the check of ID26, the check unit 24 performs the check of ID27 by solving the general assignment problem. A main change is that the value of each element is now 1 and a vehicle limit is the maximum number of visited nodes. Fig. 25 is a diagram for describing a check algorithm of ID27. For example, when any one of the vehicles d, e, f is assigned to the node A, the corresponding part $a_{ij}$ is set to 1, and the rest is set to INF. Since the INF is not less than or equal to the maximum number of visited nodes, the node A is assigned to any one of the vehicles d, e, f in the feasible solution.

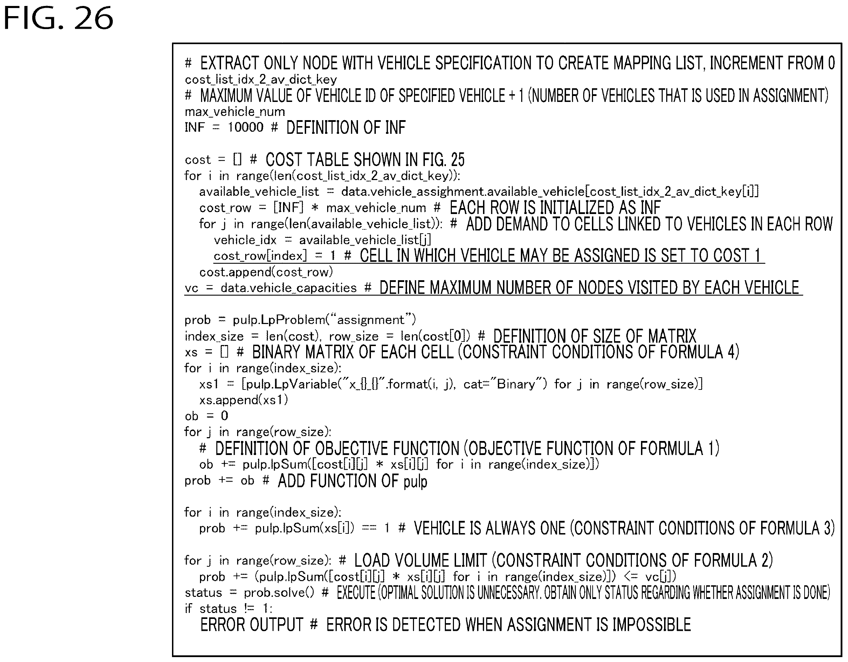

Fig. 26 illustrates an implementation example of the check algorithm of ID27. Input data indicating the relevant constraints are as follows.

· data.max_num_visits: maximum number of nodes visited by each vehicle (list)
• data.vehicle_assignment.available_vehicle: vehicle specification for each node (dict)

In Fig. 26, changes to a code of ID26 shown in Fig. 23 are underlined.

The check of ID28 "excess of the upper limit of the load volume in route fixation" will be described in detail. The check unit 24 determines that a plurality of constraints are inconsistent, in a case where the load volume of packages on a certain route exceeds the upper limit of the load volume of a vehicle that can be assigned to the route, based on a constraint defining a vehicle to visit a specific node and a constraint of a route that defines a visit order of a plurality of nodes.

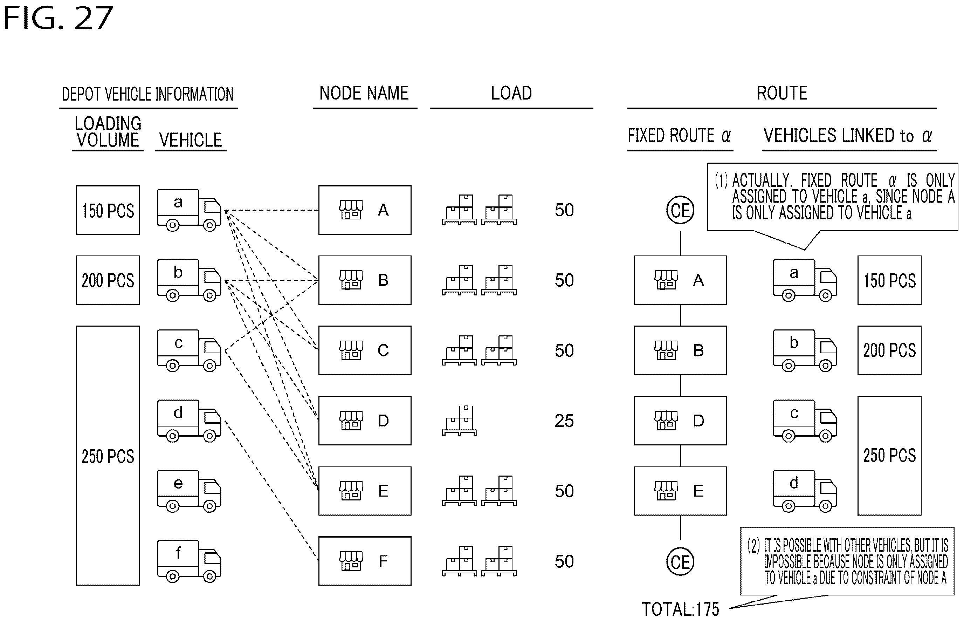

Fig. 27 is a diagram for describing an inconsistency to be detected by the check of ID28. A "CE" on the fixed route means a center and is synonymous with a depot. In a case where a fixed route is created without inconsistency based on the vehicle specification for each node and the route fixation (all route fixation, forward-matching route fixation), there may be no vehicle that can be assigned to the fixed route from a viewpoint of the load volume. In the example of Fig. 27, the vehicle a is specified as the available delivery vehicle to the node A. Therefore, a fixed route α including the node A can be assigned only to the vehicle a, but in that case, the constraint of the load volume limit of the vehicle a is violated.

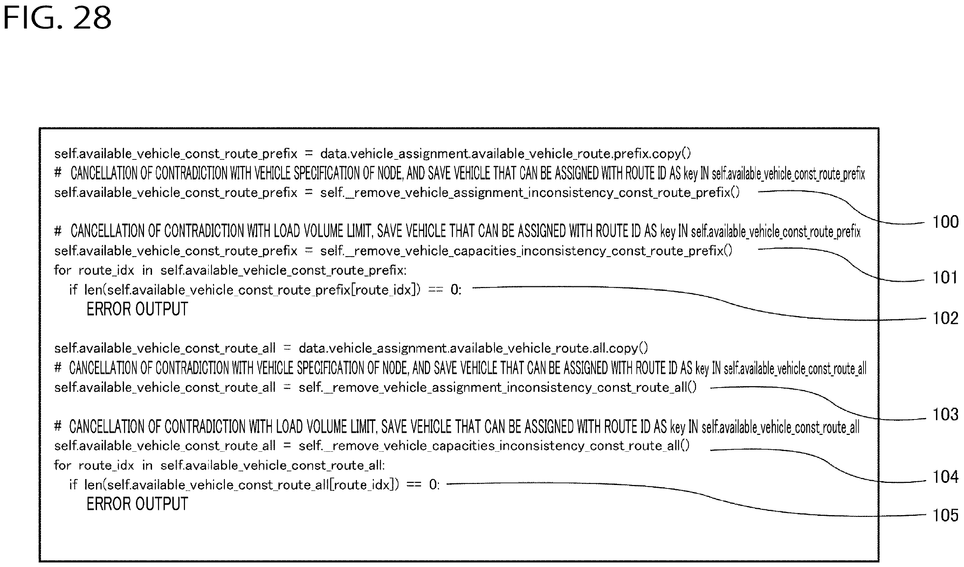

Fig. 28 illustrates an implementation example of a check algorithm of ID28. Data indicating the relevant constraints are as follows.

· data.vertex.demands: demand for each node (list)
· data.vehicle_capacities: load volume limit for each vehicle (list)
· data.routing_order.const_route.prefix: specification of forward-matching fixed route (dict)
· data.routing_order.const_route.all: specification of all fixed route (dict)
• data.vehicle_assignment.available_vehicle: vehicle specification for each node (dict) data .vehicle_assignment.available_vehicle_route.prefix: vehicle specification for each forward-matching fixed route (dict)
· data.vehicle_assignment.available_vehicle_route.all: vehicle specification for each all fixed route (dict)

An example of
data.vehicle_assignment.available_vehicle_oute.prefix: vehicle specification for each forward-matching fixed route is shown.

{route ID: [vehicle ID, ..., vehicle ID], ...}
= {0:[2,4,5,7],1:[3,6,9], ...}

In this example, the vehicles with vehicle IDs 2, 4, 5, and 7 are specified on the forward-matching fixed route (route ID0).
An example of
data.routing_order.const_route.prefix: specification of forward-matching fixed route is shown.

{route ID: [node ID, ..., node ID], ...}
= {0:[1,2,3,4], 1:[5,6,7,8], ...}

In this example, the forward-matching fixed route (route ID0) is a route for visiting a node 1, a node 2, a node 3, and a node 4 in this order, and the forward-matching fixed route (route ID1) is a route for visiting a node 5, a node 6, a node 7, and a node 8 in this order.
An example of
data.vehicle_assignment.available_vehicle: vehicle specification for each node is shown.

{node ID: [vehicle ID, ..., vehicle ID], ...}
= {1:[2,4,7], 5:[3], ...}

In this example, the vehicles with vehicle IDs 2, 4, and 7 are specified at the node 1.
In a code 100 of Fig. 28, a vehicle candidate that can be assigned for each forward-matching fixed route is identified based on the vehicle specification for each forward-matching fixed route, the specification of the forward-matching fixed route, and the vehicle specification for each node. In the above example, vehicle candidates to which the forward-matching fixed route (ID0) can be assigned are the vehicle IDs 2, 4, and 7, and the vehicle candidate to which the forward-matching fixed route (ID1) can be assigned is only the vehicle ID3. In this case, in the code 100, a dictionary instance as shown below is generated.

{route ID: [vehicle ID, ..., vehicle ID], ...}
= {0:[2,4,7], 1:[3], ...}

In a code 101 of Fig. 28, the load volume for each forward-matching fixed route (the total load volume of the nodes on the route, referred to as a "route load volume") is obtained, and for each forward-matching fixed route, a vehicle satisfying the route load volume ≤ the load volume limit (referred to as an "assignable vehicle") is obtained from vehicle candidates that can be assigned. In the above example, in a case where the load volume limit of the vehicle ID4 is extremely small, a dictionary instance as shown below is generated in the code 101.

{route ID: [vehicle ID, ..., vehicle ID], ...}
= {0:[2,7], 1:[3], ...}

In a code 102 of Fig. 28, an error is detected in a case where there is no assignable vehicle for at least one forward-matching fixed route.

A code 103, a code 104, and a code 105 in Fig. 28 correspond to the code 100, the code 101, and the code 102, respectively. In the code 103, a vehicle candidate that can be assigned for each all fixed route is identified based on the vehicle specification for each all fixed route, the specification of the all fixed route, and the vehicle specification for each node. In the code 104, the route load volume for each all fixed route is obtained, and for each all fixed route, an assignable vehicle satisfying the route load volume ≤ the load volume limit is obtained from vehicle candidates that can be assigned. In the code 105, an error is detected in a case where there is no assignable vehicle for at least one all fixed route.

The check of ID29 "excess of the maximum number of visited nodes in route fixation" will be described in detail. The check of ID28 described above determines whether or not the vehicle can be assigned from the viewpoint of the load volume, whereas the check of ID29 determines whether or not the vehicle can be assigned from the viewpoint of the number of visited nodes. The check unit 24 determines that the plurality of constraints are inconsistent, in a case where the number of nodes on a certain route exceeds the maximum number of nodes visited by a vehicle that can be assigned to the route, based on a constraint defining a vehicle to visit a specific node and a constraint of a route that defines a visit order of a plurality of nodes.

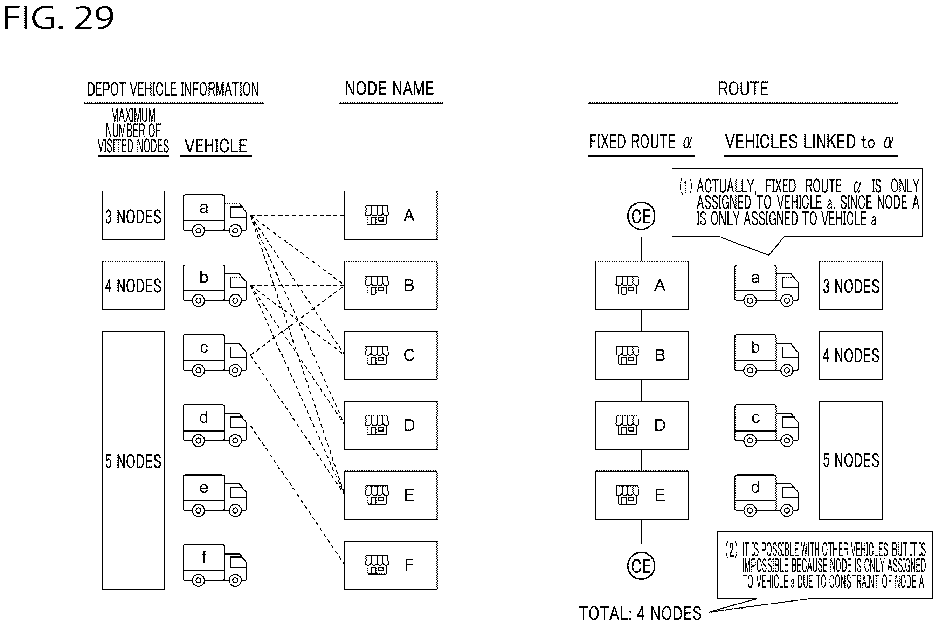

Fig. 29 is a diagram for describing an inconsistency to be detected by the check of ID29. In a case where a fixed route is created without inconsistency based on the vehicle specification for each node and the route fixation (all route fixation, forward-matching route fixation), there may be no vehicle that can be assigned to the fixed route from a viewpoint of the number of nodes. In the example of Fig. 29, the vehicle a is specified as a vehicle that can visit the node A. Therefore, the fixed route α including the node A can be assigned only to the vehicle a, but in that case, the constraint of the maximum number of nodes visited by the vehicle a is violated.

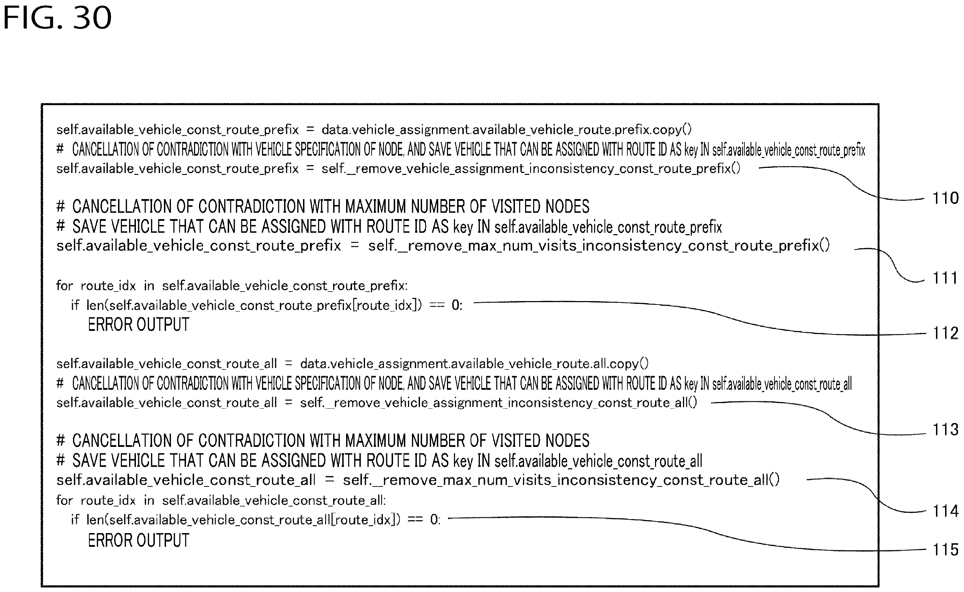

Fig. 30 illustrates an implementation example of a check algorithm of ID29. Data indicating the relevant constraints are as follows.

· data.max_num _visits: maximum number of nodes visited by each vehicle (list)
· data.routing_order.const_route.prefix: specification of forward-matching fixed route (dict)
· data.routing_order.const_route.all: specification of all fixed route (dict)
· data.vehicle_assignment.available_vehicle: vehicle specification for each node (dict)
data.vehicle_assignment.available_vehicle_route.prefix: vehicle specification for each forward-matching fixed route (dict)
· data.vehicle_assignment.available_vehicle_route.all: vehicle specification for each all fixed route (dict)

In a code 110 of Fig. 30, a vehicle candidate that can be assigned for each forward-matching fixed route is identified based on the vehicle specification for each forward-matching fixed route, the specification of the forward-matching fixed route, and the vehicle specification for each node. In a code 111, the number of nodes for each forward-matching fixed route (the number of nodes on the route, referred to as the "number of root nodes") is obtained, and for each forward-matching fixed route, a vehicle satisfying the number of route nodes ≤ the maximum number of visited nodes is obtained as an assignable vehicle from vehicle candidates that can be assigned. In a code 112, an error is detected in a case where there is no assignable vehicle for at least one forward-matching fixed route.

In a code 113 of Fig. 30, a vehicle candidate that can be assigned to each all fixed route is identified based on the vehicle specification for each all fixed route, the specification of the all fixed route, and the vehicle specification for each node. In a code 114, the number of route nodes for each all fixed route is obtained, and for each all fixed route, a vehicle satisfying the number of route nodes ≤ the maximum number of visited nodes is obtained as an assignable vehicle from vehicle candidates that can be assigned. In a code 115, an error is detected in a case where there is no assignable vehicle for at least one all fixed route.

The check of ID30 "route specification that causes a time system contradiction" will be described in detail. The check unit 24 determines that the plurality of constraints are inconsistent, in a case where the check unit 24 detected that there is no vehicle that can be assigned to a route based on a constraint of a route that defines a visit order of a plurality of nodes and a constraint of the predefined available arrival time frame for each of the plurality of nodes.

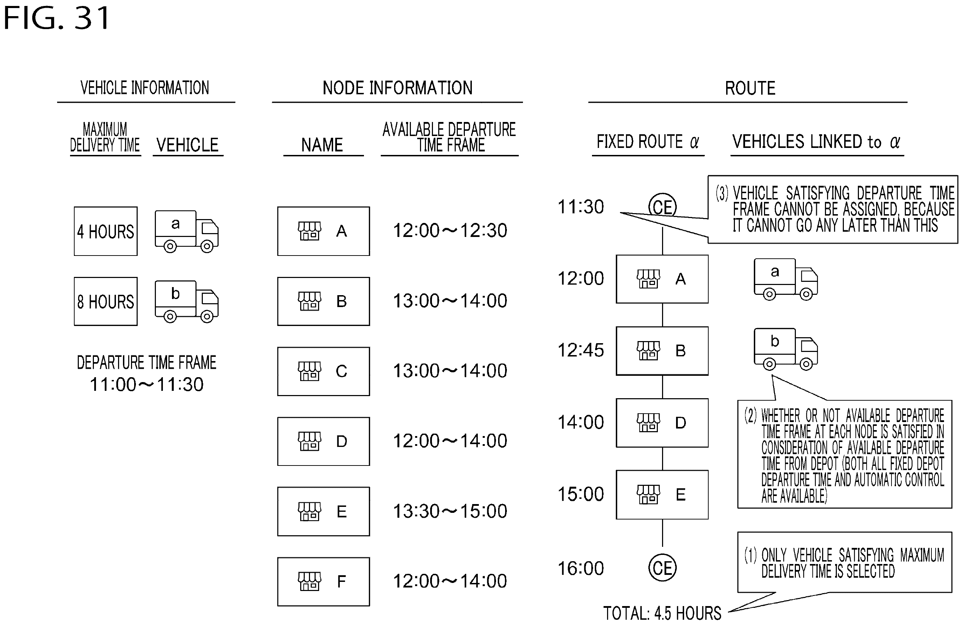

Fig. 31 is a diagram for describing an inconsistency to be detected by the check of ID30. In the check of ID30, it is confirmed whether there is a vehicle that can be assigned to a fixed route (an all fixed route and a forward-matching fixed route) in consideration of time system constraints. In the example of Fig. 31, the available departure time frame at the center (depot) is 11:00 to 11:30. Further, the distance from the center to the node A is 30 minutes, and the distance from the node A to the node B is 45 minutes. Even if a vehicle departs from the center at 11:30, which is the latest departure time, it arrives at the node B at 12:45, which deviates from the available departure time frame of a store B (13:00 to 14:00). Therefore, in the example of Fig. 31, it is not possible to assign a vehicle that satisfies a departure time frame of a node (for example, the node B) of the fixed route α.

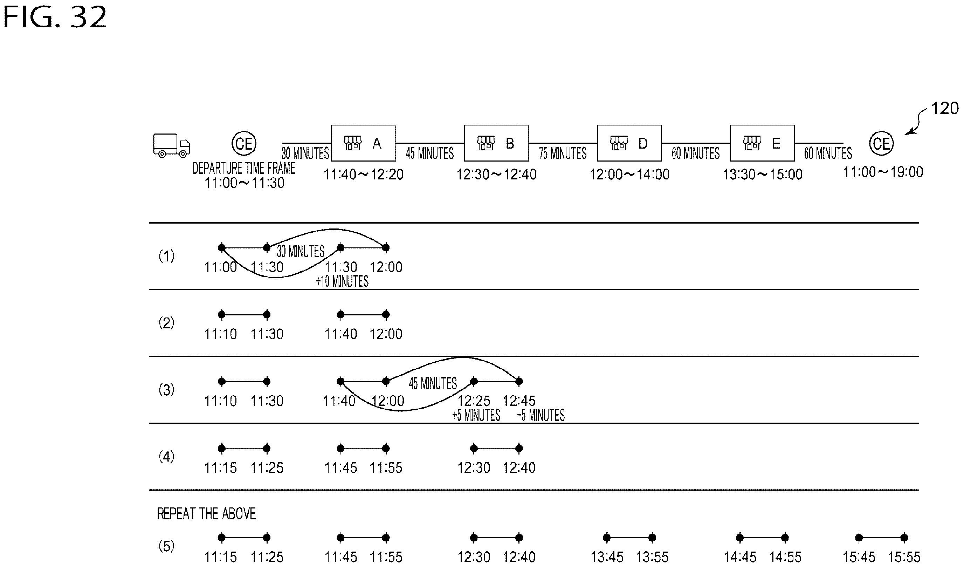

Fig. 32 is a diagram for describing a check algorithm of ID30. The check unit 24 checks whether or not the earliest departure time (synonymous with the earliest arrival time) and the latest departure time (synonymous with the latest arrival time) at each node of a fixed route 120 satisfy the available departure time frame at each node.

(1) to (5) of Fig. 32 illustrates a flow of processing. As shown in (1), the earliest departure time (11:30) and the latest departure time (12:00) of the node A are obtained based on the earliest departure time and the latest departure time of the center and the distance from the center to the node A (30 minutes). Then, a difference between the earliest departure time of the node A and the available departure time frame is obtained as +10 minutes. +10 minutes means that the arrival needs to be delayed by 10 minutes.

Next, as shown in (2), the difference of + 10 minutes is reflected on the earliest departure time of the center and a store A. Specifically, the earliest departure time of the center is changed to 11:10, and the earliest departure time of the node A is changed to 11:40.

Next, as shown in (3), the earliest departure time (12:25) and the latest departure time (12:45) of the node B are obtained based on the earliest departure time and the latest departure time of the node A and the distance from the node A to the node B (45 minutes). Then, the difference between the earliest departure time of the node B and the available departure time frame is obtained as +5 minutes, and the difference between the latest departure time of the node B and the available departure time frame is obtained as -5 minutes. -5 minutes means that the arrival needs to be advanced by 5 minutes.

Next, as shown in (4), the difference of +5 minutes is reflected on the earliest departure time of the center, the store A, and the store B. Specifically, the earliest departure time of the center is changed to 11:15, the earliest departure time of the node A is changed to 11:45, and the earliest departure time of the node B is changed to 12:30. Further, the difference of -5 minutes is reflected on the latest departure time of the center, the store A, and the store B. Specifically, the latest departure time of the center is changed to 11:25, the latest departure time of the node A is changed to 11:55, and the latest departure time of the node B is changed to 12:40.

As shown in (5), the above processing is repeated for the node D, the node E, and the center. When the earliest departure time ≤ the latest departure time is maintained for the center and all the nodes, the check unit 24 determines that there is a vehicle that can be assigned to the fixed route 120, in other words, determines that the plurality of constraints are consistent.

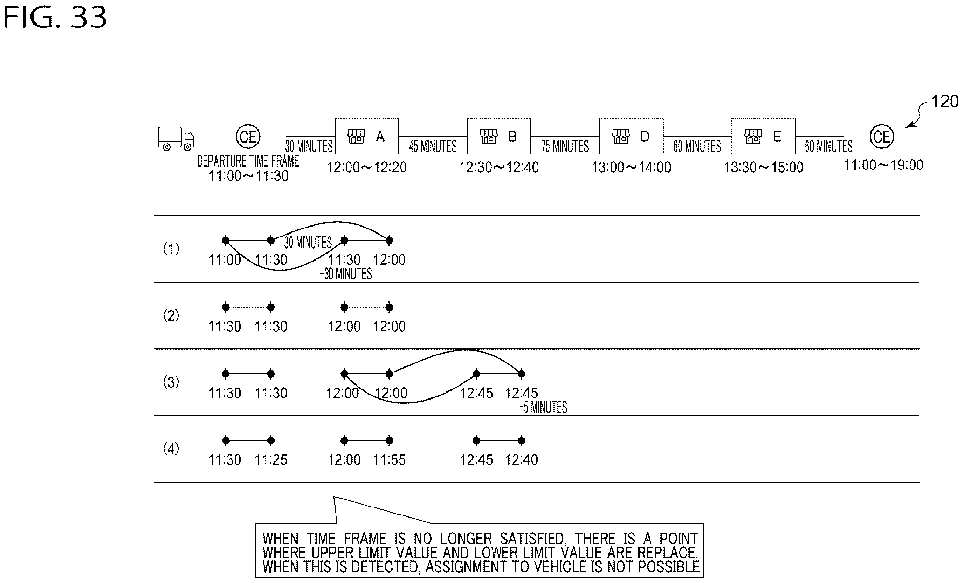

Fig. 33 is also a diagram for describing the check algorithm of ID30. As shown in (1), the earliest departure time (11:30) and the latest departure time (12:00) of the node A are obtained based on the earliest departure time and the latest departure time of the center and the distance from the center to the node A (30 minutes). Then, the difference between the earliest departure time of the node A and the available departure time frame is obtained as +30 minutes.

Next, as shown in (2), the difference of +30 minutes is reflected on the earliest departure time of the center and the store A. Specifically, the earliest departure time of the center is changed to 11:30, and the earliest departure time of the node A is changed to 12:00.

Next, as shown in (3), the earliest departure time (12:45) and the latest departure time (12:45) of the node B are obtained based on the earliest departure time and the latest departure time of the node A and the distance from the node A to the node B (45 minutes). Then, the difference between the latest departure time of the node B and the available departure time frame is obtained as -5 minutes.

Next, as shown in (4), the difference of -5 minutes is reflected on the latest departure time of the center, the store A, and the store B. Specifically, the latest departure time of the center is changed to 11:25, the latest departure time of the node A is changed to 11:55, and the latest departure time of the node B is changed to 12:40. As a result, in Fig. 33, the earliest departure time of the center and each node is later than the latest departure time. In a case where the earliest departure time > the latest departure time occurs at the center or at least one node, the check unit 24 detects an error, that is, determines that there is no vehicle that can be assigned to the fixed route 120, in other words, determines that the plurality of constraints are inconsistent.

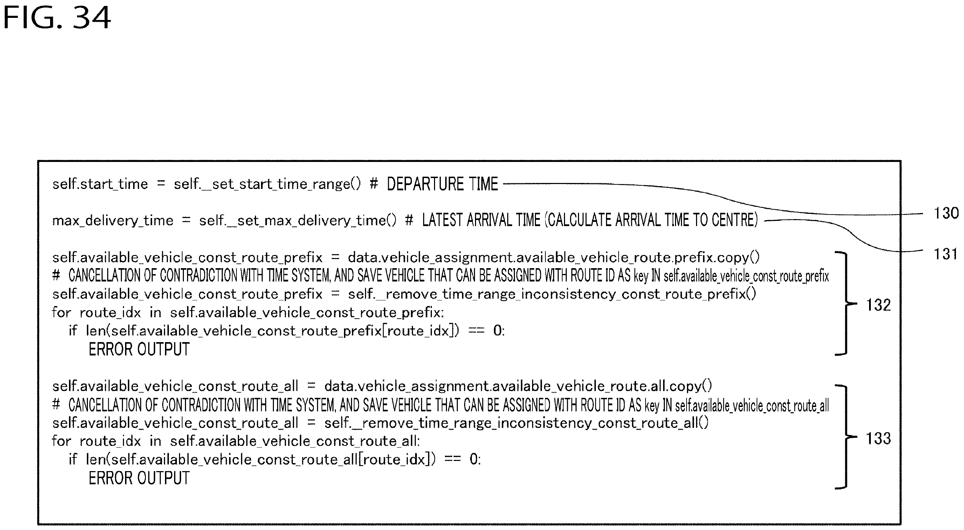

Fig. 34 illustrates an implementation example of the check algorithm of ID30. Data indicating the relevant constraints are as follows.

- data.berth.berth_control: "auto" or "manual"
- data.depot_index: index of depot (int)
- data. edge. time: distance matrix between depot and node, between node and node (two-dimensional list)
- data.max_delivery_time: maximum delivery time for each vehicle (list)
- data.time_windows.available_time: available departure time frame for each node (dict)
- data.routing_order.const_route.prefix: specification of forward-matching fixed route (dict)
- data.routing_order.const_route.all: specification of all fixed route (dict)
- data.vehicle_assignment.available_vehicle: vehicle specification for each node (dict)
- data.vehicle_assignment.available_vehicle_route.prefix: vehicle specification for each forward-matching fixed route (dict)
- data.vehicle_assignment.available_vehicle_route.all: vehicle specification for each all fixed route (dict)

Also, in the check of ID30, it is confirmed whether or not there is a vehicle that can be assigned to the fixed route, similarly to the check of ID28 "excess of the upper limit of the load volume in route fixation". In a code 130 of Fig. 34, when berth_control is "auto", that is, when a berth departure time of each vehicle is automatically determined, the available departure time frame of the depot is set from the earliest departure time to the latest departure time of the depot [a, b]. Further, when berth_control is "manual", that is, when the berth departure time of each vehicle is fixed (fixed time specified by a user), the available departure time frame of the depot is set to the fixed time of each vehicle specified by the user [c, c] .

In a code 131 in Fig. 34, when berth_control is "auto", the latest arrival time of each vehicle to the depot is set to a lower limit value of the available departure time frame from the depot (the latest departure time) + the maximum delivery time of each vehicle. Further, when berth _control is "manual", the latest arrival time of each vehicle to the depot is set to the lower limit value of the available departure time frame of each vehicle from the depot (here, the fixed time of each vehicle) + the maximum delivery time of each vehicle.

In a code 132 in Fig. 34, a vehicle ID that can be assigned to a forward-matching fixed route based on the above check algorithm is saved in a dictionary, and an error is detected in a case where there is no vehicle that can be assigned to at least one forward-matching fixed route. In a code 133 of Fig. 34, a vehicle ID that can be assigned to an all fixed route based on the above check algorithm is saved in the dictionary, and an error is detected in a case where there is no vehicle that can be assigned to at least one all fixed route.

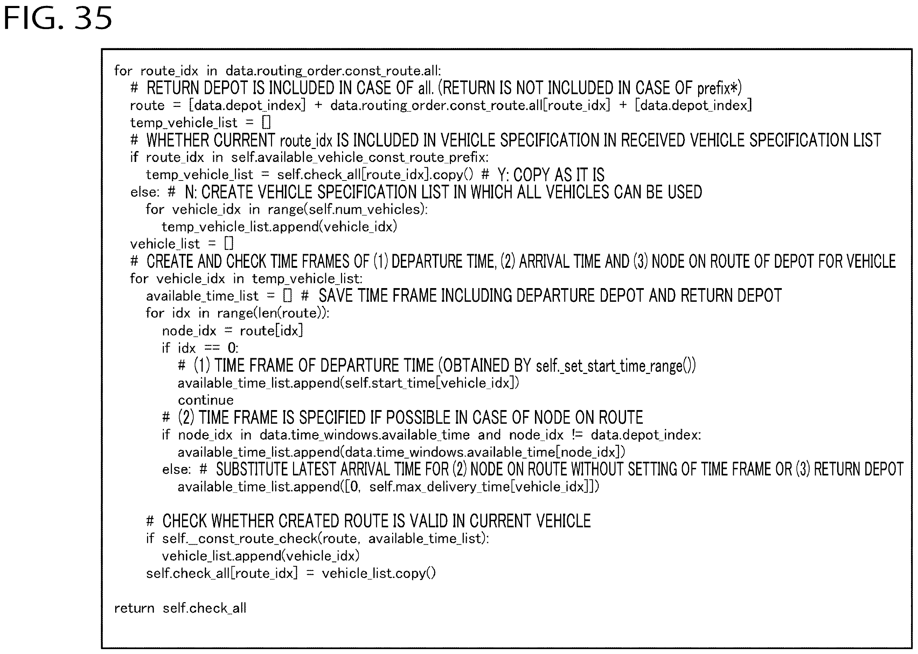

Fig. 35 also illustrates an implementation example of the check algorithm of ID30. The figure illustrates details of "self._remove_time_range_inconsistency_const_route_all ()" in Fig. 34. Note that, "self._remove_time_range_inconsistency_const_route_prefix ()" in Fig. 34 is also implemented in a similar manner. In codes in Fig. 35, the available departure time frame for each node on the fixed route 120 shown in Figs. 32 and 33 is set. Further, in the codes of Fig. 35, only the vehicle satisfying the available departure time frame for each node on the fixed route 120 is set in the above dictionary.

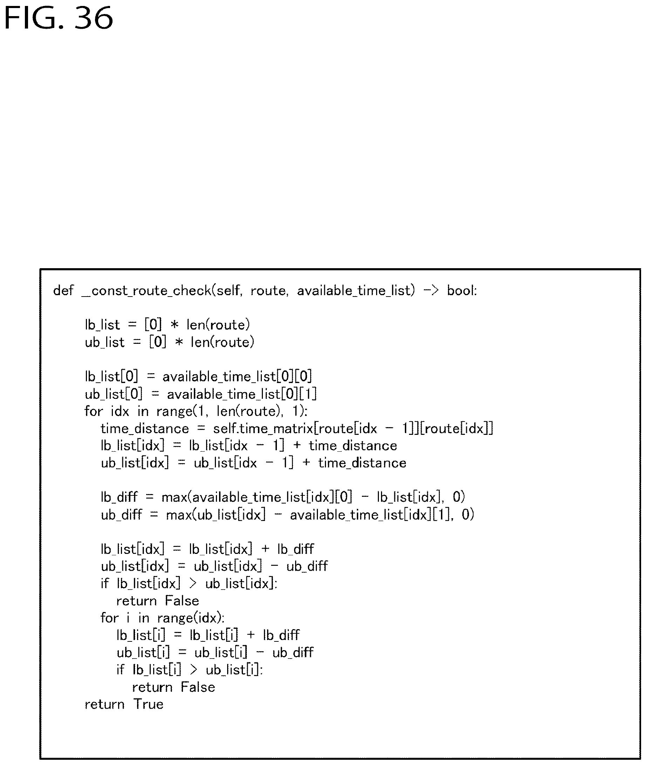

Fig. 36 also illustrates an implementation example of the check algorithm of ID30. The figure illustrates details of "self. _const_route_check (route, available _time _list)" in Fig. 35. Codes of Fig. 36 implements processing (1) to (5) of Fig. 32 and processing (1) to (4) of Fig. 33. In other words, in the codes of Fig. 36, processing of editing the departure time frame of the center and each node based on the distance between the center and the node and the distance between the nodes, and checking whether or not the earliest departure time > the latest departure time occurs at the center or at least one node is executed.

The check of ID31 "excess of the number of specified delivery orders (specification of available delivery vehicle)" will be described in detail. Based on a first constraint defining the first visited node, a second constraint defining the last visited node, and a third constraint defining the vehicles to visit the first visited node and the last visited node, the check unit 24 determines that the plurality of constraints are inconsistent in a case where the number of first visited nodes and last visited nodes exceeds the number of moving bodies defined by the third constraint.

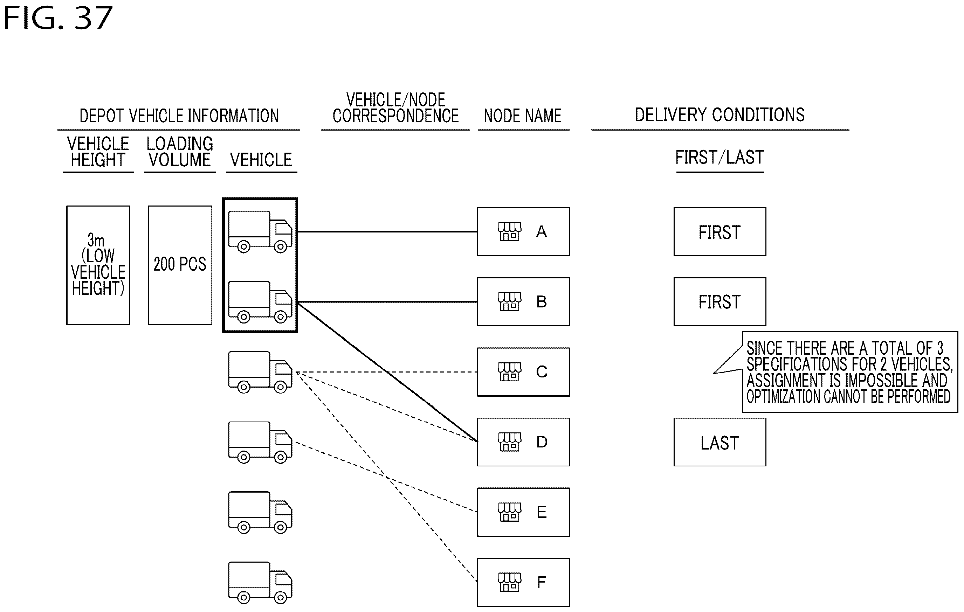

Fig. 37 is a diagram for describing an inconsistency to be detected by the check of ID31. In a case where the number of first visited nodes and last visited nodes to be assigned to a particular vehicle group based on the specification of available delivery vehicles for each node is greater than the number of vehicles of that vehicle group, vehicle assignment to each node cannot be normally performed. In the example of Fig. 37, since there are three node specifications for two vehicles, vehicle assignment cannot be normally performed. The three node specifications here are the specification of two first visited nodes (node A, node B) and the specification of one last visited node (node D).

In the check of ID31, the check unit 24 solves an assignment problem (different from the general assignment problem described above) and checks whether or not a solution exists. The assignment problem is a problem of finding a permutation n: V → {1, ..., n} that minimizes the following Formula 7 when a set V = {1, ..., n} and an n × n matrix C = [$c_{ij}$] are given.

$$\sum_{i \in V} c_{i,\pi(i)} \quad \cdots \text{ (Formula 7)}$$

For clarity, the assignment problem is interpreted as a problem of assigning tasks to resources. Consider that there are n tasks (e.g., nodes) and they are assigned to n resources (e.g., vehicles). Tasks and resources are compatible, and a cost when a task i is assigned to a resource j is $c_{ij}$. When at most only one task can be processed by one resource and one resource is always assigned to one task, a problem of minimizing the total cost is the assignment problem.

Using a 0-1 variable $x_{ij}$, which is 1 when the task i is assigned to the resource j and 0 otherwise, the assignment problem can be formulated as follows.

$$minimize \quad \sum_{i,j \in V} c_{ij}x_{ij} \qquad \cdots (\text{Formula } 8)$$
$$s.t.$$
$$\sum_{j \in V} x_{ij} = 1 \quad \forall i \in V \qquad \cdots (\text{Formula } 9)$$
$$\sum_{i \in V} x_{ij} = 1 \quad \forall j \in V \qquad \cdots (\text{Formula } 10)$$
$$x_{ij} \in \{0,1\} \qquad \forall i,j \in V \qquad \cdots (\text{Formula } 11)$$

Formula 8 is an objective function, and Formula 9 to Formula 11 are constraint conditions.

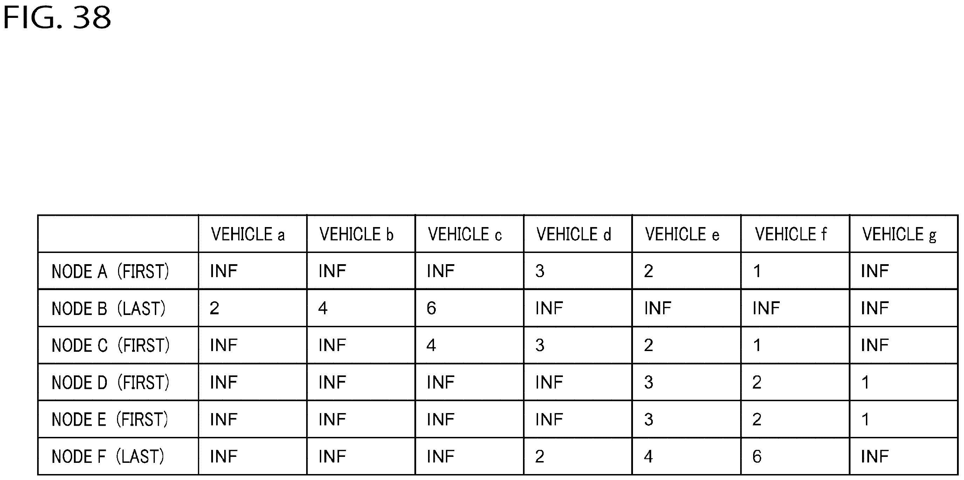

Fig. 38 is a diagram for describing a check algorithm of ID31. In a case where the first visited node and the last visited node are assigned to a vehicle, the relationship between each node and the vehicle can be defined as shown in the table of Fig. 38. In the figure, the node A, the node C, the node D, and the node E are first visited nodes, and the node B and the node F are last visited nodes. Further, for the vehicle a to vehicle g in the figure, the delivery route is determined in the order of the vehicle g, the vehicle f, ..., the vehicle b, and the vehicle a.

In a case where the vehicle d, the vehicle e, and the vehicle f are specified at the node A (first visited node), the values (can also be called costs) of the cells $a_{ij}$ corresponding to these vehicles are set to 3, 2, and 1 in descending order, and the values of the remaining cells are set to INF. Further, the values of the cells corresponding to the available delivery vehicles to the last visited node are set to 2, 4, and 6 in ascending order, that is, set to twice the value of the first visited node. A reason for changing the value of the cell will be described later. Note that, all the values of the cell $a_{ij}$ corresponding to the available delivery vehicle may be 1 as long as only the check of ID31 is performed.

It can be converted into an assignment problem by making each cell of node × vehicle correspond to $x_{ij}$ having a value of 0 or 1. For example, the row of the node A is defined as Formula 12.

```
x_aA + x_bA + x_cA ... x_gA = 1      ...  (Formula 12)
```

Further, the column of the vehicle c is defined as Formula 13.

```
x_cA + x_cB + x_cC ... x_cF = 1      ...  (Formula 13)
```

In the example, optimization is performed by regarding $c_{ij}$ as a cost, and correction is performed so that the number of nodes ≤ the number of vehicles. Specifically, in a case where (the number of first visited nodes + the number of last visited nodes) > the number of vehicles (a constraint violation at this point), a provisional vehicle with INF set in all rows is additionally prepared. In this case, no matter how much optimization is performed, an objective function value is INF. In a case where the objective function value becomes greater than or equal to INF when a vehicle is assigned to each node, the check unit 24 detects an error as a constraint violation.

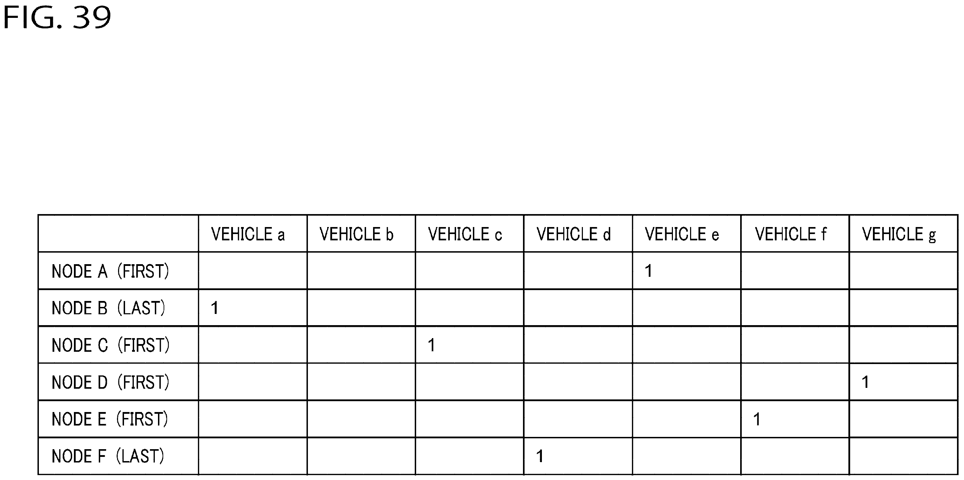

Fig. 39 is also a diagram for describing the check algorithm of ID31. The figure illustrates that the node A to node F have been correctly assigned to the vehicles a, c to g. In the example, the solution is found using Python's numerical calculation library scipy (applying the Hungarian method implemented in scipy). In the Hungarian method in scipy, columns in which constraint conditions are not satisfied are rejected, and a feasible solution is output. In a case where there are more rows than columns, an INF column is added to create a state where the objective function value automatically exceeds the INF. Further, in a case where there are more columns than rows, by operations of scipy, there are no more columns than rows, and vehicle assignment is performed.

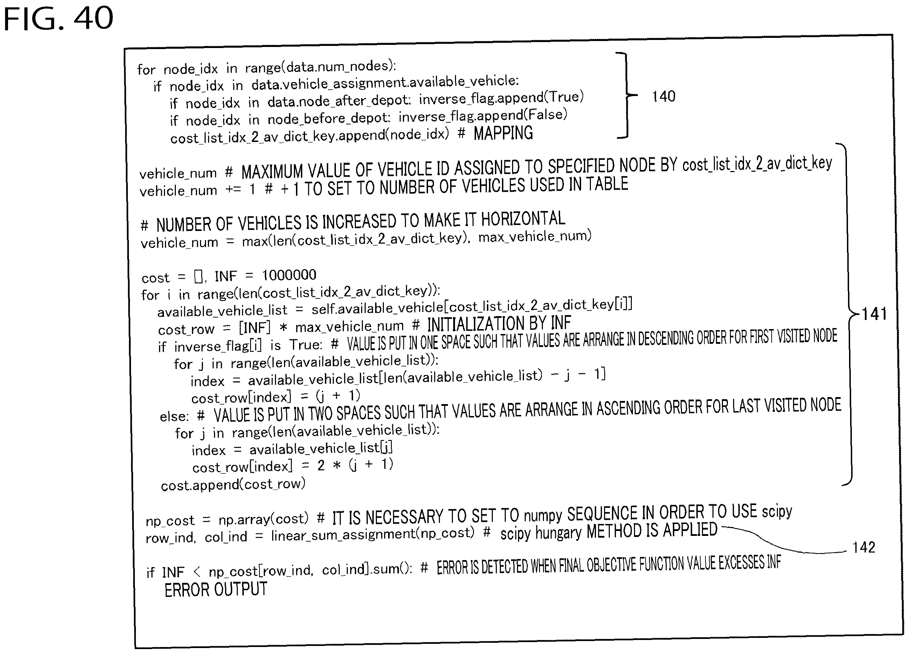

Fig. 40 illustrates an implementation example of the check algorithm of ID31. Input data indicating the relevant constraints are as follows.

· data.num_nodes: number of visited nodes (int)
· data.depot_index: index of depot (int)
• data.num_vehicles: number of vehicles (int)
• data.vehicle_assignment.available_vehicle: vehicle specification for each node (dict)
· data.routing_order.node_after_depot: specification of first visited node (list)
· data.routing_order.node_before_depot: specification of last visited node (list)

In a code 140 of Fig. 40, it is set that the first visited node saves data in descending order and the last visited node saves data in ascending order. In a code 141 of Fig. 40, data corresponding to the table shown in Fig. 38 is set. The "liner_sum_assignment" function of scipy indicated by a code 142 of Fig. 40 solves the problem (assignment problem) indicated by the formula corresponding to Formula 8 to Formula 11. Further, a calculation scale can be reduced by using the Hungarian method. When a final objective function value exceeds the INF, the check unit 24 detects an error, that is, determines that the plurality of constraint conditions are inconsistent.

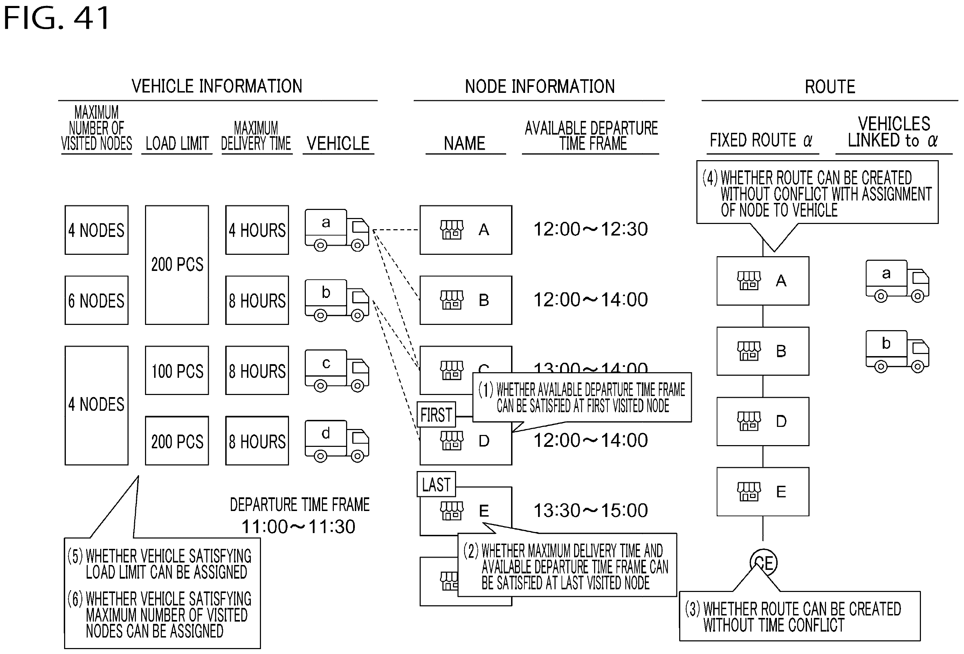

The check of ID32 "time system × assignment system" will be described in detail. Fig. 41 is a diagram for describing an inconsistency to be detected by the check of ID32. The check unit 24 determines whether or not vehicle assignment is possible that simultaneously satisfies the specification of available delivery vehicles for each node, the load volume limit for each vehicle, the maximum number of nodes visited by each vehicle, the available departure time frame for each node, the maximum delivery time for each vehicle, the specification of the first visited node, the specification of the last visited node, and the route fixation (all fixation and forward-matching fixation). In other words, the check unit 24 determines whether or not a plurality of constraints other than the constraint on the berth can be simultaneously satisfied. The check of ID32 includes checks (1) to (6) shown in Fig. 41.

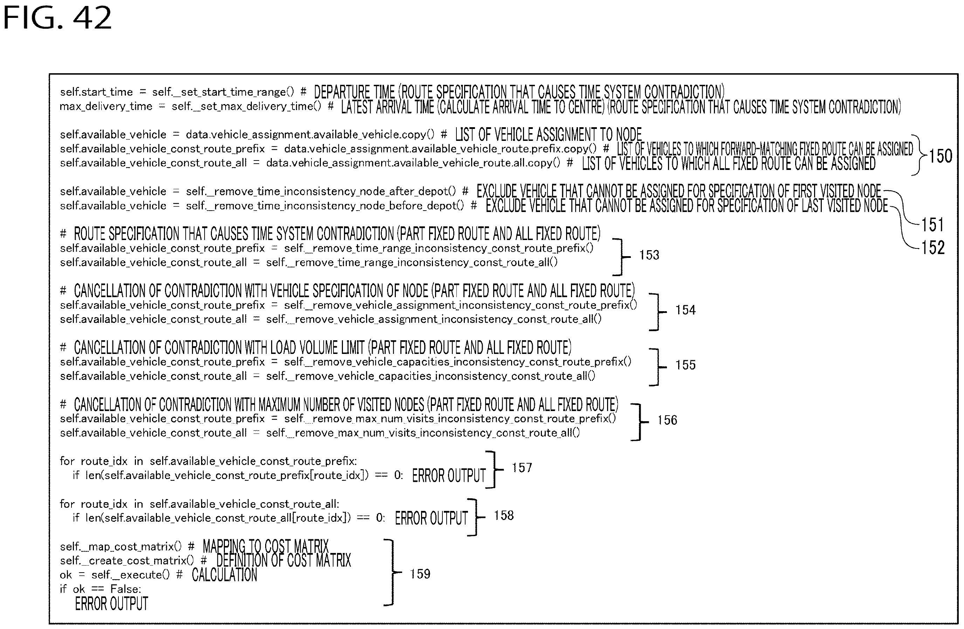

Fig. 42 illustrates an implementation example of a check algorithm of ID32. In a code 150 of Fig. 42, a list of vehicles to which a forward-matching fixed route can be assigned and a list of vehicles to which an all fixed route can be assigned are generated. In a code 151 to a code 156, individual checks are performed for each of the forward-matching fixed routes and the all fixed routes, and vehicles that violate the constraints are sequentially excluded from the list of vehicles.

Specifically, in the code 151, for the specification of the first visited node, processing (self._remove_time_inconsistency_node_after_depot()) for excluding vehicles that cannot be assigned in consideration of the departure time from the depot is executed. In the code 152, for the specification of the last visited node, processing (self._remove_time_inconsistency_node_before_depot()) for excluding vehicles that cannot be assigned in consideration of the latest arrival time to the depot is executed.

In the code 153, processing similar to the check of ID30 "route specification that causes a time system contradiction" is executed, and vehicles that cannot be assigned to a certain fixed route are excluded from the list of vehicles for the fixed route. In the code 154, processing similar to the check of ID26 "excess of the upper limit of the load volume due to delivery vehicle specification" is executed, and vehicles that cannot be assigned to a certain fixed route are excluded from the list of vehicles for the fixed route.

In the code 155, processing similar to the check of ID28 "excess of the upper limit of the load volume in route fixation" is executed, and vehicles that cannot be assigned to a certain fixed route are excluded from the list of vehicles for the fixed route. In the code 156, processing similar to the check of ID29 "excess of the maximum number of visited nodes in route fixation" is executed, and vehicles that cannot be assigned to a certain fixed route are excluded from the list of vehicles for the fixed route.

In a code 157, an error is detected in a case where there is no vehicle that can be assigned for each of the forward-matching fixed routes. In a code 158, an error is detected in a case where there is no vehicle that can be assigned for each of the all fixed routes.

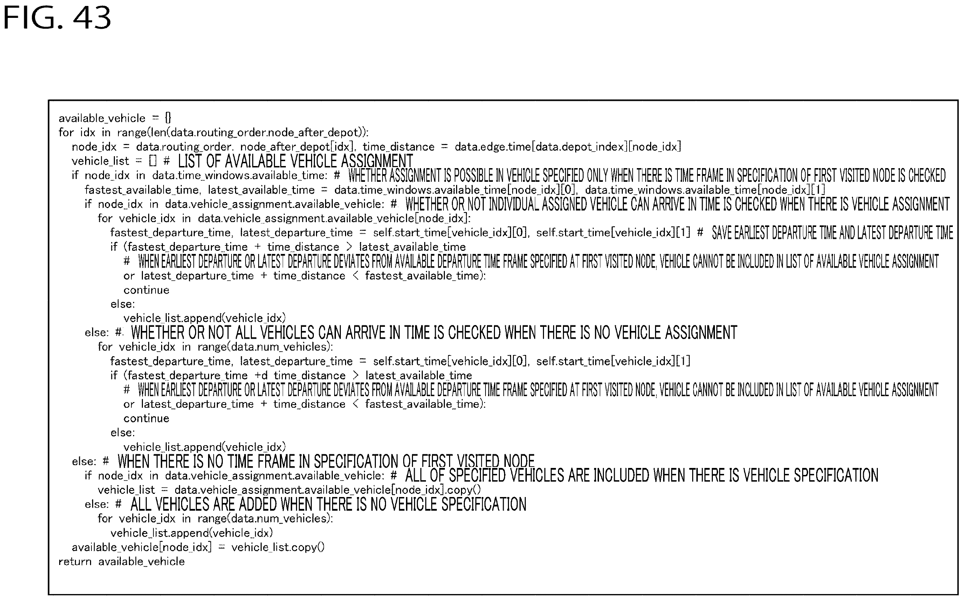

Fig. 43 also illustrates an implementation example of the check algorithm of ID32. The figure illustrates details of "self._remove_time_inconsistency_node_after_depot()" in Fig. 42. In this function, vehicles that cannot arrive at the latest time of the available departure time frame of the first visited node at the earliest departure from the depot, or vehicles that arrives earlier than the earliest time of the available departure time frame of the first visited node at the latest departure from the depot are excluded from the list of vehicles.

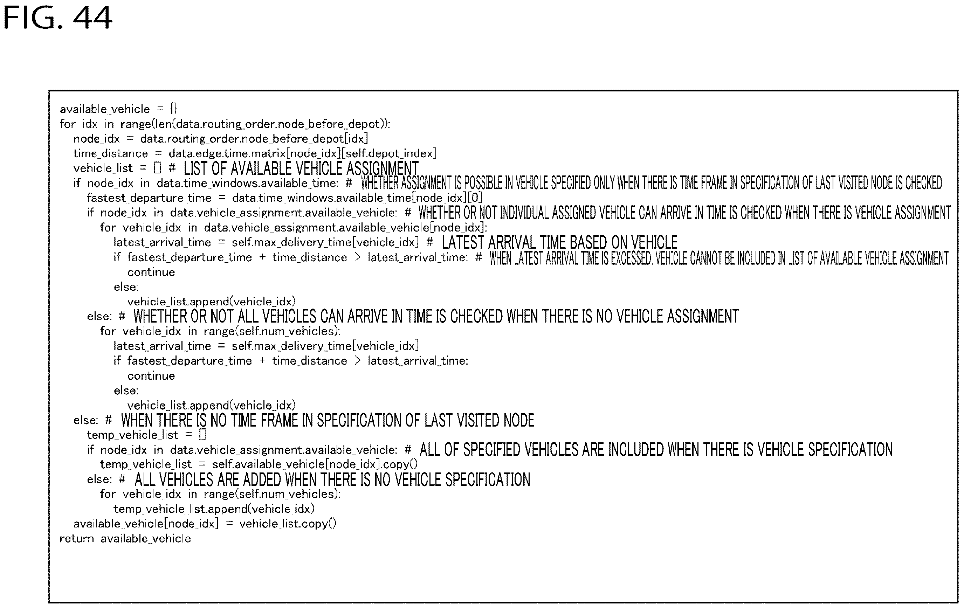

Fig. 44 also illustrates an implementation example of the check algorithm of ID32. The figure illustrates details of "self._remove_time_inconsistency_node_before_depot()" in Fig. 42. In this function, vehicles that cannot arrive at the latest arrival time to the depot at the earliest departure from the last visited node are excluded from the list of vehicles.

The description returns to Fig. 42. In a code 159 in Fig. 42, the assignment problem is solved by creating a table based on vehicles that can be assigned to each of the first visited node, the last visited node, and the fixed route, similarly to the check of ID31"excess of the number of specified delivery orders (specification of available delivery vehicles)". As the data of the vehicle that can be assigned to the fixed route, dictionary data (self.available_vehicle_const_route_prefix) of the vehicle that can be assigned to the forward-matching fixed route and dictionary data (self.available_vehicle_const_route_all) of the vehicle that can be assigned to the all fixed route, which are indicated by the code 156 in Fig. 42, are used.

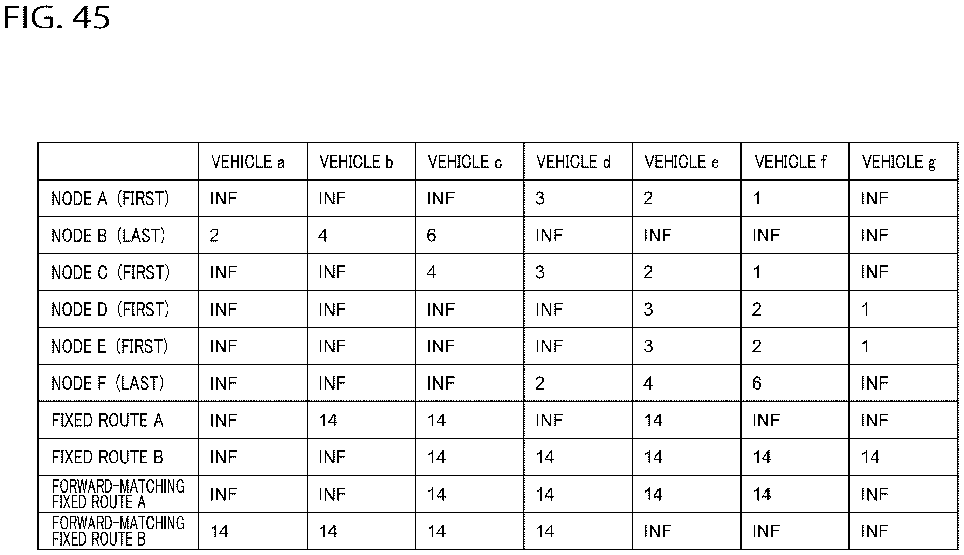

Fig. 45 is a diagram for describing the check algorithm of ID32. In the check of ID32, all fixed routes (fixed routes A and B in the figure) and forward-matching fixed routes (forward-matching fixed routes A and B in the figure) are also considered. In the cells corresponding to the first visited node and the last visited node, values are set with the same rules as for the check of ID31. On the other hand, a value of the number of vehicles × 2 is set in the cells corresponding to the all fixed route and the forward-matching fixed route.

In the code 159 of Fig. 42, the table (a cost matrix) shown in Fig. 45 is generated (self._map_cost_matrix()) based on the vehicle specification at the first visited node, the vehicle specification at the last visited node, and the vehicle specification at the fixed route, the cost of each cell is set in the cost matrix (self._create_cost_matrix()), and the assignment problem is solved (self._execute()) based on the cost matrix. Both functions are the same processing as the check of ID31 "excess of the number of specified delivery orders (specification of available delivery vehicles)".

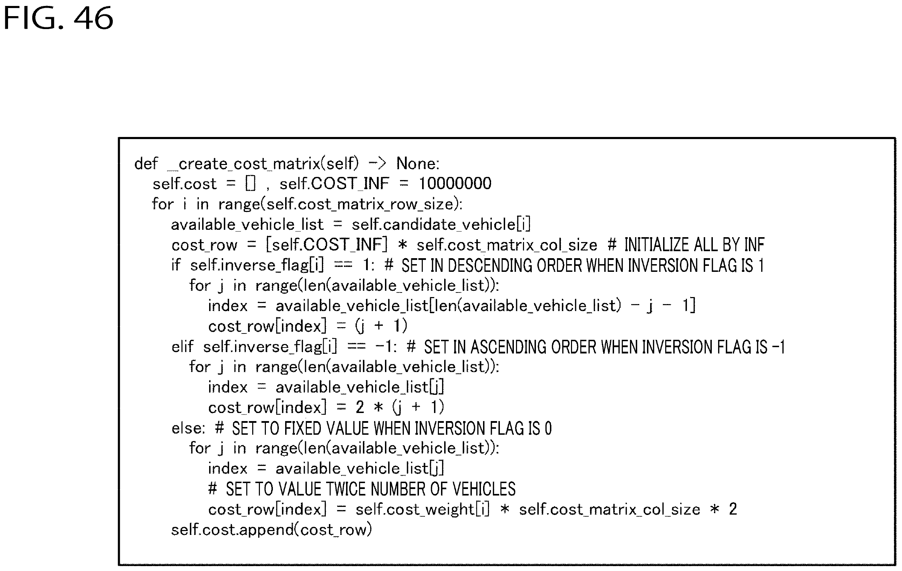

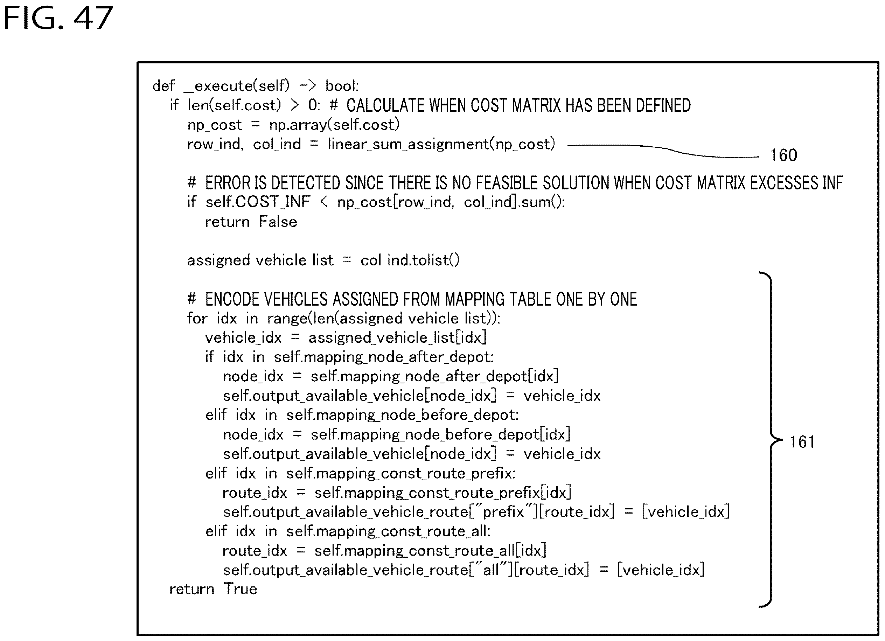

Fig. 46 illustrates an implementation example of the check algorithm of ID32. The figure illustrates details of "self._create_cost_matrix()" in Fig. 42. Fig. 47 also illustrates an implementation example of the check algorithm of ID32. The figure illustrates details of "self._execute()" in Fig. 42. In a code 160 of Fig. 47, a solution to the assignment problem is derived using the "liner _sum _assignment" function of scipy. In a case where the solution to the assignment problem exceeds the INF, the check unit 24 detects an error because there is no feasible solution. Note that, a code 161 of Fig. 47 is a code that is not included in the implementation of the example, and will be described in a modification to be described later.

Next, conversion processing by the converter 26 of the delivery plan support system 16 will be described in detail. The converter 26 converts constraint data in consideration of the nature of the algorithm applied to the determination of the delivery route by the delivery plan generator 30.

First, the nearest neighbor algorithm, which is a route derivation algorithm used by the delivery plan generator 30, will be described. In the nearest neighbor algorithm, a search is performed so as to connect a node of current interest and another node closest to the node of interest. For example, the delivery plan generator 30 stacks routes so as to satisfy {$\Sigma$ (route load volume) $\leq$ load volume limit of a vehicle} and satisfy {$\Sigma$ (travel time + store staying time) $\leq$ maximum delivery time of a vehicle}.

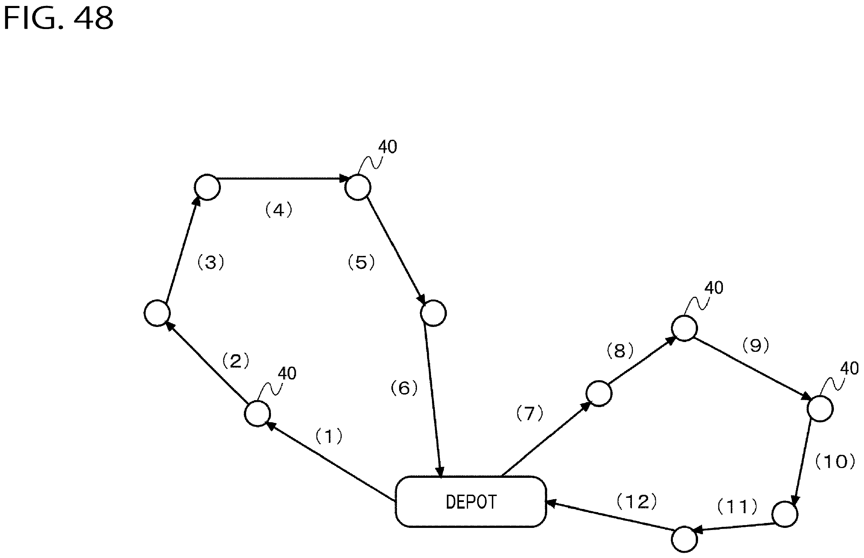

Fig. 48 illustrates an example of path derivation using the nearest neighbor algorithm. In the example of Fig. 48, as a route for a first vehicle, a route is set in which the first vehicle departs from the depot at (1), goes around a plurality of nodes 40, and then returns to the depot at (6). Subsequently, a route for a second vehicle different from the first vehicle is created from (7). In this way, the delivery plan generator 30 sequentially determines delivery routes for a plurality of vehicles using the nearest neighbor algorithm.

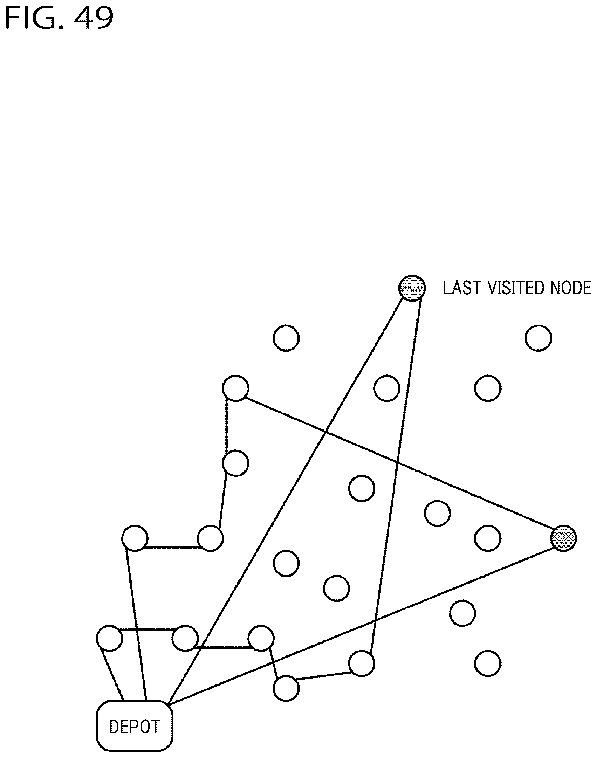

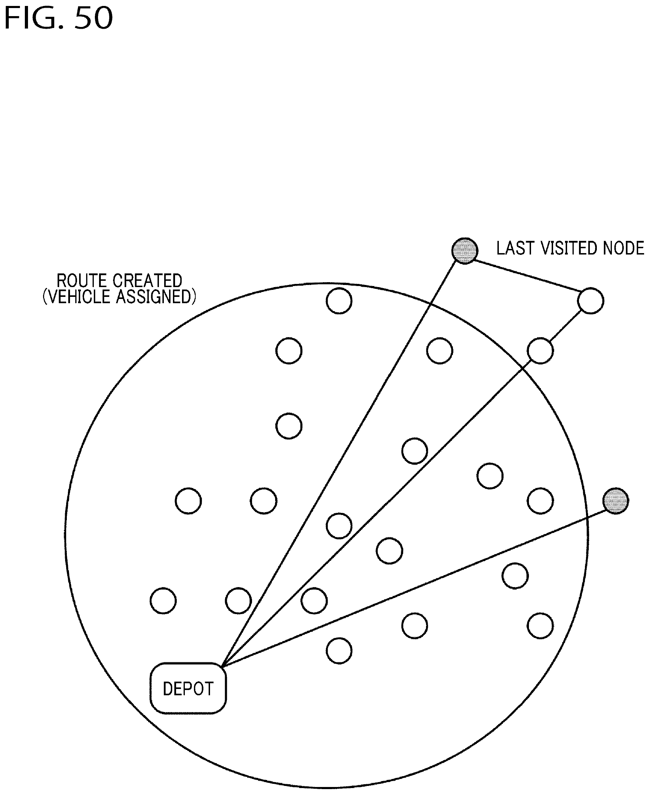

Figs. 49 and 50 illustrate examples of vehicle assignment to the last visited node. Fig. 49 illustrates an example in which the last visited node is assigned to a vehicle that is relatively earlier in the order of delivery route determination by the delivery plan generator 30 (hereinafter, also referred to as an "earlier determined vehicle"). When the last visited node is assigned to the earlier determined vehicle, nodes that are close to the depot and nodes that are far from the depot are likely to be mixed within one route, and a constraint violation of the maximum delivery time of the vehicle and a constraint violation of the available departure time frame of the node are likely to occur. Further, many vehicles are required to keep these constraints of the time system, and it is likely to be difficult to find a feasible solution.

Fig. 50 shows an example in which the last visited node is assigned to a vehicle that is relatively later in the order of delivery route determination by the delivery plan generator 30 (hereinafter, also referred to as a "later determined vehicle"). When the last visited node is assigned to the later determined vehicle, a route connecting only nodes that are away from the depot is likely to be created, and a route including only one node (here, the last visited node) (also referred to as a "one-node route") is likely to be created. As a result, reworking in a case where a constraint violation occurs can be reduced, and derivation of a feasible solution can be facilitated.

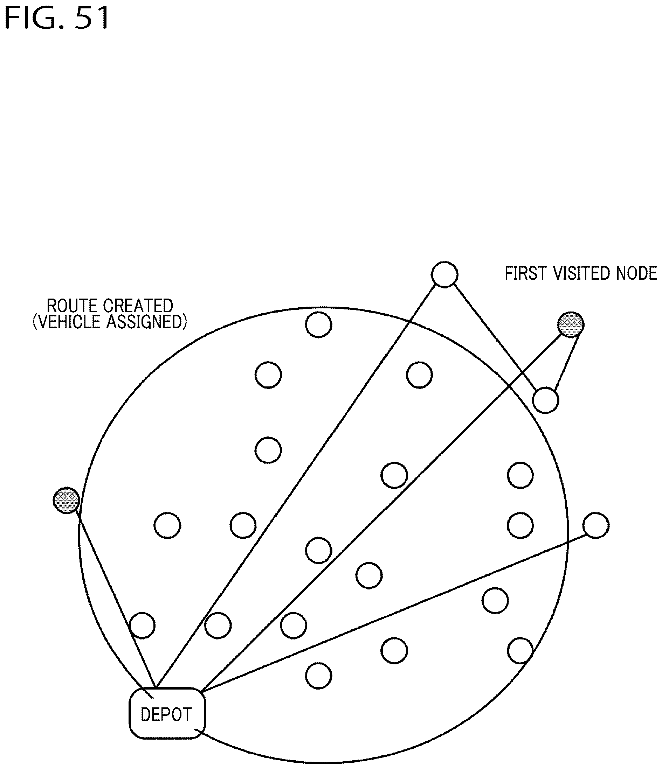

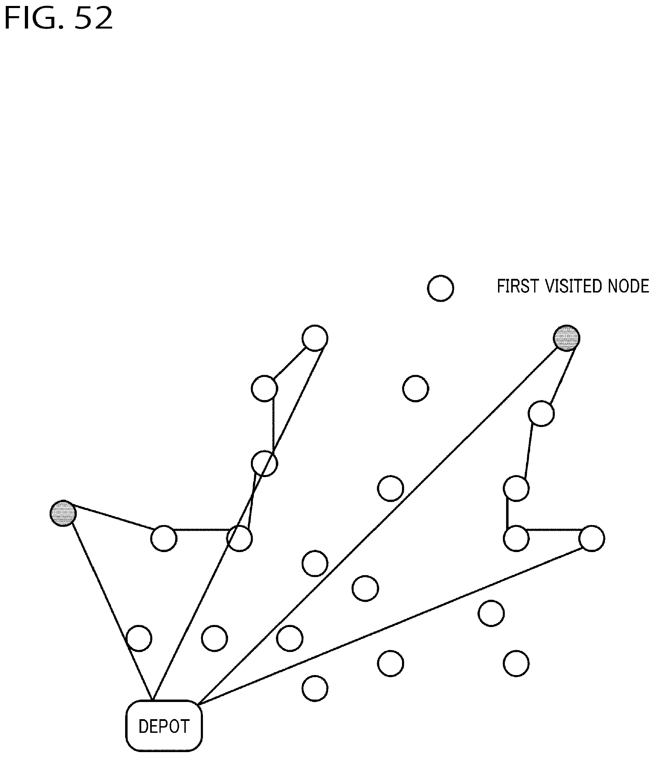

Figs. 51 and 52 illustrate examples of vehicle assignment to the first visited node. Fig. 51 illustrates an example of assigning the first visited node to a later determined vehicle. When the first visited node is assigned to the later determined vehicle, a one-node route including only the first visited node is likely to be created, a one-node route including only nodes other than the first visited node is also likely to be created, and an inefficient route is likely to be created. Further, since the number of routes increases, the vehicle is likely to be insufficient, and it is likely to be difficult to find a feasible solution.

Fig. 52 illustrates an example of assigning the first visited node to an earlier determined vehicle. When determining a route of the earlier determined vehicle, there are many nodes that are not assigned to the vehicle, and the route can be connected from the first visited node to another node in its vicinity, making it easy to create an efficient route. As a result, derivation of a feasible solution can be facilitated.

Based on the above, it can be said that it is better to assign the last visited node to a vehicle (a later determined vehicle) that is relatively later in the order of delivery route determination, while it is better to assign the first visited node to a vehicle (an earlier determined vehicle) that is relatively earlier in the order of delivery route determination. Further, the fixed route (all fixed route and forward-matching fixed route) needs to be assigned to any one of the vehicles. Of course, the constraints of the load volume limit and the maximum number of visited nodes need to be satisfied. Further, the constraints of the vehicle specification specified at each node needs to be satisfied, which is the same for the first visited node and the last visited node.

Further, it is necessary to assign a vehicle that can arrive at the available departure time frame of the first visited node to the first visited node. Further, it is necessary to assign a vehicle that can arrive in time for the latest arrival time of the depot to the last visited node. Further, it is necessary to assign a vehicle that can keep the available departure time frame of each node to the fixed route. When vehicles are assigned to the first visited node, the last visited node, and the fixed route so as to satisfy these conditions, it is possible to efficiently determine the delivery route by the delivery plan generator 30.

Therefore, the converter 26 converts a constraint that is input from the front system 14 and specifies the vehicle to visit the last visited node so as to preferentially assign the last visited node to the later determined vehicle. In addition, the converter 26 converts a constraint that is input from the front system 14 and specifies the vehicle to visit the first visited node so as to preferentially assign the first visited node to the earlier determined vehicle.

In the example, the constraint that specifies the vehicle to visit the last visited node and the constraint that specifies the vehicle to visit the first visited node are common, and are also referred to as "vehicle specification constraints" hereinafter. In other words, the vehicle specification constraints include a constraint that specifies a vehicle to visit the last visited node and a constraint that specifies a vehicle to visit the first visited node, and the converter 26 converts the vehicle specification constraints.

Specifically, the converter 26 executes processing similar to the check of ID32 "time system $\times$ assignment system". The converter 26 solves the assignment problem by creating a cost matrix (a table as shown in Fig. 45) based on vehicles that can be assigned to each of the first visited node, the last visited node, and the fixed route.

The cost matrix of the assignment problem will be described with reference to Fig. 45 again. As described above, the order of delivery route determination by the delivery plan generator 30 is the order of the vehicle g, the vehicle f, ..., the vehicle b, and the vehicle a. Since it is better to assign the first visited node to an earlier determined vehicle, the cost (also referred to as strength) is set to be smaller for a vehicle that is earlier in the order of delivery route determination among the vehicles specified at the first visited node. On the other hand, since it is better to assign the last visited node to a later determined vehicle, the cost (also referred to as strength) is set to be smaller for a vehicle that is later in the order of delivery route determination among the vehicles specified at the last visited node.

Further, according to findings of the present inventor, it is more important to assign the last visited node to a later determined vehicle than to assign the first visited node to an earlier determined vehicle from a viewpoint of facilitating the solution of the delivery route. Therefore, the cost set for the vehicle specified at the last visited node is made greater than the cost set for the vehicle specified at the first visited node. In the example, the cost set for the vehicle specified at the last visited node is set to twice the cost set for the vehicle specified at the first visited node.

Since the fixed route may be assigned to any one of the vehicles, the cost may be any value as long as it is less than the INF. In the example, an available maximum value (specifically, the number of vehicles $\times$ 2) is set as the cost of the vehicle specified on the fixed route in order to emphasize that the assigned vehicle is not very meaningful.

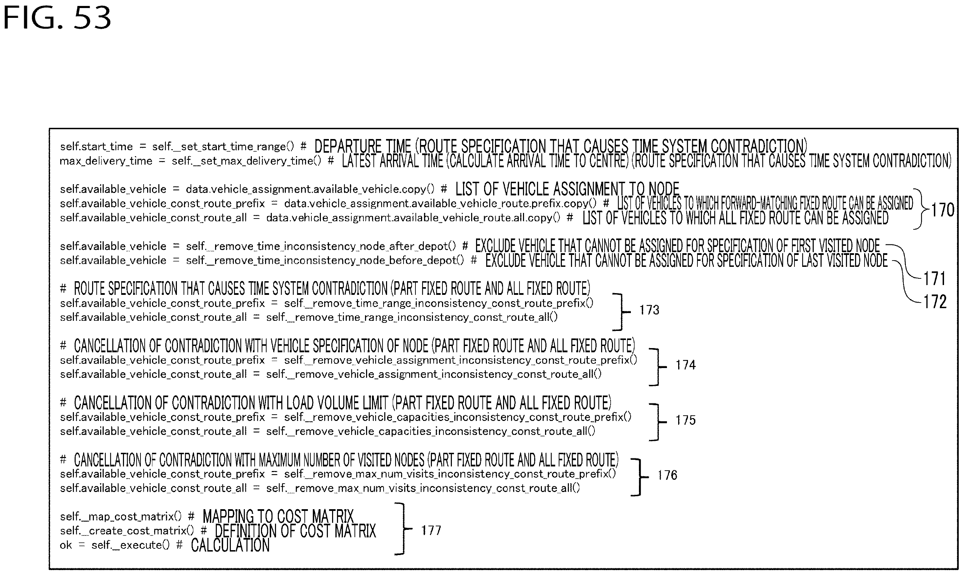

Fig. 53 illustrates an implementation example of the converter 26. A code 170 to a code 176 of Fig. 53 are the same as the code 150 to the code 156 of Fig. 42 described in connection with the check of ID32. However, since presence or absence of a constraint inconsistency has been confirmed in the check of ID32, error detection processing is not executed. A code 177 of Fig. 53 corresponds to the code 159 of Fig. 42.

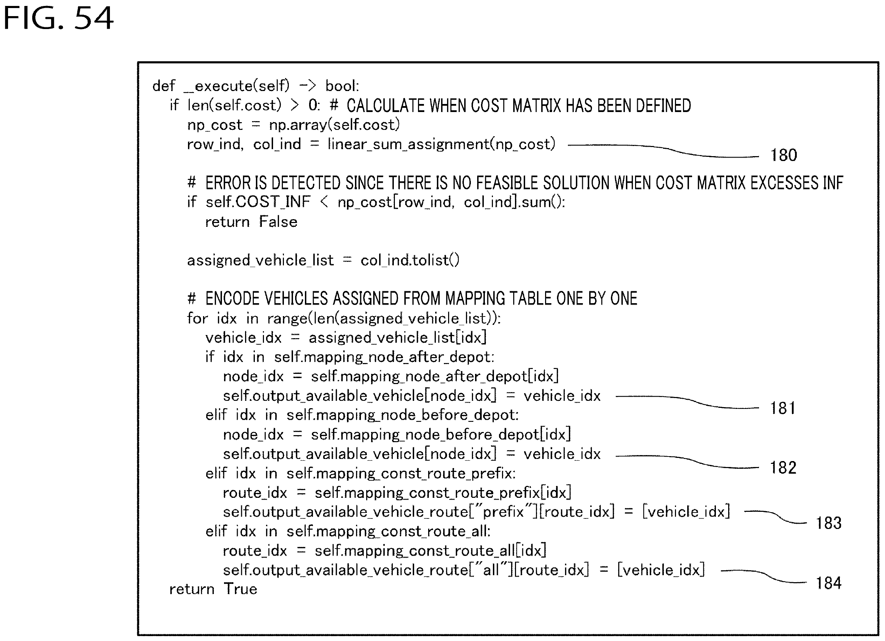

Fig. 54 also illustrates an implementation example of the converter 26. The figure corresponds to Fig. 46, and illustrates details of "self._execute()" in Fig. 53. In a code 180, a solution to the assignment problem is derived using the "liner _sum _assignment" function of scipy of scipy. Depending on settings of the cost in the cost matrix, a solution is derived in which the last visited node is preferentially assigned to a later determined vehicle, the first visited node is preferentially assigned to an earlier determined vehicle, and the fixed node is assigned to any one of the vehicles.

In a code 181 and a code 182 of Fig. 54, data (output_available_vehicle) that is input to the delivery plan generator 30 and specifies an available delivery vehicle for each node (also referred to as "node vehicle specification data for output") is set. In the code 181, the vehicle to be assigned to the first visited node is set in the node vehicle specification data for output, and in the code 182, the vehicle to be assigned to the last visited node is set in the node vehicle specification data for output. The node vehicle specification data for output can be said to be data obtained by converting vehicle specification data (data.vehicle_assignment.availbale_vehicle) input from the front system 14.

Further, in a code 183 and a code 184 of Fig. 54, data (output_available_vehicle_route) that is input to the delivery plan generator 30 and specifies an assigned vehicle for each fixed route (also referred to as "fixed route vehicle specification data for output") is set. In the code 183, the vehicle to be assigned to the forward-matching fixed route is set in the fixed route vehicle specification data for output. In the code 184, the vehicle to be assigned to the all fixed route is set in the fixed route vehicle specification data for output. The fixed route vehicle specification data for output can be said to be data obtained by converting the vehicle specification data for each forward-matching fixed route (data.vehicle_assignment.available_vehicle_route.prefix) and the vehicle specification data for each all fixed route (data.vehicle_assignment.available_vehicle_route.all) input from the front system 14.

Operations of the information processing system 10 with the above configuration will be described.

The user terminal 12 transmits a delivery plan request including data indicating a plurality of constraints created by the user to the front system 14. The front system 14 transmits data indicating the plurality of constraints transmitted from the user terminal 12 to the delivery plan support system 16. The front system 14 includes, in the constraint data, data of a distance matrix (data.edge.time) indicating the time distance between a depot and nodes and the time distance between nodes derived based on latitude and longitude information of the depot or the nodes, and transmits the constraint data to the delivery plan support system 16.

The reception unit 22 of the delivery plan support system 16 receives a plurality of constraint data transmitted from the front system 14. The check unit 24 of the delivery plan support system 16 executes check processing for a plurality of items and determines whether or not the plurality of constraints are consistent (in other words, whether or not there is a contradiction between the constraints). The check of the plurality of items includes the check of the above 32 items.

In a case where an error is detected in the check processing, in other words, in a case where it is determined that the plurality of constraints are inconsistent, the check unit 24 transmits, to the front system 14, an error notification including information on check items in which the error was detected and the constraint data in which the error was detected. The front system 14 transmits the error notification to the user terminal 12. The user modifies the constraint data based on the error notification. The user terminal 12 transmits a delivery plan request including the modified constraint data to the front system 14, and thereafter, the processing described above is executed again.

In a case where the check unit 24 has not detected an error, that is, in a case where the check unit 24 determines that the plurality of constraints are consistent, the converter 26 of the delivery plan support system 16 converts a part of the constraint data input from the front system 14 so as to conform to a delivery route determination algorithm (the nearest neighbor algorithm in the example). Specifically, the converter 26 generates the node vehicle specification data for output and the fixed route vehicle specification data for output so as to preferentially assign the first visited node to a later determined vehicle, preferentially assign the last visited node to an earlier determined vehicle, and assign the fixed route to any one of the vehicles that satisfies the constraints.

In a case where the check unit 24 has not detect an error, that is, in a case where the check unit 24 determines that the plurality of constraints are consistent, the instruction unit 28 of the delivery plan support system 16 inputs a delivery plan instruction based on the plurality of constraints input from the front system 14 to the delivery plan generator 30. At this time, the instruction unit 28 inputs, instead of the vehicle specification data input from the front system 14, the node vehicle specification data for output to the delivery plan generator 30. Further, the instruction unit 28 inputs, instead of the vehicle specification data for each forward-matching fixed route and the vehicle specification data for each all fixed route input from the front system 14, the fixed route vehicle specification data for output to the delivery plan generator 30.

Note that, the check unit 24 may generate constraint data that specifies an order of delivery route determination by the delivery plan generator 30 (for example, a list in which vehicle IDs are arranged in descending order of determination, and the like). In the example of Fig. 45, this constraint data may specify that the delivery route is determined in the order of the vehicle g, the vehicle f, ..., the vehicle b, and the vehicle a. The instruction unit 28 may input the delivery plan instruction including this constraint data to the delivery plan generator 30.

The delivery plan generator 30 of the delivery plan support system 16 uses the nearest neighbor algorithm to determine delivery routes of a plurality of vehicles based on the constraint data input from the instruction unit 28. The delivery plan generator 30 transmits data indicating the delivery routes of the plurality of vehicles to the front system 14. The front system 14 appropriately processes data indicating the delivery routes of the plurality of vehicles, and then transmits the processed data (for example, a printing course table of each vehicle) to the user terminal 12.

According to the delivery plan support system 16 of the example, before processing of solving delivery routes of a plurality of vehicles while satisfying the plurality of constraints is executed, in a case where there is no feasible solution that simultaneously satisfies the plurality of constraints, the fact is detected. As a result, it is possible to avoid a situation in which a feasible solution cannot be obtained even though long-time solving processing is executed. Further, according to the delivery plan support system 16 of the example, the constraint data is converted so that the delivery route can be efficiently solved depending on the nature of the algorithm applied to determine the delivery route. This can assist in quickly finding a feasible solution of the delivery route.

The present disclosure has been described above based on the example. It is to be understood by those skilled in the art that the contents described in the example are illustrative, that various modifications can be made to combinations of components and processing processes of the example, and that such modifications are also within the scope of the present disclosure.

A first modification will be described. Although the delivery plan generator 30 of the above example has determined the delivery route using the nearest neighbor algorithm, the algorithm used by the delivery plan generator 30 to determine the delivery route is not limited to the nearest neighbor algorithm. Conversion of the constraint data by the converter 26 is useful in a case where an algorithm for clustering nodes in consideration of a graph structure, similar to the nearest neighbor algorithm, is used as an algorithm used for determining the delivery route. As an algorithm for performing clustering in consideration of the graph structure, for example, a saving method or the Christofides algorithm may be used.

A second modification will be described. The delivery plan support system 16 of the above example includes both the check unit 24 and the converter 26, but it may be configured to include only the check unit 24 as a modification. According to the delivery plan support system 16 of the second modification, in a case where there is no feasible solution that simultaneously satisfies the plurality of constraints, the fact is detected before the delivery route is solved, so that it is possible to avoid a situation in which a feasible solution cannot be obtained even though long-time solving process is executed.

A third modification will be described. The delivery plan support system 16 of the above example includes both the check unit 24 and the converter 26, but it may be configured to include only the converter 26 as a modification. According to the delivery plan support system 16 of the third modification, it is possible to assist in quickly finding a feasible solution of the delivery route by converting the constraint data so that the delivery route can be efficiently solved depending on the nature of the algorithm applied to determine the delivery route.

A fourth modification will be described. The delivery plan support system 16 of the above example sequentially checks consistency between constraints and converts the constraint data. As a modification, check processing and conversion processing may be executed in parallel. In this case, as shown in Fig. 47, the code 161 may be included in the code of the check of ID32 "time system × assignment system". According to this modification, it is possible to eliminate overlapping processing between the check processing and the conversion processing, and to efficiently execute the check processing and the conversion processing.

Any combination of the example and modifications described above is also useful as an embodiment of the present disclosure. A new embodiment resulting from the combination has the effect of each of the combined example and modifications. Further, it is to be understood by those skilled in the art that the functions to be performed by each of the configuration requirements described in the claims are realized by each component shown in the example and the modifications alone or by cooperation of the components.

[INDUSTRIAL APPLICABILITY]

The technology of the present disclosure can be applied to a device or a system that supports a package delivery plan.

[REFERENCE SIGNS LIST]

10 information processing system, 16 delivery plan support system, 20 preprocessing unit, 22 reception unit, 24 check unit, 26 converter, 28 instruction unit, 30 delivery plan generator.

**Claims**

1. A delivery plan support system comprising:

    a reception unit structured to receive data indicating a plurality of constraints on a delivery plan in a case where a plurality of moving bodies are divided to deliver packages from a delivery base to a plurality of nodes;
    a determination unit structured to determine whether or not the plurality of constraints are consistent with respect to at least one of time and resource assignment; and
    an instruction unit structured to input a delivery plan instruction based on the plurality of constraints to a delivery plan generator in a case where the determination unit determines that the plurality of constraints are consistent.

2. The delivery plan support system according to claim 1, wherein
the determination unit determines that the plurality of constraints are inconsistent when detecting that there is a moving body that cannot depart from the delivery base within an available departure time frame at the delivery base based on a constraint of the number of berths at the delivery base.

3. The delivery plan support system according to claim 1, wherein
the determination unit determines that the plurality of constraints are inconsistent when detecting that there is a node at which the moving body does not arrive within a predefined available arrival time frame based on a constraint of the number of berths at the delivery base.

4. The delivery plan support system according to any one of claims 1 to 3, wherein
the determination unit determines that the plurality of constraints are inconsistent when detecting that there is a node at which the moving body does not arrive within a predefined available arrival time frame based on a constraint of a departure time from the delivery base of the plurality of moving bodies fixed in advance.

5. The delivery plan support system according to claim 4, wherein
the determination unit determines whether or not the moving body can be assigned by comparing, in descending order, a time point at which the moving body should depart from the delivery base in order to arrive at the available arrival time frame for a first visited node that is a node to be visited first on a route from the delivery base and a

EP 4 435 684 A1

departure time from the delivery base for the plurality of moving bodies, and determines whether or not the moving body can be assigned by comparing, in ascending order, a time point at which the moving body should depart from the delivery base in order to arrive at the available arrival time frame for a node different from the first visited node and a departure time from the delivery base for the plurality of moving bodies.

6. The delivery plan support system according to any one of claims 1 to 3, wherein
the determination unit determines that the plurality of constraints are inconsistent in a case where a load volume of packages corresponding to one or more nodes to be assigned to a certain moving body exceeds an upper limit of the load volume of the moving body based on a constraint defining a moving body to visit a specific node.

7. The delivery plan support system according to any one of claims 1 to 3, wherein
the determination unit determines that the plurality of constraints are inconsistent in a case where the number of nodes to be assigned to a certain moving body exceeds a maximum number of nodes visited by the moving body based on a constraint defining a moving body to visit a specific node.

8. The delivery plan support system according to any one of claims 1 to 3, wherein
the determination unit determines that the plurality of constraints are inconsistent in a case where a load volume of packages on a certain route exceeds an upper limit of the load volume of a moving body that can be assigned to the route based on a constraint defining a moving body to visit a specific node and a constraint of a route defining a visit order of a plurality of nodes.

9. The delivery plan support system according to any one of claims 1 to 3, wherein
the determination unit determines that the plurality of constraints are inconsistent in a case where the number of nodes on a certain route exceeds the maximum number of nodes visited by a moving body that can be assigned to the route based on a constraint defining a moving body to visit a specific node and a constraint of a route defining a visit order of a plurality of nodes.

10. The delivery plan support system according to any one of claims 1 to 3, wherein
the determination unit determines that the plurality of constraints are inconsistent when detecting that there is no moving body that can be assigned to the route based on a constraint of a route defining a visit order of a plurality of nodes and a constraint of a predefined available arrival time frame for each of the plurality of nodes.

11. The delivery plan support system according to any one of claims 1 to 3, wherein
the determination unit determines that the plurality of constraints are inconsistent, in a case where, based on a first constraint defining a first visited node that is a node to be visited first on a route from the delivery base, a second constraint defining a last visited node that is a node to be visited last on a route from the delivery base, and a third constraint defining moving bodies to visit the first visited node and the last visited node, the number of the first visited nodes and the last visited nodes exceeds the number of moving bodies defined by the third constraint.

12. The delivery plan support system according to claim 1, further comprising

a converter, wherein
the plurality of constraints includes a first constraint that specifies a last visited node that is a node to be visited last on a route from the delivery base and a second constraint that specifies a moving body to visit the last visited node,
the delivery plan generator sequentially determines delivery routes of the plurality of moving bodies, and
the converter converts the second constraint so as to preferentially assign the last visited node to a moving body that is relatively later in a determination order of the delivery route.

13. The delivery plan support system according to claim 12, wherein

the plurality of constraints further includes a third constraint that specifies a first visited node that is a node to be visited first on a route from the delivery base,
the second constraint specifies a moving body to visit the first visited node or the last visited node, and
the converter converts the second constraint so as to preferentially assign the last visited node to a moving body that is relatively later in a determination order of the delivery route, and preferentially assign the first visited node to a moving body that is relatively earlier in the determination order of the delivery route.

**14.** A delivery plan support method executed by a computer, the method comprising:

a step of receiving data indicating a plurality of constraints on a delivery plan in a case where a plurality of moving bodies are divided to deliver packages from a delivery base to a plurality of nodes;

a step of determining whether or not the plurality of constraints are consistent with respect to at least one of time and resource assignment; and

a step of inputting a delivery plan instruction based on the plurality of constraints to a delivery plan generator in a case where it is determined in the determining step that the plurality of constraints are consistent.

**15.** A computer program realized by a computer, the computer program comprising:

a function of receiving data indicating a plurality of constraints on a delivery plan in a case where a plurality of moving bodies are divided to deliver packages from a delivery base to a plurality of nodes;

a function of determining whether or not the plurality of constraints are consistent with respect to at least one of time and resource assignment; and

a function of inputting a delivery plan instruction based on the plurality of constraints to a delivery plan generator in a case where it is determined by the determining function that the plurality of constraints are consistent.

FIG. 1

EP 4 435 684 A1

# FIG. 2

```
                        14                              16
                        ∿                               ∿
              ┌──────────────┐  ┌──────────────────────────────────┐
              │              │  │ DELIVERY PLAN SUPPORT SYSTEM      │
              │              │  │                              20   │
              │              │  │  ┌────────────────────────┐  ∿    │
              │              │  │  │ PREPROCESSING UNIT      │       │
              │              │  │  │                    22   │       │
              │              │  │  │  ┌──────────────────┐ ∿ │       │
              │              │──┼──┼─▶│ RECEPTION UNIT   │   │       │
              │              │  │  │  └──────────────────┘   │       │
              │              │  │  │           │        24   │       │
              │              │  │  │           ▼        ∿    │       │
              │              │◀─┼──┼──│ CHECK UNIT       │   │       │
              │              │  │  │  └──────────────────┘   │       │
   12         │              │  │  │           │        26   │       │
   ∿          │    FRONT     │  │  │           ▼        ∿    │       │
┌────────┐    │    SYSTEM    │  │  │  ┌──────────────────┐   │       │
│ USER   │◀──▶│              │  │  │  │ CONVERTER        │   │       │
│TERMINAL│    │              │  │  │  └──────────────────┘   │       │
└────────┘    │              │  │  │           │        28   │       │
              │              │  │  │           ▼        ∿    │       │
              │              │  │  │  ┌──────────────────┐   │       │
              │              │  │  │  │ INSTRUCTION UNIT │   │       │
              │              │  │  │  └──────────────────┘   │       │
              │              │  │  └────────────│───────────┘       │
              │              │  │               │             30    │
              │              │  │               ▼             ∿     │
              │              │◀─┼──│ DELIVERY PLAN            │      │
              │              │  │  │ EXECUTION UNIT           │      │
              └──────────────┘  └──────────────────────────────────┘
```

INFORMATION PROCESSING SYSTEM 10

FIG. 3

| ID | CHECK ITEM | TIME CONSISTENCY | RESOURCE ASSIGNMENT | BUSINESS CONSTRAINT |
|---|---|---|---|---|
| 1 | SETTING OF AVAILABLE DEPARTURE TIME FRAME WHERE RETURN IS IMPOSSIBLE | ◎ | | ◎ |
| 2 | SETTING OF AVAILABLE DEPARTURE TIME FRAME WHERE RETURN IS IMPOSSIBLE IN SPECIFIED DELIVERY VEHICLE | ◎ | ○ | ◎ |
| 3 | SETTING OF AVAILABLE DEPARTURE TIME FRAME WHERE RETURN IS IMPOSSIBLE IN CONSIDERATION OF DELIVERY TIME OF EACH VEHICLE | ◎ | ○ | ◎ |
| 4 | SETTING OF STRICT EARLY DELIVERY CONDITIONS TO SPECIFICATION OF FIRST VISITED NODE (AVAILABLE DEPARTURE TIME FRAME) | ◎ | | ◎ |
| 5 | PASSING OF ACTUAL AVAILABLE DEPARTURE TIME FRAME | | | ◎ |
| 6 | SETTING OF STRICT EARLY DELIVERY CONDITIONS (AVAILABLE DEPARTURE TIME FRAME AND UNAVAILABLE DEPARTURE TIME FRAME) | ◎ | | ◎ |
| 7 | SETTING OF UNAVAILABLE DEPARTURE TIME FRAME WHERE RETURN IS IMPOSSIBLE | ◎ | | ◎ |
| 8 | SETTING OF UNAVAILABLE DEPARTURE TIME FRAME WHERE RETURN IS IMPOSSIBLE IN SPECIFIED DELIVERY VEHICLE | ◎ | ○ | ◎ |
| 9 | SETTING OF STRICT EARLY DELIVERY CONDITIONS TO SPECIFICATION OF FIRST VISITED NODE (UNAVAILABLE DEPARTURE TIME FRAME) | ◎ | | ◎ |
| 10 | INCONSISTENCY BETWEEN NUMBER OF ROTATIONS OF BERTH AND AVAILABLE DEPARTURE TIME FRAME OF DEPOT | ◎ | ○ | |
| 11 | MANIFESTATION OF NODES THAT EXCEED AVAILABLE DEPARTURE TIME FRAME BY CONSIDERING SECOND AND SUBSEQUENT ROTATIONS OF BERTH | ◎ | | ◎ |
| 12 | SHORTAGE OF ASSIGNED NODES IN FIRST ROTATION OF BERTH | ◎ | | ◎ |
| 13 | INCONSISTENCY WITH SPECIFICATION OF TIME FRAME (ALL FIXED DEPOT DEPARTURE TIME) | ◎ | ○ | |
| 14 | SETTING OF STRICT EARLY DELIVERY CONDITIONS ASSOCIATED WITH ALL FIXED DEPOT DEPARTURE TIME | ◎ | | ◎ |
| 15 | SETTING OF STRICT EARLY DELIVERY AND LATE DELIVERY CONDITIONS ASSOCIATED WITH ALL FIXED DEPOT DEPARTURE TIME | ◎ | | ◎ |
| 16 | INCONSISTENCY WITH SPECIFICATION OF TIME FRAME (PART FIXED DEPOT DEPARTURE TIME) | ◎ | ○ | |
| 17 | INCONSISTENCY BETWEEN PART FIXED DEPARTURE TIME, NUMBER OF ROTATIONS OF BERTH AND AVAILABLE DEPARTURE TIME FRAME OF DEPOT | ◎ | ○ | |
| 18 | MANIFESTATION OF NODES THAT EXCEED AVAILABLE DEPARTURE TIME FRAME BY CONSIDERING PART FIXED DEPARTURE TIME AND SECOND AND SUBSEQUENT ROTATIONS OF BERTH | ◎ | | ◎ |
| 19 | SHORTAGE OF ASSIGNED NODES IN FIRST ROTATION OF BERTH (PART FIXED DEPARTURE TIME) | ◎ | | ◎ |
| 20 | SETTING OF STRICT LATE DELIVERY CONDITIONS ASSOCIATED WITH PART FIXED DEPOT DEPARTURE TIME AND SPECIFICATION OF FIRST VISITED NODE | ◎ | | ◎ |
| 21 | SETTING OF STRICT EARLY DELIVERY CONDITIONS ASSOCIATED WITH PART FIXED DEPOT DEPARTURE TIME AND SPECIFICATION OF AVAILABLE DELIVERY VEHICLE | ◎ | | ◎ |
| 22 | EXCESS OF NUMBER OF FIRST VISITED NODES AND NUMBER OF LAST VISITED NODES | | ◎ | ○ |
| 23 | DOUBLE SETTING OF FIRST VISITED NODE AND LAST VISITED NODE | | ◎ | ○ |
| 24 | EXCESS OF NUMBER OF FIRST VISITED NODES, NUMBER OF LAST VISITED NODES AND NUMBER OF FIXED ROUTES | | ◎ | ○ |
| 25 | DOUBLE SPECIFICATION OF NODE ON FIXED ROUTE, FIRST VISITED NODE AND LAST VISITED NODE | | ◎ | ○ |
| 26 | EXCESS OF UPPER LIMIT OF LOAD VOLUME DUE TO DELIVERY VEHICLE SPECIFICATION | | ◎ | ◎ |
| 27 | EXCESS OF MAXIMUM NUMBER OF VISITED NODES DUE TO DELIVERY VEHICLE SPECIFICATION | | ◎ | ◎ |
| 28 | EXCESS OF UPPER LIMIT OF LOAD VOLUME IN ROUTE FIXATION | | ◎ | ◎ |
| 29 | EXCESS OF MAXIMUM NUMBER OF VISITED NODES IN ROUTE FIXATION | | ◎ | ◎ |
| 30 | ROUTE SPECIFICATION THAT CAUSES TIME SYSTEM CONTRADICTION | ◎ | ◎ | ◎ |
| 31 | EXCESS OF NUMBER OF SPECIFIED DELIVERY ORDERS (SPECIFICATION OF AVAILABLE DELIVERY VEHICLE) | | ◎ | ◎ |
| 32 | TIME SYSTEM × ASSIGNMENT SYSTEM | ◎ | ◎ | ◎ |

EP 4 435 684 A1

# FIG. 4

NUMBER OF BERTHS: 2, BERTH OCCUPANCY TIME: 30 MINUTES

DEPARTURE   DEPARTURE   DEPARTURE   DEPARTURE

BERTH A

BERTH B

BERTH A

BERTH B

OCCUPANCY TIME
(30 MINUTES)

BERTH A

BERTH B

OCCUPANCY TIME
(30 MINUTES)

VEHICLE CANNOT DEPART
IN CONSIDERATION OF
BERTH ROTATION

BERTH A

BERTH B

OCCUPANCY TIME
(30 MINUTES)

10:00   11:30

AVAILABLE DEPARTURE TIME FRAME OF DEPOT (90 MINUTES)

EP 4 435 684 A1

# FIG. 5

```
start_time = data.time_windows.available_time[data.depot_index][0]
end_time = [data.time_windows.available_time[data.depot_index][1]] * data.berth.depot_capacity

consumed_birth_range = [start_time] * depot_capacity # USAGES OF EACH VEHICLE
load_time_heap = data.berth.loading_time.copy() # PRIORITY QUEUE BY OCCUPANCY TIME (ASCENDING ORDER AND DESCENDING ORDER DEPENDING ON LANGUAGE DEPENDENCY, BUT IN DESCENDING ORDER)

first_cycle_count = 0 # VEHICLE WITH LARGE OCCUPANCY TIME IS ASSIGNED IN FIRST ROTATION OF BERTH. COUNT ASSIGNED NUMBER (NOT APPLICABLE FOR FIRST ROTATION)

# First fit BODY
while len(loading_time_heap) > 0:
    a = heapq.heappop(loading_time_heap)
    if first_cycle_count < depot_capacity: # ONLY FIRST ROTATION OF BERTH IS IGNORED, BECAUSE IT IS ASSUMED THAT VEHICLE DEPARTS AT SAME TIME AS 0 IN FIRST ROTATION OF BERTH
        first_cycle_count += 1
        continue
    # FILL BERTH FROM LOWEST SUBSCRIPT TO EXTENT WHERE BERTH OCCUPANCY TIME IS SATISFIED
    for idx in range(data.berth.depot_capacity):
        if consumed_birth_range[idx] + abs(a) <= end_time[idx]:
            consumed_birth_range[idx] = consumed_birth_range[idx] + abs(a)
            break
        if idx >= data.berth.depot_capacity - 1:
            ERROR OUTPUT
```

EP 4 435 684 A1

# FIG. 6

NUMBER OF BERTHS: 2, BERTH OCCUPANCY TIME: 30 MINUTES

NODE

DEPARTURE — DEPARTURE

AVAILABLE DEPARTURE TIME FRAME

TIME DISTANCE **45 MINUTES** — 10:45

10:00 — 11:00 — B

TIME DISTANCE **48 MINUTES** — 10:48

10:00 — 11:00 — A

TIME DISTANCE **50 MINUTES** — 11:20

10:00 — 11:00 — C

VEHICLE CAN ARRIVE IN TIME IN FIRST ROTATION OF BERTH, BUT CANNOT ARRIVE IN TIME DUE TO COLLISION

10:00 — 10:30

TW TIME ALLOWANCE IN ASCENDING ORDER

# FIG. 7

NORMAL PATTERN (NUMBER OF BERTHS 3)
B, C, AND D NEED TO BE ASSIGNED TO VEHICLE IN FIRST ROTATION, BUT
AS LONG AS THOSE CONDITIONS ARE MET, VEHICLE CAN ARRIVE IN TIME

| | ARRIVING IN TIME IN FIRST ROTATION | ARRIVING IN TIME IN SECOND ROTATION |
|---|---|---|
| A | ○ | ○ |
| B | ○ | × |
| C | ○ | × |
| D | ○ | × |
| E | ○ | ○ |
| F | ○ | ○ |
| G | ○ | ○ |

ERROR PATTERN (NUMBER OF BERTHS 3)
IT IS DIFFICULT BECAUSE NUMBER OF VEHICLES THAT CANNOT ARRIVE
IN TIME IN SECOND ROTATION IS MORE THAN NUMBER OF BERTHS

| | ARRIVING IN TIME IN FIRST ROTATION | ARRIVING IN TIME IN SECOND ROTATION |
|---|---|---|
| A | ○ | ○ |
| B | ○ | × |
| C | ○ | × |
| D | ○ | × |
| E | ○ | × |
| F | ○ | ○ |
| G | ○ | ○ |

EP 4 435 684 A1

# FIG. 8

EP 4 435 684 A1

```
# MAXIMUM VALUE IS USED IN ORDER TO DETERMINE BERTH OCCUPANCY TIME TO SPECIFIC VALUE
max_vehicle_load_time = 0
for idx in data.berth.loading_time:
   max_vehicle_load_time = max(data.berth.loading_time[idx], max_vehicle_load_time)

for itr in range(berth_iteration): # SINCE THIS CHECK IS CHECK UP TO FIRST ROTATION berth_iteration = 1
   unavailable_node_count = 0
for node_idx in data.time_windows.available_time: # COUNT OF NUMBER OF NODES THAT CANNOT BE ARRIVED IN TIME IN (ITR + 1) ROTATION
   time_distance = data.edge.time[data.depot_index][node_idx] # DISTANCE FROM DEPOT TO NODE

# WHEN BERTH OCCUPANCY TIME × NUMBER OF ROTATIONS + DISTANCE FROM DEPOT TO NODE > UPPER LIMIT OF AVAILABLE DEPARTURE TIME FRAME,
# DETERMINE THAT ARRIVAL IN TIME IS IMPOSSIBLE AND ADD UP NUMBER OF NODES THAT CANNOT BE ARRIVED IN TIME
   if ( node_idx != data.depot_index and max_vehicle_load_time * (itr + 1) + time_distance
   > data.time_windows.available_time[node_idx][1]):
      unavailable_node_count += 1
      if unavailable_node_count > depot_capacity * (itr + 1): # WHEN NUMBER OF NODES THAT CANNOT BE ARRIVED IN TIME EXCESSES NUMBER OF BERTHS × NUMBER OF ROTATIONS, ERROR IS DETECTED
         ERROR OUTPUT
```

# FIG. 9

NUMBER OF BERTHS: 2, BERTH OCCUPANCY TIME: 30 MINUTES

NODE

DEPARTURE    DEPARTURE    AVAILABLE DEPARTURE TIME FRAME

TIME DISTANCE 50 MINUTES   10:50

D

11:00    12:00

VEHICLE CAN ARRIVE IN TIME FRAME WHEN BEING IN SECOND ROTATION OR GOING THROUGH ANOTHER NODE, BUT IT WILL BE IMPOSSIBLE DUE TO COLLISION

TIME DISTANCE 48 MINUTES   10:48

E

11:00    12:00

TIME DISTANCE 45 MINUTES   11:15

F

11:00    12:00

TW TIME ALLOWANCE IN ASCENDING ORDER

10:00    10:30

EP 4 435 684 A1

# FIG. 10

EP 4 435 684 A1

**NORMAL PATTERN (NUMBER OF BERTHS 3)**
**VEHICLE CAN ARRIVE IN TIME WHEN E, F, AND G**
**ARE ASSIGNED IN FIRST ROTATION**

| | ARRIVING IN TIME IN FIRST ROTATION |
|---|---|
| A | × |
| B | × |
| C | × |
| D | × |
| E | ○ |
| F | ○ |
| G | ○ |

**ERROR PATTERN (NUMBER OF BERTHS 3)**
**THERE ARE ONLY FEW NODES THAT CAN**
**BE ASSIGNED IN FIRST ROTATION**

| | ARRIVING IN TIME IN FIRST ROTATION |
|---|---|
| A | × |
| B | × |
| C | × |
| D | × |
| E | × |
| F | ○ |
| G | ○ |

# FIG. 11

```
# MAXIMUM VALUE IS USED IN ORDER TO DETERMINE BERTH OCCUPANCY TIME TO SPECIFIC VALUE
max_vehicle_load_time = 0
for idx in data.berth.loading_time:
    max_vehicle_load_time = max(data.berth.loading_time[idx], max_vehicle_load_time)

iteration = (data.num_vehicles - 1) / data.depot_capacity
# LATEST DEPARTURE TIME FROM DEPOT IN CONSIDERATION OF BERTH OCCUPANCY TIME AND ROTATION
start_time = data.time_windows.available_time[self.depot_index][1] - iteration * max_vehicle_load_time
if start_time < 0:
    start_time = 0 # SET DEPARTURE TIME SET TO 0 WHEN IT IS LESS THAN OR EQUAL TO 0

in_time_flag = [True] * data.num_nodes # WHETHER OR NOT NODE CAN BE ARRIVED IN TIME FOR TIME FRAME IN DEPARTURE IN FIRST ROTATION OF BERTH T: ARRIVING IN TIME
in_time_flag[self.depot_index] = False # SET DEPOT TO FALSE, SINCE DEPOT IS IRRELEVANT

for node_idx in data.time_windows.available_time:
    time_distance = data.edge.time[data.depot_index][node_idx]
    # CHANGE NODE THAT CANNOT BE ARRIVED IN TIME TO FALSE
    if (node_idx != data.depot_index and start_time + time_distance < data.time_windows.available_time[node_idx][0]):
        in_time_flag[node_idx] = False

in_time_count = sum(in_time_flag) # SUM OF TRUE (SUM OF NODES THAT CAN BE ARRIVED IN TIME)
if in_time_count < data.depot_capacity: # WHEN NUMBER OF NODES THAT CAN BE ARRIVED IN TIME IS SMALLER THAN NUMBER OF BERTHS, ERROR IS DETECTED
    ERROR OUTPUT
```

# FIG. 12

ALL FIXED DEPOT DEPARTURE TIME

NODE

DEPARTURE

AVAILABLE DEPARTURE TIME FRAME

TIME DISTANCE 110 MINUTES — 11:50

11:00    12:00    D

DEPARTURE 10:20

10:00

TIME DISTANCE 97 MINUTES — 11:57

11:00    12:00    E

DEPARTURE

TIME DISTANCE 95 MINUTES — 12:05

11:00    12:00    F

DUE TO FIXED DEPARTURE TIME, VEHICLE CANNOT ARRIVE IN TIME WITH COLLISION

10:30

TW TIME ALLOWANCE IN ASCENDING ORDER

EP 4 435 684 A1

# FIG. 13

| DEPOT VEHICLE INFORMATION (IN ASCENDING ORDER) | | NODE INFORMATION (SORTED IN ASCENDING ORDER) | | NODE INFORMATION | | |
|---|---|---|---|---|---|---|
| VEHICLE | DEPARTURE TIME | LATEST DEPARTURE TIME | NODE NAME | LATEST DEPARTURE TIME | FROM DEPOT TO NODE | NODE NAME |

VEHICLE CAN ARRIVE IN TIME WHEN DEPARTURE TIME IS SET EARLIER TO BE 10:00

| | 10:00 | 10:10 | 🏪 F | LATEST DEPARTURE TIME FROM DEPOT 10:35 — 11:00 12:00 | 85 MINUTES | 🏪 A |
| | 10:20 | 10:23 | 🏪 E | AVAILABLE DEPARTURE TIME FRAME 11:30 — 11:00 12:00 | 30 MINUTES | 🏪 B |
| | 10:30 | 10:25 | 🏪 D | 10:35 — 11:00 12:00 | 85 MINUTES | 🏪 C |
| | 10:40 | 10:35 | 🏪 A | 10:25 — 11:00 12:00 | 95 MINUTES | 🏪 D |
| | | | 🏪 B | 10:23 — 11:00 12:00 | 97 MINUTES | 🏪 E |
| | | ⋮ | 🏪 C | 10:10 — 11:00 12:00 | 110 MINUTES | 🏪 F |

VEHICLE CANNOT ARRIVE IN TIME BECAUSE DEPARTURE TIME CANNOT BE SET EARLIER THAN THIS

EP 4 435 684 A1

# FIG. 14

```
# DEPOT DEPARTURE TIME IS SAVED IN PRIORITY QUEUE IN ASCENDING ORDER
const_berth_heap = []
for i in data.berthconst_berth:
    const_berth_heap.append(data.berth.const_berth[i])
heapify(const_berth_heap)

# LATEST DEPARTURE TIME FROM WHICH VEHICLE CAN ARRIVE AT EACH NODE IS OBTAINED
for node_idx in data.time_windows.available_time:
    if node_idx == data.depot_index:
        continue
    time_distance = data.edge.time[data.depot_index][node_idx]
    pq_node = data.time_windows.available_time[node_idx][1] - time_distance
    late_arrival_time.append(pq_node)

heapify(late_arrival_time) # SORT AS PRIORITY QUEUE IN ASCENDING ORDER

while len(const_berth_heap) > 0:
    # BECOMING NORMAL SYSTEM SINCE VEHICLE CAN ALWAYS ARRIVE IN TIME WHEN TIME FRAME IS NOT SET TOO MUCH OR WHEN TIME FRAME IS NOT SET AT ALL
    if len(late_arrival_time) == 0:
        return
    cb = heapq.heappop(const_berth_heap)
    la = heapq.heappop(late_arrival_time)
    if la < cb: # WHEN LATEST DEPARTURE TIME OF NODE IS LESS THAN ALL FIXED DEPOT DEPARTURE TIME, ERROR IS OUTPUT
        ERROR OUTPUT
```

EP 4 435 684 A1

# FIG. 15

ALL FIXED DEPOT DEPARTURE TIME
NUMBER OF VEHICLES: 3

NODE

DEPARTURE

AVAILABLE DEPARTURE TIME FRAME

TIME DISTANCE 105 MINUTES

11:45

11:00     12:00

🏪 D

10:00

DEPARTURE
10:20

TIME DISTANCE 103 MINUTES

12:03

11:00     12:00

🏪 E

DEPARTURE

TIME DISTANCE 25 MINUTES 10:55

SPECIFICATION OF
FIRST VISITED NODE

🏪 F

11:00     12:00

10:30

VEHICLE SHOULD BE ABLE TO ARRIVE IN
TIME WHEN GOING THROUGH SOMEWHERE,
BUT IT CANNOT ARRIVE IN TIME DUE TO
SPECIFICATION OF FIRST VISITED NODE

EP 4 435 684 A1

## FIG. 16

**DEPOT VEHICLE INFORMATION (IN ASCENDING ORDER)**

| VEHICLE | DEPARTURE TIME |
|---|---|
| 🚚 | 10:50 |
| 🚚 | 10:40 |
| 🚚 | 10:10 |
| 🚚 | 10:20 |
| 🚚 | 10:40 |

OTHERS (COLLISION) ARE COMPARED IN ASCENDING ORDER

**NODE INFORMATION (SORTED IN ASCENDING ORDER)**

| DEPARTURE TIME | NODE NAME |
|---|---|
| FIRST VISITED NODE IS COMPARED IN FRONT SIDE OF AVAILABLE | FIRST |
| EARLIEST 10:45 | F |
| EARLIEST 10:30 | FIRST E |
| LATEST 10:25 | D |
| LATEST 10:35 | C |
| LATEST 10:45 | A |
| ⋮ | |
| | B |

**NODE INFORMATION**

| EARLIEST OR LATEST DEPARTURE TIME | FROM DEPOT TO NODE | NODE NAME |
|---|---|---|
| DEPARTURE TIME FROM DEPOT — 10:45 11:00 12:00 AVAILABLE DEPARTURE TIME FRAME | 75 MINUTES | A |
| 11:30 11:00 12:00 | 30 MINUTES | B |
| 10:35 11:00 12:00 | 85 MINUTES | C |
| 10:25 11:00 12:00 | 95 MINUTES | D |
| EARLIEST DEPARTURE TIME FROM DEPOT — 10:30 11:00 12:00 | 30 MINUTES | FIRST E |
| 10:45 11:00 12:00 | 15 MINUTES | FIRST F |

EP 4 435 684 A1

# FIG. 17

| DEPOT VEHICLE INFORMATION (IN ASCENDING ORDER) | | NODE INFORMATION (SORTED IN ASCENDING ORDER) | | NODE INFORMATION | | |
|---|---|---|---|---|---|---|
| VEHICLE | DEPARTURE TIME | DEPARTURE TIME | NODE NAME | EARLIEST OR LATEST DEPARTURE TIME | FROM DEPOT TO NODE | NODE NAME |

DEPOT VEHICLE INFORMATION (IN ASCENDING ORDER)

VEHICLE — DEPARTURE TIME

10:50

10:40

10:10

10:20

10:40

NODE INFORMATION (SORTED IN ASCENDING ORDER)

DEPARTURE TIME — NODE NAME

EARLIEST 10:45 — FIRST F

EARLIEST 10:45 — FIRST E

LATEST 10:25 — D

LATEST 10:35 — C

LATEST 10:35 — A

⋮

B

NODE INFORMATION

EARLIEST OR LATEST DEPARTURE TIME — FROM DEPOT TO NODE — NODE NAME

LATEST DEPARTURE TIME FROM DEPOT
10:35  11:00  12:00 — 85 MINUTES — A

AVAILABLE DEPARTURE TIME FRAME
11:30  11:00  12:00 — 30 MINUTES — B

10:35  11:00  12:00 — 85 MINUTES — C

10:25  11:00  12:00 — 95 MINUTES — D

EARLIEST DEPARTURE TIME FROM DEPOT
10:45  11:00  12:00 — 15 MINUTES — FIRST E

10:45  11:00  12:00 — 15 MINUTES — FIRST F

EP 4 435 684 A1

# FIG. 18

THERE IS NODE AT WHICH VEHICLE CANNOT ARRIVE IN TIME DUE TO COLLISION,
EVEN IF THERE IS A PROBABILITY THAT VEHICLE CAN ARRIVE IN TIME AT FIRST VISIT NODE

EP 4 435 684 A1

# FIG. 19

```
# DEPOT DEPARTURE TIME IS SAVED IN PRIORITY QUEUE IN DESCENDING ORDER
const_berth_heap = []
for i in data.berth.const_berth:
    const_berth_heap.append(data.berth.const_berth[i])
heapify(const_berth_heap)

# EARLIEST DEPARTURE TIME FROM DEPOT IS SAVED IN PRIORITY QUEUE IN DESCENDING ORDER
fastest_departure_time_for_node_after_depot = []
for node_idx in data.routing_order.node_after_depot:
    time_distance = data.edge.time [data.depot_index][node_idx]
    fastest_departure_time_for_node_after_depot.append((available_time[node_idx][0] - time_distance))
heapify(fastest_departure_time_for_node_after_depot)

# COMPARE "DEPOT DEPARTURE TIME" AND "EARLIEST DEPARTURE TIME FROM DEPOT" IN DESCENDING ORDER ONLY FOR NUMBER OF FIRST VISITED NODE
while len(const_berth_heap) > 0 and len(fastest_departure_time_for_node_after_depot) > 0:
    cb = abs(heapq.heappop(const_berth_heap))
    fd = abs(heapq.heappop(fastest_departure_time_for_node_after_depot))
    if cb < fd:
        ERROR OUTPUT # DETECT ERROR WHEN DEPOT DEPARTURE TIME OF VEHICLE IS EARLIER

inverse(const_berth_heap) # INVERSION OF DESCENDING ORDER AND ASCENDING ORDER OF PRIORITY QUEUE (SET TO PRIORITY QUEUE IN ASCENDING ORDER)
late_arrival_time = []
for node_idx in data.time_windows.available_time:
    time_distance = data.edge.time[data.depot_index][node_idx]
    pq_node = data.time_windows.available_time[node_idx][1] - time_distance
    late_arrival_time.append(pq_node)
# (NOT DESCRIBED) FOR EACH NODE WITH TIME FRAME FROM WHICH FIRST VISITED NODE AND DEPOT ARE EXCLUDED
# LATEST DEPARTURE TIME FROM DEPOT IS OBTAINED AND SAVED IN PRIORITY QUEUE IN ASCENDING ORDER

while len(const_berth_heap) > 0: # COMPARISON OF DEPOT DEPARTURE TIME AND LATEST DEPARTURE TIME FROM DEPOT
    cb = heapq.heappop(const_berth_heap)
    la = heapq.heappop(late_arrival_time)
    if cb > la:
        ERROR OUTPUT # DETECT ERROR WHEN DEPOT DEPARTURE TIME OF VEHICLE IS LATER
```

EP 4 435 684 A1

# FIG. 20

DEPOT VEHICLE INFORMATION

| LOADING VOLUME | VEHICLE |
| --- | --- |

NODE NAME    LOAD

LOAD LIMIT WILL BE EXCEEDED WHEN VEHICLE IS ASSIGNED

200 PCS — a
b

300 PCS — c
d
e
f

A
B
C
D
E
F

SMALL            LARGE

a  <  A
        B

200 PCS < TOTAL LOAD OF 2 NODES 250 PCS

※ SIMPLE EXAMPLE IS DESCRIBED

IT IS OBVIOUS BECAUSE LOAD OF VEHICLE a IS EXCESSED BY ONLY A AND B

EP 4 435 684 A1

# FIG. 21

| | VEHICLE a | VEHICLE b | VEHICLE c | VEHICLE d | VEHICLE e | VEHICLE f | VEHICLE g |
|---|---|---|---|---|---|---|---|
| NODE A | INF | INF | INF | 30 | 30 | 30 | INF |
| NODE D | 40 | 40 | 40 | INF | INF | INF | INF |
| NODE K | INF | INF | 25 | 25 | 25 | 25 | INF |
| NODE L | INF | INF | INF | INF | 20 | 20 | 20 |
| NODE M | INF | INF | INF | INF | 35 | 35 | 35 |
| NODE N | INF | INF | INF | 35 | 35 | 35 | INF |
| NODE O | INF | INF | 30 | 30 | 30 | INF | INF |
| NODE R | INF | 20 | 20 | 20 | INF | INF | INF |
| NODE U | 30 | 30 | 30 | 30 | INF | INF | INF |
| LOAD VOLUME LIMIT | 60 | 90 | 90 | 60 | 100 | 120 | 90 |

EP 4 435 684 A1

# FIG. 22

| | VEHICLE a | VEHICLE b | VEHICLE c | VEHICLE d | VEHICLE e | VEHICLE f | VEHICLE g |
|---|---|---|---|---|---|---|---|
| NODE A | | | | | 1 (30) | | |
| NODE D | 1 (40) | | | | | | |
| NODE K | | | 1 (25) | | | | |
| NODE L | | | | | 1 (20) | | |
| NODE M | | | | | 1 (35) | | |
| NODE N | | | | 1 (35) | | | |
| NODE O | | | 1 (30) | | | | |
| NODE R | | 1 (20) | | | | | |
| NODE U | | 1 (30) | | | | | |
| LOAD VOLUME LIMIT | 60 | 90 | 90 | 60 | 100 | 120 | 90 |

EP 4 435 684 A1

# FIG. 23

```
# EXTRACT ONLY NODE WITH VEHICLE SPECIFICATION TO CREATE MAPPING LIST, INCREMENT FROM 0
cost_list_idx_2_av_dict_key
# MAXIMUM VALUE OF VEHICLE ID OF SPECIFIED VEHICLE + 1 (NUMBER OF VEHICLES THAT IS USED IN ASSIGNMENT)
max_vehicle_num
INF = 10000 # DEFINITION OF INF

cost = [] # COST TABLE SHOWN IN FIG. 21
for i in range(len(cost_list_idx_2_av_dict_key)):
    available_vehicle_list = data.vehicle_assighment.available_vehicle[cost_list_idx_2_av_dict_key[i]]
    cost_row = [INF] * max_vehicle_num # EACH ROW IS INITIALIZED AS INF
    for j in range(len(available_vehicle_list)): # ADD DEMAND TO CELLS LINKED TO VEHICLES IN EACH ROW
        vehicle_idx = available_vehicle_list[j]
        cost_row[index] = data.demands[cost_list_idx_2_av_dict_key[vehicle_idx]]
    cost.append(cost_row)
vc = data.vehicle_capacities # DEFINE LOAD VOLUME LIMIT OF EACH VEHICLE

prob = pulp.LpProblem("assignment")
index_size = len(cost), row_size = len(cost[0]) # DEFINITION OF SIZE OF MATRIX
xs = [] # BINARY MATRIX OF EACH CELL (CONSTRAINT CONDITIONS OF FORMULA 4)
for i in range(index_size):
    xs1 = [pulp.LpVariable("x_{}_{}".format(i, j), cat="Binary") for j in range(row_size)]
    xs.append(xs1)
ob = 0
for j in range(row_size):
    # DEFINITION OF OBJECTIVE FUNCTION (OBJECTIVE FUNCTION OF FORMULA 1)
    ob += pulp.lpSum([cost[i][j] * xs[i][j] for i in range(index_size)])
prob += ob # ADD FUNCTION OF pulp

for i in range(index_size):
    prob += pulp.lpSum(xs[i]) == 1 # VEHICLE IS ALWAYS ONE (CONSTRAINT CONDITIONS OF FORMULA 3)

for j in range(row_size): # LOAD VOLUME LIMIT (CONSTRAINT CONDITIONS OF FORMULA 2)
    prob += (pulp.lpSum([cost[i][j] * xs[i][j] for i in range(index_size)]) <= vc[j])
status = prob.solve() # EXECUTE (OPTIMAL SOLUTION IS UNNECESSARY. OBTAIN ONLY STATUS REGARDING WHETHER ASSIGNMENT IS DONE)
if status != 1:
    ERROR OUTPUT # ERROR IS DETECTED WHEN ASSIGNMENT IS IMPOSSIBLE
```

# FIG. 24

DEPOT VEHICLE INFORMATION

NODE NAME

MAXIMUM NUMBER OF VISITED NODES  VEHICLE

2 NODES

a — A

b — B

c — C

d — D

e — E

f — F

MAXIMUM NUMBER OF NODES WILL BE EXCEEDED WHEN VEHICLE IS ASSIGNED

| SMALL | LARGE |
|---|---|

b

< B

C

D

2 NODES / VEHICLE < 3 NODES

※ SIMPLE EXAMPLE IS DESCRIBED

VEHICLES c AND d ARE CONFIRMED AT E AND F, VEHICLE a IS ALSO CONFIRMED, THE REST IS CONFIRMED BY VEHICLE b WITH COLLISION

EP 4 435 684 A1

# FIG. 25

| | VEHICLE a | VEHICLE b | VEHICLE c | VEHICLE d | VEHICLE e | VEHICLE f | VEHICLE g |
|---|---|---|---|---|---|---|---|
| NODE A | INF | INF | INF | 1 | 1 | 1 | INF |
| NODE D | 1 | 1 | 1 | INF | INF | INF | INF |
| NODE K | INF | INF | 1 | 1 | 1 | 1 | INF |
| NODE L | INF | INF | INF | INF | 1 | 1 | 1 |
| NODE M | INF | INF | INF | INF | 1 | 1 | 1 |
| NODE N | INF | INF | INF | 1 | 1 | 1 | INF |
| NODE O | INF | INF | 1 | 1 | 1 | INF | INF |
| NODE R | INF | 1 | 1 | 1 | INF | INF | INF |
| NODE U | 1 | 1 | 1 | 1 | INF | INF | INF |
| LIMIT OF NUMBER OF NODES | 3 | 5 | 6 | 9 | 3 | 5 | 2 |

EP 4 435 684 A1

# FIG. 26

```
# EXTRACT ONLY NODE WITH VEHICLE SPECIFICATION TO CREATE MAPPING LIST, INCREMENT FROM 0
cost_list_idx_2_av_dict_key
# MAXIMUM VALUE OF VEHICLE ID OF SPECIFIED VEHICLE + 1 (NUMBER OF VEHICLES THAT IS USED IN ASSIGNMENT)
max_vehicle_num
INF = 10000  # DEFINITION OF INF

cost = []  # COST TABLE SHOWN IN FIG. 25
for i in range(len(cost_list_idx_2_av_dict_key)):
    available_vehicle_list = data.vehicle_assighment.available_vehicle[cost_list_idx_2_av_dict_key[i]]
    cost_row = [INF] * max_vehicle_num  # EACH ROW IS INITIALIZED AS INF
    for j in range(len(available_vehicle_list)):  # ADD DEMAND TO CELLS LINKED TO VEHICLES IN EACH ROW
        vehicle_idx = available_vehicle_list[j]
        cost_row[index] = 1  # CELL IN WHICH VEHICLE MAY BE ASSIGNED IS SET TO COST 1
    cost.append(cost_row)
vc = data.vehicle_capacities  # DEFINE MAXIMUM NUMBER OF NODES VISITED BY EACH VEHICLE

prob = pulp.LpProblem("assignment")
index_size = len(cost), row_size = len(cost[0])  # DEFINITION OF SIZE OF MATRIX
xs = []  # BINARY MATRIX OF EACH CELL (CONSTRAINT CONDITIONS OF FORMULA 4)
for i in range(index_size):
    xs1 = [pulp.LpVariable("x_{}_{}".format(i, j), cat="Binary") for j in range(row_size)]
    xs.append(xs1)
ob = 0
for j in range(row_size):
    # DEFINITION OF OBJECTIVE FUNCTION (OBJECTIVE FUNCTION OF FORMULA 1)
    ob += pulp.lpSum([cost[i][j] * xs[i][j] for i in range(index_size)])
prob += ob  # ADD FUNCTION OF pulp

for i in range(index_size):
    prob += pulp.lpSum(xs[i]) == 1  # VEHICLE IS ALWAYS ONE (CONSTRAINT CONDITIONS OF FORMULA 3)

for j in range(row_size):  # LOAD VOLUME LIMIT (CONSTRAINT CONDITIONS OF FORMULA 2)
    prob += (pulp.lpSum([cost[i][j] * xs[i][j] for i in range(index_size)]) <= vc[j])
status = prob.solve()  # EXECUTE (OPTIMAL SOLUTION IS UNNECESSARY. OBTAIN ONLY STATUS REGARDING WHETHER ASSIGNMENT IS DONE)
if status != 1:
    ERROR OUTPUT  # ERROR IS DETECTED WHEN ASSIGNMENT IS IMPOSSIBLE
```

EP 4 435 684 A1

# FIG. 27

| DEPOT VEHICLE INFORMATION | | NODE NAME | LOAD | ROUTE | |
|---|---|---|---|---|---|
| LOADING VOLUME | VEHICLE | | | FIXED ROUTE α | VEHICLES LINKED to α |

**DEPOT VEHICLE INFORMATION**
- 150 PCS — vehicle a
- 200 PCS — vehicle b
- 250 PCS — vehicles c, d, e, f

**NODE NAME / LOAD**
- A — 50
- B — 50
- C — 50
- D — 25
- E — 50
- F — 50

**ROUTE — FIXED ROUTE α**
CE → A → B → D → E → CE
TOTAL:175

**VEHICLES LINKED to α**
- a — 150 PCS
- b — 200 PCS
- c, d — 250 PCS

(1) ACTUALLY, FIXED ROUTE α IS ONLY ASSIGNED TO VEHICLE a, SINCE NODE A IS ONLY ASSIGNED TO VEHICLE a

(2) IT IS POSSIBLE WITH OTHER VEHICLES, BUT IT IS IMPOSSIBLE BECAUSE NODE IS ONLY ASSIGNED TO VEHICLE a DUE TO CONSTRAINT OF NODE A

EP 4 435 684 A1

# FIG. 28

```
self.available_vehicle_const_route_prefix = data.vehicle_assignment.available_vehicle_route.prefix.copy()
#  CANCELLATION OF CONTRADICTION WITH VEHICLE SPECIFICATION OF NODE, AND SAVE VEHICLE THAT CAN BE ASSIGNED WITH ROUTE ID AS key IN self.available_vehicle_const_route_prefix
self.available_vehicle_const_route_prefix = self._remove_vehicle_assignment_inconsistency_const_route_prefix()

#  CANCELLATION OF CONTRADICTION WITH LOAD VOLUME LIMIT, SAVE VEHICLE THAT CAN BE ASSIGNED WITH ROUTE ID AS key IN self.available_vehicle_const_route_prefix
self.available_vehicle_const_route_prefix = self._remove_vehicle_capacities_inconsistency_const_route_prefix()
for route_idx in self.available_vehicle_const_route_prefix:
    if len(self.available_vehicle_const_route_prefix[route_idx]) == 0:
        ERROR OUTPUT

self.available_vehicle_const_route_all = data.vehicle_assignment.available_vehicle_route.all.copy()
#  CANCELLATION OF CONTRADICTION WITH VEHICLE SPECIFICATION OF NODE, AND SAVE VEHICLE THAT CAN BE ASSIGNED WITH ROUTE ID AS key IN self.available_vehicle_const_route_all
self.available_vehicle_const_route_all = self._remove_vehicle_assignment_inconsistency_const_route_all()

#  CANCELLATION OF CONTRADICTION WITH LOAD VOLUME LIMIT, SAVE VEHICLE THAT CAN BE ASSIGNED WITH ROUTE ID AS key IN self.available_vehicle_const_route_all
self.available_vehicle_const_route_all = self._remove_vehicle_capacities_inconsistency_const_route_all()
for route_idx in self.available_vehicle_const_route_all:
    if len(self.available_vehicle_const_route_all[route_idx]) == 0:
        ERROR OUTPUT
```

100
101
102
103
104
105

# FIG. 29

DEPOT VEHICLE INFORMATION    NODE NAME

MAXIMUM NUMBER OF VISITED NODES    VEHICLE

| 3 NODES | a |
| 4 NODES | b |
| 5 NODES | c |
| | d |
| | e |
| | f |

Node names: A, B, C, D, E, F

ROUTE

FIXED ROUTE $\alpha$    VEHICLES LINKED to $\alpha$

(1) ACTUALLY, FIXED ROUTE $\alpha$ IS ONLY ASSIGNED TO VEHICLE a, SINCE NODE A IS ONLY ASSIGNED TO VEHICLE a

CE
A — a — 3 NODES
B — b — 4 NODES
D — c — 5 NODES
E — d
CE

(2) IT IS POSSIBLE WITH OTHER VEHICLES, BUT IT IS IMPOSSIBLE BECAUSE NODE IS ONLY ASSIGNED TO VEHICLE a DUE TO CONSTRAINT OF NODE A

TOTAL: 4 NODES

EP 4 435 684 A1

# FIG. 30

```
self.available_vehicle_const_route_prefix = data.vehicle_assignment.available_vehicle_route.prefix.copy()
# CANCELLATION OF CONTRADICTION WITH VEHICLE SPECIFICATION OF NODE, AND SAVE VEHICLE THAT CAN BE ASSIGNED WITH ROUTE ID AS key IN self.available_vehicle_const_route_prefix
self.available_vehicle_const_route_prefix = self._remove_vehicle_assignment_inconsistency_const_route_prefix()

# CANCELLATION OF CONTRADICTION WITH MAXIMUM NUMBER OF VISITED NODES
# SAVE VEHICLE THAT CAN BE ASSIGNED WITH ROUTE ID AS key IN self.available_vehicle_const_route_prefix
self.available_vehicle_const_route_prefix = self._remove_max_num_visits_inconsistency_const_route_prefix()

for route_idx in self.available_vehicle_const_route_prefix:
    if len(self.available_vehicle_const_route_prefix[route_idx]) == 0:
        ERROR OUTPUT

self.available_vehicle_const_route_all = data.vehicle_assignment.available_vehicle_route.all.copy()
# CANCELLATION OF CONTRADICTION WITH VEHICLE SPECIFICATION OF NODE, AND SAVE VEHICLE THAT CAN BE ASSIGNED WITH ROUTE ID AS key IN self.available_vehicle_const_route_all
self.available_vehicle_const_route_all = self._remove_vehicle_assignment_inconsistency_const_route_all()

# CANCELLATION OF CONTRADICTION WITH MAXIMUM NUMBER OF VISITED NODES
# SAVE VEHICLE THAT CAN BE ASSIGNED WITH ROUTE ID AS key IN self.available_vehicle_const_route_all
self.available_vehicle_const_route_all = self._remove_max_num_visits_inconsistency_const_route_all()
for route_idx in self.available_vehicle_const_route_all:
    if len(self.available_vehicle_const_route_all[route_idx]) == 0:
        ERROR OUTPUT
```

110

111

112

113

114

115

EP 4 435 684 A1

# FIG. 31

VEHICLE INFORMATION

| VEHICLE | MAXIMUM DELIVERY TIME |
|---|---|
| a | 4 HOURS |
| b | 8 HOURS |

DEPARTURE TIME FRAME
11:00〜11:30

NODE INFORMATION

| NAME | AVAILABLE DEPARTURE TIME FRAME |
|---|---|
| A | 12:00〜12:30 |
| B | 13:00〜14:00 |
| C | 13:00〜14:00 |
| D | 12:00〜14:00 |
| E | 13:30〜15:00 |
| F | 12:00〜14:00 |

ROUTE

FIXED ROUTE α — VEHICLES LINKED to α

| Time | Node |
|---|---|
| 11:30 | CE |
| 12:00 | A |
| 12:45 | B |
| 14:00 | D |
| 15:00 | E |
| 16:00 | CE |

TOTAL: 4.5 HOURS

Vehicles a, b

(3) VEHICLE SATISFYING DEPARTURE TIME FRAME CANNOT BE ASSIGNED, BECAUSE IT CANNOT GO ANY LATER THAN THIS

(2) WHETHER OR NOT AVAILABLE DEPARTURE TIME FRAME AT EACH NODE IS SATISFIED IN CONSIDERATION OF AVAILABLE DEPARTURE TIME FROM DEPOT (BOTH ALL FIXED DEPOT DEPARTURE TIME AND AUTOMATIC CONTROL ARE AVAILABLE)

(1) ONLY VEHICLE SATISFYING MAXIMUM DELIVERY TIME IS SELECTED

# FIG. 32

EP 4 435 684 A1

# FIG. 33

WHEN TIME FRAME IS NO LONGER SATISFIED, THERE IS A POINT WHERE UPPER LIMIT VALUE AND LOWER LIMIT VALUE ARE REPLACE. WHEN THIS IS DETECTED, ASSIGNMENT TO VEHICLE IS NOT POSSIBLE

# FIG. 34

```
self.start_time = self._set_start_time_range()  # DEPARTURE TIME

max_delivery_time = self._set_max_delivery_time()  # LATEST ARRIVAL TIME (CALCULATE ARRIVAL TIME TO CENTRE)

self.available_vehicle_const_route_prefix = data.vehicle_assignment.available_vehicle_route.prefix.copy()
# CANCELLATION OF CONTRADICTION WITH TIME SYSTEM, AND SAVE VEHICLE THAT CAN BE ASSIGNED WITH ROUTE ID AS key IN self.available_vehicle_const_route_prefix
self.available_vehicle_const_route_prefix = self._remove_time_range_inconsistency_const_route_prefix()
for route_idx in self.available_vehicle_const_route_prefix:
    if len(self.available_vehicle_const_route_prefix[route_idx]) == 0:
        ERROR OUTPUT

self.available_vehicle_const_route_all = data.vehicle_assignment.available_vehicle_route.all.copy()
# CANCELLATION OF CONTRADICTION WITH TIME SYSTEM, AND SAVE VEHICLE THAT CAN BE ASSIGNED WITH ROUTE ID AS key IN self.available_vehicle_const_route_all
self.available_vehicle_const_route_all = self._remove_time_range_inconsistency_const_route_all()
for route_idx in self.available_vehicle_const_route_all:
    if len(self.available_vehicle_const_route_all[route_idx]) == 0:
        ERROR OUTPUT
```

130
131
132
133

# FIG. 35

```
for route_idx in data.routing_order.const_route.all:
    # RETURN DEPOT IS INCLUDED IN CASE OF all. (RETURN IS NOT INCLUDED IN CASE OF prefix*)
    route = [data.depot_index] + data.routing_order.const_route.all[route_idx] + [data.depot_index]
    temp_vehicle_list = []
    # WHETHER CURRENT route_idx IS INCLUDED IN VEHICLE SPECIFICATION IN RECEIVED VEHICLE SPECIFICATION LIST
    if route_idx in self.available_vehicle_const_route_prefix:
        temp_vehicle_list = self.check_all[route_idx].copy() # Y: COPY AS IT IS
    else: # N: CREATE VEHICLE SPECIFICATION LIST IN WHICH ALL VEHICLES CAN BE USED
        for vehicle_idx in range(self.num_vehicles):
            temp_vehicle_list.append(vehicle_idx)
    vehicle_list = []
    # CREATE AND CHECK TIME FRAMES OF (1) DEPARTURE TIME, (2) ARRIVAL TIME AND (3) NODE ON ROUTE OF DEPOT FOR VEHICLE
    for vehicle_idx in temp_vehicle_list:
        available_time_list = [] # SAVE TIME FRAME INCLUDING DEPARTURE DEPOT AND RETURN DEPOT
        for idx in range(len(route)):
            node_idx = route[idx]
            if idx == 0:
                # (1) TIME FRAME OF DEPARTURE TIME (OBTAINED BY self._set_start_time_range())
                available_time_list.append(self.start_time[vehicle_idx])
                continue
            # (2) TIME FRAME IS SPECIFIED IF POSSIBLE IN CASE OF NODE ON ROUTE
            if node_idx in data.time_windows.available_time and node_idx != data.depot_index:
                available_time_list.append(data.time_windows.available_time[node_idx])
            else: # SUBSTITUTE LATEST ARRIVAL TIME FOR (2) NODE ON ROUTE WITHOUT SETTING OF TIME FRAME OR (3) RETURN DEPOT
                available_time_list.append([0, self.max_delivery_time[vehicle_idx]])

        # CHECK WHETHER CREATED ROUTE IS VALID IN CURRENT VEHICLE
        if self._const_route_check(route, available_time_list):
            vehicle_list.append(vehicle_idx)
        self.check_all[route_idx] = vehicle_list.copy()

return self.check_all
```

# FIG. 36

```python
def _const_route_check(self, route, available_time_list) -> bool:

    lb_list = [0] * len(route)
    ub_list = [0] * len(route)

    lb_list[0] = available_time_list[0][0]
    ub_list[0] = available_time_list[0][1]
    for idx in range(1, len(route), 1):
        time_distance = self.time_matrix[route[idx - 1]][route[idx]]
        lb_list[idx] = lb_list[idx - 1] + time_distance
        ub_list[idx] = ub_list[idx - 1] + time_distance

        lb_diff = max(available_time_list[idx][0] - lb_list[idx], 0)
        ub_diff = max(ub_list[idx] - available_time_list[idx][1], 0)

        lb_list[idx] = lb_list[idx] + lb_diff
        ub_list[idx] = ub_list[idx] - ub_diff
        if lb_list[idx] > ub_list[idx]:
            return False
        for i in range(idx):
            lb_list[i] = lb_list[i] + lb_diff
            ub_list[i] = ub_list[i] - ub_diff
            if lb_list[i] > ub_list[i]:
                return False
    return True
```

# FIG. 37

| DEPOT VEHICLE INFORMATION | | | VEHICLE/NODE CORRESPONDENCE | NODE NAME | DELIVERY CONDITIONS |
|---|---|---|---|---|---|
| VEHICLE HEIGHT | LOADING VOLUME | VEHICLE | | | FIRST/LAST |

| 3m (LOW VEHICLE HEIGHT) | 200 PCS | | | A | FIRST |
| | | | | B | FIRST |
| | | | | C | |
| | | | | D | LAST |
| | | | | E | |
| | | | | F | |

SINCE THERE ARE A TOTAL OF 3 SPECIFICATIONS FOR 2 VEHICLES, ASSIGNMENT IS IMPOSSIBLE AND OPTIMIZATION CANNOT BE PERFORMED

EP 4 435 684 A1

FIG. 38

| | VEHICLE a | VEHICLE b | VEHICLE c | VEHICLE d | VEHICLE e | VEHICLE f | VEHICLE g |
|---|---|---|---|---|---|---|---|
| NODE A (FIRST) | INF | INF | INF | 3 | 2 | 1 | INF |
| NODE B (LAST) | 2 | 4 | 6 | INF | INF | INF | INF |
| NODE C (FIRST) | INF | INF | 4 | 3 | 2 | 1 | INF |
| NODE D (FIRST) | INF | INF | INF | INF | 3 | 2 | 1 |
| NODE E (FIRST) | INF | INF | INF | INF | 3 | 2 | 1 |
| NODE F (LAST) | INF | INF | INF | 2 | 4 | 6 | INF |

EP 4 435 684 A1

# FIG. 39

| | VEHICLE a | VEHICLE b | VEHICLE c | VEHICLE d | VEHICLE e | VEHICLE f | VEHICLE g |
|---|---|---|---|---|---|---|---|
| NODE A (FIRST) | | | | | 1 | | |
| NODE B (LAST) | 1 | | | | | | |
| NODE C (FIRST) | | | 1 | | | | |
| NODE D (FIRST) | | | | | | | 1 |
| NODE E (FIRST) | | | | | | 1 | |
| NODE F (LAST) | | | | 1 | | | |

# FIG. 40

```
for node_idx in range(data.num_nodes):
    if node_idx in data.vehicle_assignment.available_vehicle:
        if node_idx in data.node_after_depot: inverse_flag.append(True)
        if node_idx in node_before_depot: inverse_flag.append(False)
        cost_list_idx_2_av_dict_key.append(node_idx) # MAPPING
```
— 140

```
vehicle_num # MAXIMUM VALUE OF VEHICLE ID ASSIGNED TO SPECIFIED NODE BY cost_list_idx_2_av_dict_key
vehicle_num += 1 # +1 TO SET TO NUMBER OF VEHICLES USED IN TABLE

# NUMBER OF VEHICLES IS INCREASED TO MAKE IT HORIZONTAL
vehicle_num = max(len(cost_list_idx_2_av_dict_key), max_vehicle_num)


cost = [], INF = 1000000
for i in range(len(cost_list_idx_2_av_dict_key)):
    available_vehicle_list = self.available_vehicle[cost_list_idx_2_av_dict_key[i]]
    cost_row = [INF] * max_vehicle_num # INITIALIZATION BY INF
    if inverse_flag[i] is True: # VALUE IS PUT IN ONE SPACE SUCH THAT VALUES ARE ARRANGE IN DESCENDING ORDER FOR FIRST VISITED NODE
        for j in range(len(available_vehicle_list)):
            index = available_vehicle_list[len(available_vehicle_list) - j - 1]
            cost_row[index] = (j + 1)
    else: # VALUE IS PUT IN TWO SPACES SUCH THAT VALUES ARE ARRANGE IN ASCENDING ORDER FOR LAST VISITED NODE
        for j in range(len(available_vehicle_list)):
            index = available_vehicle_list[j]
            cost_row[index] = 2 * (j + 1)
    cost.append(cost_row)
```
} 141

```
np_cost = np.array(cost) # IT IS NECESSARY TO SET TO numpy SEQUENCE IN ORDER TO USE scipy
row_ind, col_ind = linear_sum_assignment(np_cost) # scipy hungary METHOD IS APPLIED
```
— 142

```
if INF < np_cost[row_ind, col_ind].sum(): # ERROR IS DETECTED WHEN FINAL OBJECTIVE FUNCTION VALUE EXCESSES INF
    ERROR OUTPUT
```

EP 4 435 684 A1

# FIG. 41

**VEHICLE INFORMATION**

| MAXIMUM NUMBER OF VISITED NODES | LOAD LIMIT | MAXIMUM DELIVERY TIME | VEHICLE |
|---|---|---|---|
| 4 NODES | 200 PCS | 4 HOURS | a |
| 6 NODES | | 8 HOURS | b |
| 4 NODES | 100 PCS | 8 HOURS | c |
| | 200 PCS | 8 HOURS | d |

DEPARTURE TIME FRAME
11:00～11:30

(5) WHETHER VEHICLE SATISFYING LOAD LIMIT CAN BE ASSIGNED

(6) WHETHER VEHICLE SATISFYING MAXIMUM NUMBER OF VISITED NODES CAN BE ASSIGNED

**NODE INFORMATION**

| NAME | AVAILABLE DEPARTURE TIME FRAME |
|---|---|
| A | 12:00～12:30 |
| B | 12:00～14:00 |
| C | 13:00～14:00 |
| FIRST D | 12:00～14:00 |
| LAST E | 13:30～15:00 |

(1) WHETHER AVAILABLE DEPARTURE TIME FRAME CAN BE SATISFIED AT FIRST VISITED NODE

(2) WHETHER MAXIMUM DELIVERY TIME AND AVAILABLE DEPARTURE TIME FRAME CAN BE SATISFIED AT LAST VISITED NODE

**ROUTE**

| FIXED ROUTE α | VEHICLES LINKED to α |
|---|---|
| | |

(4) WHETHER ROUTE CAN BE CREATED WITHOUT CONFLICT WITH ASSIGNMENT OF NODE TO VEHICLE

A — a

B — b

D

E

(3) WHETHER ROUTE CAN BE CREATED WITHOUT TIME CONFLICT

EP 4 435 684 A1

# FIG. 42

```
self.start_time = self._set_start_time_range() # DEPARTURE TIME (ROUTE SPECIFICATION THAT CAUSES TIME SYSTEM CONTRADICTION)
max_delivery_time = self._set_max_delivery_time() # LATEST ARRIVAL TIME (CALCULATE ARRIVAL TIME TO CENTRE) (ROUTE SPECIFICATION THAT CAUSES TIME SYSTEM CONTRADICTION)

self.available_vehicle = data.vehicle_assignment.available_vehicle.copy() # LIST OF VEHICLE ASSIGNMENT TO NODE
self.available_vehicle_const_route_prefix = data.vehicle_assignment.available_vehicle_route.prefix.copy() # LIST OF VEHICLES TO WHICH FORWARD-MATCHING FIXED ROUTE CAN BE ASSIGNED
self.available_vehicle_const_route_all = data.vehicle_assignment.available_vehicle_route.all.copy() # LIST OF VEHICLES TO WHICH ALL FIXED ROUTE CAN BE ASSIGNED

self.available_vehicle = self._remove_time_inconsistency_node_after_depot() # EXCLUDE VEHICLE THAT CANNOT BE ASSIGNED FOR SPECIFICATION OF FIRST VISITED NODE
self.available_vehicle = self._remove_time_inconsistency_node_before_depot() # EXCLUDE VEHICLE THAT CANNOT BE ASSIGNED FOR SPECIFICATION OF LAST VISITED NODE

# ROUTE SPECIFICATION THAT CAUSES TIME SYSTEM CONTRADICTION (PART FIXED ROUTE AND ALL FIXED ROUTE)
self.available_vehicle_const_route_prefix = self._remove_time_range_inconsistency_const_route_prefix()
self.available_vehicle_const_route_all = self._remove_time_range_inconsistency_const_route_all()

# CANCELLATION OF CONTRADICTION WITH VEHICLE SPECIFICATION OF NODE (PART FIXED ROUTE AND ALL FIXED ROUTE)
self.available_vehicle_const_route_prefix = self._remove_vehicle_assignment_inconsistency_const_route_prefix()
self.available_vehicle_const_route_all = self._remove_vehicle_assignment_inconsistency_const_route_all()

# CANCELLATION OF CONTRADICTION WITH LOAD VOLUME LIMIT (PART FIXED ROUTE AND ALL FIXED ROUTE)
self.available_vehicle_const_route_prefix = self._remove_vehicle_capacities_inconsistency_const_route_prefix()
self.available_vehicle_const_route_all = self._remove_vehicle_capacities_inconsistency_const_route_all()

# CANCELLATION OF CONTRADICTION WITH MAXIMUM NUMBER OF VISITED NODES (PART FIXED ROUTE AND ALL FIXED ROUTE)
self.available_vehicle_const_route_prefix = self._remove_max_num_visits_inconsistency_const_route_prefix()
self.available_vehicle_const_route_all = self._remove_max_num_visits_inconsistency_const_route_all()

for route_idx in self.available_vehicle_const_route_prefix:
    if len(self.available_vehicle_const_route_prefix[route_idx]) == 0:  ERROR OUTPUT

for route_idx in self.available_vehicle_const_route_all:
    if len(self.available_vehicle_const_route_all[route_idx]) == 0:  ERROR OUTPUT

self._map_cost_matrix() # MAPPING TO COST MATRIX
self._create_cost_matrix() # DEFINITION OF COST MATRIX
ok = self._execute() # CALCULATION
if ok == False:
    ERROR OUTPUT
```

150
151
152
153
154
155
156
157
158
159

EP 4 435 684 A1

# FIG. 43

```
available_vehicle = {}
for idx in range(len(data.routing_order.node_after_depot)):
    node_idx = data.routing_order. node_after_depot[idx], time_distance = data.edge.time[data.depot_index][node_idx]
    vehicle_list = [] # LIST OF AVAILABLE VEHICLE ASSIGNMENT
    if node_idx in data.time_windows.available_time: # WHETHER ASSIGNMENT IS POSSIBLE IN VEHICLE SPECIFIED ONLY WHEN THERE IS TIME FRAME IN SPECIFICATION OF FIRST VISITED NODE IS CHECKED
        fastest_available_time, latest_available_time = data.time_windows.available_time[node_idx][0], data.time_windows.available_time[node_idx][1]
        if node_idx in data.vehicle_assignment.available_vehicle: # WHETHER OR NOT INDIVIDUAL ASSIGNED VEHICLE CAN ARRIVE IN TIME IS CHECKED WHEN THERE IS VEHICLE ASSIGNMENT
            for vehicle_idx in data.vehicle_assignment.available_vehicle[node_idx]:
                fastest_departure_time, latest_departure_time = self.start_time[vehicle_idx][0], self.start_time[vehicle_idx][1] # SAVE EARLIEST DEPARTURE TIME AND LATEST DEPARTURE TIME
                if (fastest_departure_time + time_distance > latest_available_time
                    # WHEN EARLIEST DEPARTURE OR LATEST DEPARTURE DEVIATES FROM AVAILABLE DEPARTURE TIME FRAME SPECIFIED AT FIRST VISITED NODE, VEHICLE CANNOT BE INCLUDED IN LIST OF AVAILABLE VEHICLE ASSIGNMENT
                    or latest_departure_time + time_distance < fastest_available_time):
                    continue
                else:
                    vehicle_list.append(vehicle_idx)
        else: #. WHETHER OR NOT ALL VEHICLES CAN ARRIVE IN TIME IS CHECKED WHEN THERE IS NO VEHICLE ASSIGNMENT
            for vehicle_idx in range(data.num_vehicles):
                fastest_departure_time, latest_departure_time = self.start_time[vehicle_idx][0], self.start_time[vehicle_idx][1]
                if (fastest_departure_time +d time_distance > latest_available_time
                    # WHEN EARLIEST DEPARTURE OR LATEST DEPARTURE DEVIATES FROM AVAILABLE DEPARTURE TIME FRAME SPECIFIED AT FIRST VISITED NODE, VEHICLE CANNOT BE INCLUDED IN LIST OF AVAILABLE VEHICLE ASSIGNMENT
                    or latest_departure_time + time_distance < fastest_available_time):
                    continue
                else:
                    vehicle_list.append(vehicle_idx)
    else: # WHEN THERE IS NO TIME FRAME IN SPECIFICATION OF FIRST VISITED NODE
        if node_idx in data.vehicle_assignment.available_vehicle: # ALL OF SPECIFIED VEHICLES ARE INCLUDED WHEN THERE IS VEHICLE SPECIFICATION
            vehicle_list = data.vehicle_assignment.available_vehicle[node_idx].copy()
        else: # ALL VEHICLES ARE ADDED WHEN THERE IS NO VEHICLE SPECIFICATION
            for vehicle_idx in range(data.num_vehicles):
                vehicle_list.append(vehicle_idx)
    available_vehicle[node_idx] = vehicle_list.copy()
return available_vehicle
```

# FIG. 44

```
available_vehicle = {}
for idx in range(len(data.routing_order.node_before_depot)):
    node_idx = data.routing_order.node_before_depot[idx]
    time_distance = data.edge.time.matrix[node_idx][self.depot_index]
    vehicle_list = []  # LIST OF AVAILABLE VEHICLE ASSIGNMENT
    if node_idx in data.time_windows.available_time:  # WHETHER ASSIGNMENT IS POSSIBLE IN VEHICLE SPECIFIED ONLY WHEN THERE IS TIME FRAME IN SPECIFICATION OF LAST VISITED NODE IS CHECKED
        fastest_departure_time = data.time_windows.available_time[node_idx][0]
        if node_idx in data.vehicle_assignment.available_vehicle:  # WHETHER OR NOT INDIVIDUAL ASSIGNED VEHICLE CAN ARRIVE IN TIME IS CHECKED WHEN THERE IS VEHICLE ASSIGNMENT
            for vehicle_idx in data.vehicle_assignment.available_vehicle[node_idx]:
                latest_arrival_time = self.max_delivery_time[vehicle_idx]  # LATEST ARRIVAL TIME BASED ON VEHICLE
                if fastest_departure_time + time_distance > latest_arrival_time:  # WHEN LATEST ARRIVAL TIME IS EXCESSED, VEHICLE CANNOT BE INCLUDED IN LIST OF AVAILABLE VEHICLE ASSIGNMENT
                    continue
                else:
                    vehicle_list.append(vehicle_idx)
        else:  # WHETHER OR NOT ALL VEHICLES CAN ARRIVE IN TIME IS CHECKED WHEN THERE IS NO VEHICLE ASSIGNMENT
            for vehicle_idx in range(self.num_vehicles):
                latest_arrival_time = self.max_delivery_time[vehicle_idx]
                if fastest_departure_time + time_distance > latest_arrival_time:
                    continue
                else:
                    vehicle_list.append(vehicle_idx)
    else:  # WHEN THERE IS NO TIME FRAME IN SPECIFICATION OF LAST VISITED NODE
        temp_vehicle_list = []
        if node_idx in data.vehicle_assignment.available_vehicle:  # ALL OF SPECIFIED VEHICLES ARE INCLUDED WHEN THERE IS VEHICLE SPECIFICATION
            temp_vehicle_list = self.available_vehicle[node_idx].copy()
        else:  # ALL VEHICLES ARE ADDED WHEN THERE IS NO VEHICLE SPECIFICATION
            for vehicle_idx in range(self.num_vehicles):
                temp_vehicle_list.append(vehicle_idx)
    available_vehicle[node_idx] = vehicle_list.copy()
return available_vehicle
```

EP 4 435 684 A1

# FIG. 45

| | VEHICLE a | VEHICLE b | VEHICLE c | VEHICLE d | VEHICLE e | VEHICLE f | VEHICLE g |
|---|---|---|---|---|---|---|---|
| NODE A (FIRST) | INF | INF | INF | 3 | 2 | 1 | INF |
| NODE B (LAST) | 2 | 4 | 6 | INF | INF | INF | INF |
| NODE C (FIRST) | INF | INF | 4 | 3 | 2 | 1 | INF |
| NODE D (FIRST) | INF | INF | INF | INF | 3 | 2 | 1 |
| NODE E (FIRST) | INF | INF | INF | INF | 3 | 2 | 1 |
| NODE F (LAST) | INF | INF | INF | 2 | 4 | 6 | INF |
| FIXED ROUTE A | INF | 14 | 14 | INF | 14 | INF | INF |
| FIXED ROUTE B | INF | INF | 14 | 14 | 14 | 14 | 14 |
| FORWARD-MATCHING FIXED ROUTE A | INF | INF | 14 | 14 | 14 | 14 | INF |
| FORWARD-MATCHING FIXED ROUTE B | 14 | 14 | 14 | 14 | INF | INF | INF |

EP 4 435 684 A1

FIG. 46

```python
def _create_cost_matrix(self) -> None:
    self.cost = [] , self.COST_INF = 10000000
    for i in range(self.cost_matrix_row_size):
        available_vehicle_list = self.candidate_vehicle[i]
        cost_row = [self.COST_INF] * self.cost_matrix_col_size # INITIALIZE ALL BY INF
        if self.inverse_flag[i] == 1: # SET IN DESCENDING ORDER WHEN INVERSION FLAG IS 1
            for j in range(len(available_vehicle_list)):
                index = available_vehicle_list[len(available_vehicle_list) - j - 1]
                cost_row[index] = (j + 1)
        elif self.inverse_flag[i] == -1: # SET IN ASCENDING ORDER WHEN INVERSION FLAG IS -1
            for j in range(len(available_vehicle_list)):
                index = available_vehicle_list[j]
                cost_row[index] = 2 * (j + 1)
        else: # SET TO FIXED VALUE WHEN INVERSION FLAG IS 0
            for j in range(len(available_vehicle_list)):
                index = available_vehicle_list[j]
                # SET TO VALUE TWICE NUMBER OF VEHICLES
                cost_row[index] = self.cost_weight[i] * self.cost_matrix_col_size * 2
    self.cost.append(cost_row)
```

# FIG. 47

```
def _execute(self) -> bool:
    if len(self.cost) > 0:  # CALCULATE WHEN COST MATRIX HAS BEEN DEFINED
        np_cost = np.array(self.cost)
        row_ind, col_ind = linear_sum_assignment(np_cost)  ————————————— 160

        # ERROR IS DETECTED SINCE THERE IS NO FEASIBLE SOLUTION WHEN COST MATRIX EXCESSES INF
        if self.COST_INF < np_cost[row_ind, col_ind].sum():
            return False

        assigned_vehicle_list = col_ind.tolist()

        # ENCODE VEHICLES ASSIGNED FROM MAPPING TABLE ONE BY ONE
        for idx in range(len(assigned_vehicle_list)):
            vehicle_idx = assigned_vehicle_list[idx]
            if idx in self.mapping_node_after_depot:
                node_idx = self.mapping_node_after_depot[idx]
                self.output_available_vehicle[node_idx] = vehicle_idx
            elif idx in self.mapping_node_before_depot:
                node_idx = self.mapping_node_before_depot[idx]
                self.output_available_vehicle[node_idx] = vehicle_idx
            elif idx in self.mapping_const_route_prefix:
                route_idx = self.mapping_const_route_prefix[idx]
                self.output_available_vehicle_route["prefix"][route_idx] = [vehicle_idx]
            elif idx in self.mapping_const_route_all:
                route_idx = self.mapping_const_route_all[idx]
                self.output_available_vehicle_route["all"][route_idx] = [vehicle_idx]
        return True
```

161

EP 4 435 684 A1

FIG. 48

EP 4 435 684 A1

# FIG. 49

LAST VISITED NODE

DEPOT

# FIG. 50

# FIG. 51

ROUTE CREATED
(VEHICLE ASSIGNED)

FIRST VISITED NODE

DEPOT

# FIG. 52

FIRST VISITED NODE

DEPOT

# FIG. 53

```
self.start_time = self._set_start_time_range()  # DEPARTURE TIME (ROUTE SPECIFICATION THAT CAUSES TIME SYSTEM CONTRADICTION)
max_delivery_time = self._set_max_delivery_time()  # LATEST ARRIVAL TIME (CALCULATE ARRIVAL TIME TO CENTRE) (ROUTE SPECIFICATION THAT CAUSES TIME SYSTEM CONTRADICTION)

self.available_vehicle = data.vehicle_assignment.available_vehicle.copy()  # LIST OF VEHICLE ASSIGNMENT TO NODE
self.available_vehicle_const_route_prefix = data.vehicle_assignment.available_vehicle_route.prefix.copy()  # LIST OF VEHICLES TO WHICH FORWARD-MATCHING FIXED ROUTE CAN BE ASSIGNED
self.available_vehicle_const_route_all = data.vehicle_assignment.available_vehicle_route.all.copy()  # LIST OF VEHICLES TO WHICH ALL FIXED ROUTE CAN BE ASSIGNED

self.available_vehicle = self._remove_time_inconsistency_node_after_depot()  # EXCLUDE VEHICLE THAT CANNOT BE ASSIGNED FOR SPECIFICATION OF FIRST VISITED NODE
self.available_vehicle = self._remove_time_inconsistency_node_before_depot()  # EXCLUDE VEHICLE THAT CANNOT BE ASSIGNED FOR SPECIFICATION OF LAST VISITED NODE

# ROUTE SPECIFICATION THAT CAUSES TIME SYSTEM CONTRADICTION (PART FIXED ROUTE AND ALL FIXED ROUTE)
self.available_vehicle_const_route_prefix = self._remove_time_range_inconsistency_const_route_prefix()
self.available_vehicle_const_route_all = self._remove_time_range_inconsistency_const_route_all()

# CANCELLATION OF CONTRADICTION WITH VEHICLE SPECIFICATION OF NODE (PART FIXED ROUTE AND ALL FIXED ROUTE)
self.available_vehicle_const_route_prefix = self._remove_vehicle_assignment_inconsistency_const_route_prefix()
self.available_vehicle_const_route_all = self._remove_vehicle_assignment_inconsistency_const_route_all()

# CANCELLATION OF CONTRADICTION WITH LOAD VOLUME LIMIT (PART FIXED ROUTE AND ALL FIXED ROUTE)
self.available_vehicle_const_route_prefix = self._remove_vehicle_capacities_inconsistency_const_route_prefix()
self.available_vehicle_const_route_all = self._remove_vehicle_capacities_inconsistency_const_route_all()

# CANCELLATION OF CONTRADICTION WITH MAXIMUM NUMBER OF VISITED NODES (PART FIXED ROUTE AND ALL FIXED ROUTE)
self.available_vehicle_const_route_prefix = self._remove_max_num_visits_inconsistency_const_route_prefix()
self.available_vehicle_const_route_all = self._remove_max_num_visits_inconsistency_const_route_all()

self._map_cost_matrix()  # MAPPING TO COST MATRIX
self._create_cost_matrix()  # DEFINITION OF COST MATRIX
ok = self._execute()  # CALCULATION
```

170
171
172
173
174
175
176
177

# FIG. 54

```python
def _execute(self) -> bool:
    if len(self.cost) > 0:  # CALCULATE WHEN COST MATRIX HAS BEEN DEFINED
        np_cost = np.array(self.cost)
        row_ind, col_ind = linear_sum_assignment(np_cost)                    ———— 180

        # ERROR IS DETECTED SINCE THERE IS NO FEASIBLE SOLUTION WHEN COST MATRIX EXCESSES INF
        if self.COST_INF < np_cost[row_ind, col_ind].sum():
            return False

        assigned_vehicle_list = col_ind.tolist()

        # ENCODE VEHICLES ASSIGNED FROM MAPPING TABLE ONE BY ONE
        for idx in range(len(assigned_vehicle_list)):
            vehicle_idx = assigned_vehicle_list[idx]
            if idx in self.mapping_node_after_depot:
                node_idx = self.mapping_node_after_depot[idx]
                self.output_available_vehicle[node_idx] = vehicle_idx        ———— 181
            elif idx in self.mapping_node_before_depot:
                node_idx = self.mapping_node_before_depot[idx]
                self.output_available_vehicle[node_idx] = vehicle_idx        ———— 182
            elif idx in self.mapping_const_route_prefix:
                route_idx = self.mapping_const_route_prefix[idx]
                self.output_available_vehicle_route["prefix"][route_idx] = [vehicle_idx]   ———— 183
            elif idx in self.mapping_const_route_all:
                route_idx = self.mapping_const_route_all[idx]
                self.output_available_vehicle_route["all"][route_idx] = [vehicle_idx]       ———— 184
    return True
```

EP 4 435 684 A1

| INTERNATIONAL SEARCH REPORT | International application No. |
|---|---|
| | **PCT/JP2022/032283** |

**A. CLASSIFICATION OF SUBJECT MATTER**

*G06Q 10/04*(2012.01)i; *G06Q 10/08*(2012.01)i

FI: G06Q10/04 310; G06Q10/08 300

According to International Patent Classification (IPC) or to both national classification and IPC

**B. FIELDS SEARCHED**

Minimum documentation searched (classification system followed by classification symbols)

G06Q10/04; G06Q10/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-012488 A (HITACHI-GE NUCLEAR ENERGY, LTD.) 24 January 2019 (2019-01-24) paragraphs [0002], [0013], [0049], [0050], claim 4, fig. 1 | 1, 14-15 |
| A | | 2-13 |
| Y | JP 2004-001975 A (HITACHI, LTD.) 08 January 2004 (2004-01-08) paragraphs [0012], [0068] | 1, 14-15 |
| Y | JP 1998-055349 A (FUJITSU LTD.) 24 February 1998 (1998-02-24) paragraphs [0032], [0033], claims 7, 13, 19, 21-22 | 1, 14-15 |
| A | JP 2005-209025 A (ADVANCED TELECOMMUNICATIONS RESEARCH INSTITUTE INTERNATIONAL) 04 August 2005 (2005-08-04) entire text, all drawings | 1-15 |
| A | WO 2005/071609 A1 (METALOGIC, INC.) 04 August 2005 (2005-08-04) entire text, all drawings | 1-15 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 October 2022** | **01 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

78

**INTERNATIONAL SEARCH REPORT**
Information on patent family members

International application No.

**PCT/JP2022/032283**

| Patent document cited in search report | | | Publication date (day/month/year) | Patent family member(s) | Publication date (day/month/year) |
|---|---|---|---|---|---|
| JP | 2019-012488 | A | 24 January 2019 | (Family: none) | |
| JP | 2004-001975 | A | 08 January 2004 | (Family: none) | |
| JP | 1998-055349 | A | 24 February 1998 | US 5897629 A<br>column 5, line 27 to column 5,<br>line 49, claims 5, 11, 17, 19-20 | |
| JP | 2005-209025 | A | 04 August 2005 | (Family: none) | |
| WO | 2005/071609 | A1 | 04 August 2005 | US 2007/0010901 A1<br>entire text, all drawings<br>EP 1710736 A1<br>CN 1910601 A | |

Form PCT/ISA/210 (patent family annex) (January 2015)

**EP 4 435 684 A1**

**Patent documents cited in the description**

- JP 2020056730 A